Europäisches Patentamt

European Patent Office

Office européen des brevets

(19)

(11) Publication number: **0 051 960**
A1

(12) **EUROPEAN PATENT APPLICATION**

(21) Application number: 81305108.3

(51) Int. Cl.³: **G 06 F 3/04, H 04 L 11/16**

(22) Date of filing: 28.10.81

(30) Priority: 10.11.80 US 205822

(43) Date of publication of application: 19.05.82 Bulletin 82/20

(84) Designated Contracting States: DE FR GB IT

(71) Applicant: XEROX CORPORATION, Xerox Square - 020, Rochester New York 14644 (US)

(72) Inventor: Lam, Kai Yiu, 22732 Date Avenue, Torrance California 90505 (US)
Inventor: Mager, George Edward, 1841 Harper Avenue, Hermosa Beach California (US)

(74) Representative: Weatherald, Keith Baynes et al, European Patent Attorney Rank Xerox Patent Department 338 Euston Road, London NW1 3BH (GB)

(54) **A shared line transmitter.**

(57) A shared line transmitter is operative to accept as a message one or more bytes of data in parallel from an input-output channel for predetermined buffering and phase encoding for transmission to a shared line except upon receipt of signal indicating that another transmitter is attempting to gain access to the shared line. It includes an output buffer operative to receive the message from the input-output channel and hold it for a predetermined period; a memory operative to receive the message from the output buffer and hold it for a predetermined period for subsequent transmission in serial form; a phase encoder operative to receive the data in serial form for conversion to a predetermined phase-encoded form for outputting to the shared line, and means for aborting the conversion upon receipt of a message-collision signal for transmitting a signal onto the shared line to abort all concurrent message transmissions, and backoff logic operative to receive the abort signal from the phase encoder to generate a random number representing the period that must elapse before the next transmission.

EP 0 051 960 A1

## A shared line transmitter

This invention relates generally to distributed computerized controllers of machine process in a host machine and particularly to Input - Output channel controllers interfacing with a shared line.

In the past, controllers for a machine were either relatively very centralized as to function or decentralized as to a hardwired master controller and assorted hardwired slave controllers. The problem in the first case is that relatively many control cables must be run over relatively long distances thereby causing spatial dislocations and noise inducements. The decentralized case has many of the problems of the centralized case but relatively to a lesser degree. In addition, the limited programmability in either the centralized or decentralized cases limits the architectural flexibility as to functions.

A shared line transmitter module operative to accept as a message one or more bytes of data in parallel from an input - output channel for predetermined buffering and phase encoding to a shared line except upon receipt of signal indicating that a collision of messages was detected on the shared line.

Various other objects, advantages and features of the invention will become more fully apparent from the following specifications, appended claims and accompanying drawings, in which:

Figure 1 is a block diagram of the shared line transmitter module of the shared communication controller;

Figure 2 is a block diagram of the shared line receiver module of the shared communication controller;

Figure 3 is a block diagram of the shared communication controller system for which the shared line receiver of Fig. 2 and the shared line transmitter of Fig. 1 are macros thereof;

Figure 4 is a timing diagram for phase encoding, where an 'up' transition represents a logic one and a 'down' transition represents a logic zero, for the shared line receiver module of Fig. 2 and the shared line transmitter module of Fig. 1;

Figure 5 is a timing diagram for the absence of a signal followed by a single start bit indicates the start of a message for the shared line for the shared line receiver module of Fig. 2 and the shared line transmitter module of Fig. 1;

Figure 6 is a timing diagram for a phase - encoded message decoded by use of a sample clock which samples the line eight times per bit cell for the shared line for the shared line receiver module of Fig. 2, and the shared line transmitter module of Fig. 1;

Fig. 7 is an overview functional flow diagram for the shared line receiver module of Fig. 2;

Figure 8 is a table demonstrating that each byte transferred from the input buffer to the FIFO buffer is accompanied by a tag identifying its nature for the shared line receiver module of Fig. 2;

Figure 9 is an overview functional flow diagram for the shared line transmitter module of Fig. 1;

Figure 10 is a table demonstrating that each byte transferred from the FIFO buffer to the output buffer is accompanied by a tag identifying its nature for the shared line transmitter of Fig. 1;

Figure 11 is a table demonstrating that the message packet starts with the eight - bit address of the shared line receiver module of Fig. 2 to which it is to be transmitted, and next is the address of the shared line receiver module associated with the shared line transmitter module of Fig. 1 for transmitting the message;

Figure 12 is a table containing the four bit commands affecting the shared line receiver module of Fig. 2 and the shared line transmitter module of Fig. 1;

Figure 13 is a table showing the status of the shared line receiver module of Fig. 2 and the shared line transmitter of Fig. 1 at the termination of an IO operation is reported to the IOCR or IOCT on four status lines;

Figure 14 is a table showing the settings of the control flags that determine whether the shared line receiver module of Fig. 2 and the shared line transmitter module of Fig. 1 stay on or are turned off at the end of a single non - chained CCB or at the termination of a chain;

Figure 15 is a table showing an example that enables the hardware backoff algorithm for the shared line transmitter module of Fig. 1;

Figure 16 is a table showing an example of a simple message transmission of a four byte message with the interrupt flag set for the shared line transmitter module of Fig. 1;

Figure 17 is a table showing an example of a simple message receiver using the interrupt feature, where the software knows the maximum size, but not the specific message size for the shared line receiver module of Fig. 2;

Figure 18 is a table showing an example of a message transmit using the chaining and interrupt feature for the shared line transmitter module of Fig. 2;

Figure 19 is a table showing an example of creating a simple ring buffer to receive incoming messages in a contiguous area of memory for the shared line receiver module of Fig. 2;

Figure 20 is a table showing an example of a message transmit using the TRANSMIT MESSAGE AND TRANSMIT SEGMENTED MESSAGE commands for the shared line module of Fig. 1;

Figure 21, is a table showing an example analogous to Fig. 20 but using auto - chaining for the shard line transmitter module of Fig. 1;

**0051960**

Figure 22 is a table showing an example using the WRITE FIFO AND READ FIFO commands to move sixteen bytes of data for the shared line receiver of Fig. 2 and the shared line transmitter of Fig. 1;

Figure 23A is a block diagram of the SLT Control logic for the shared line transmitter module of Fig. 1;

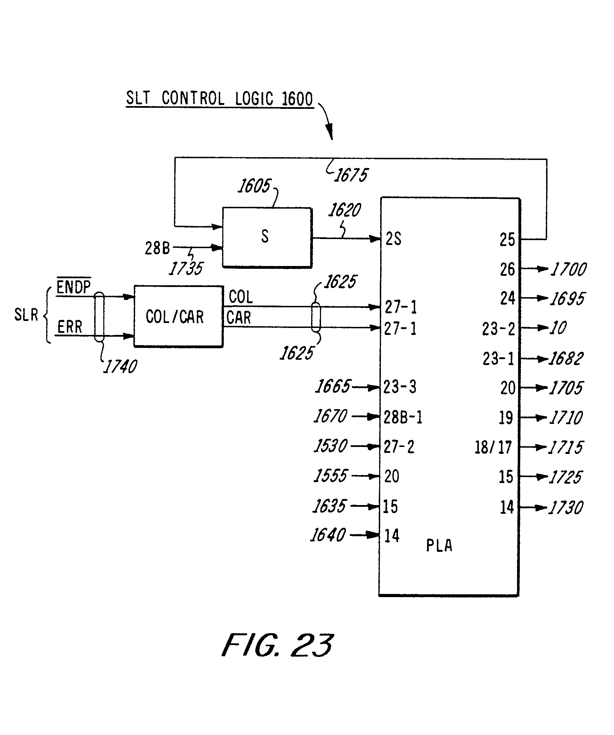

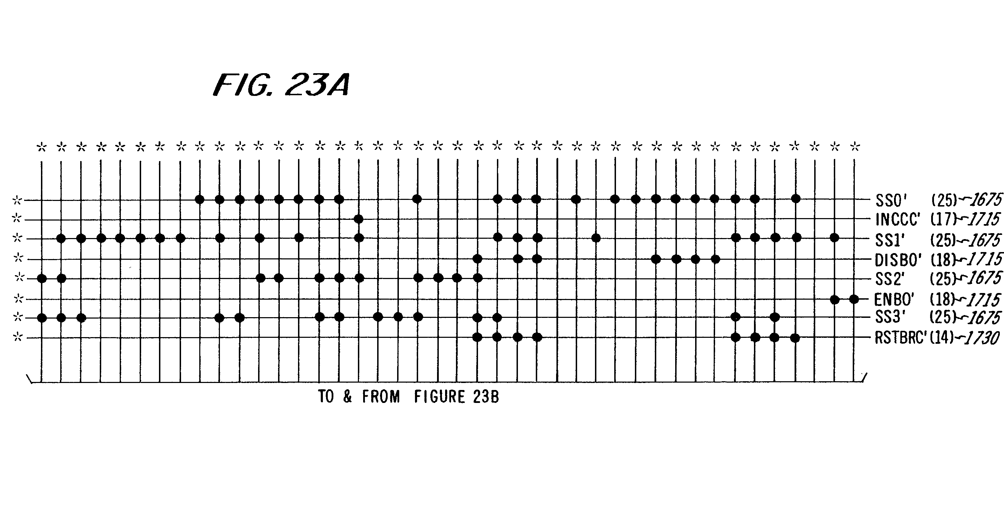

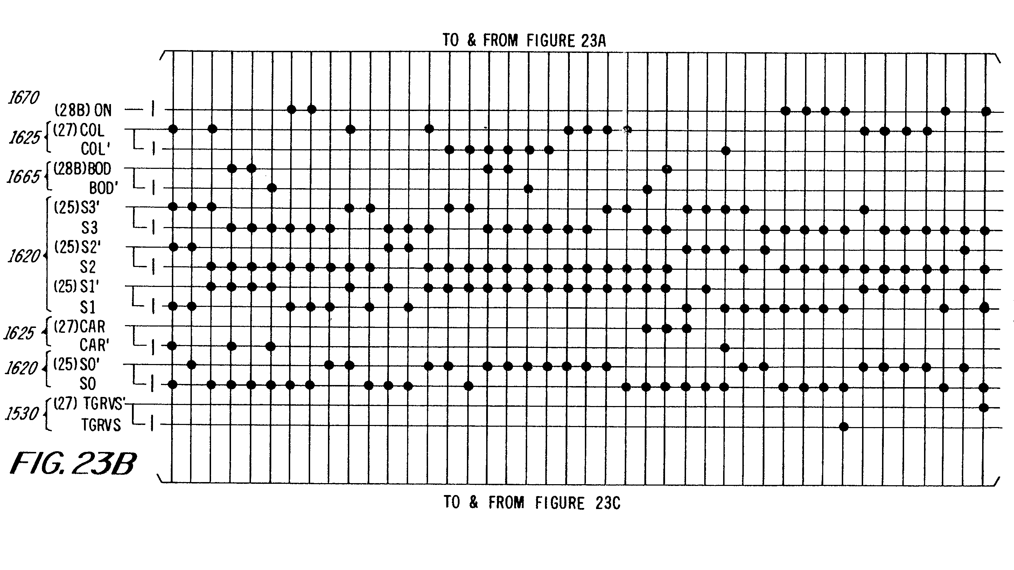

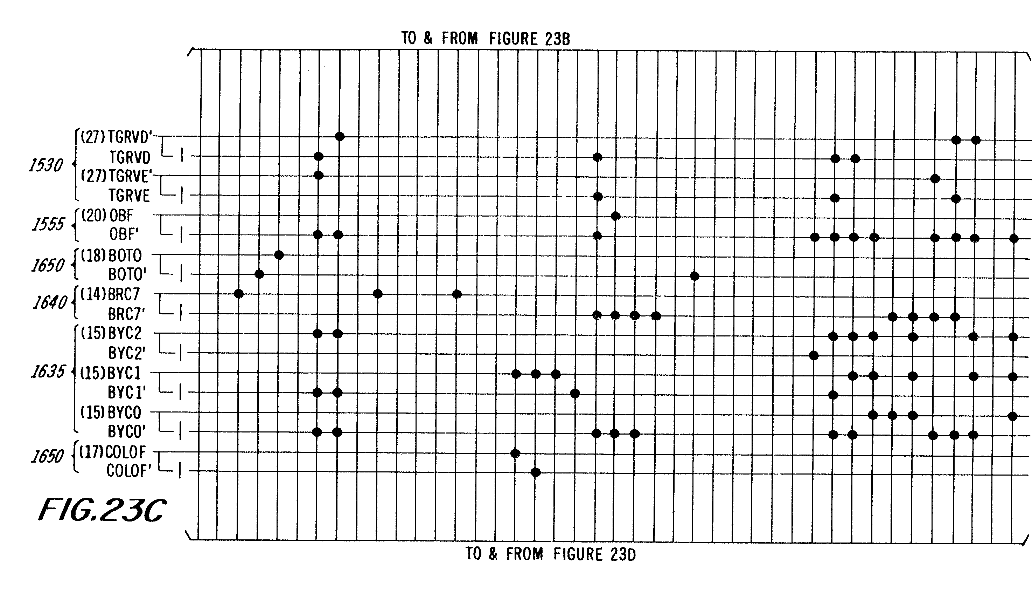

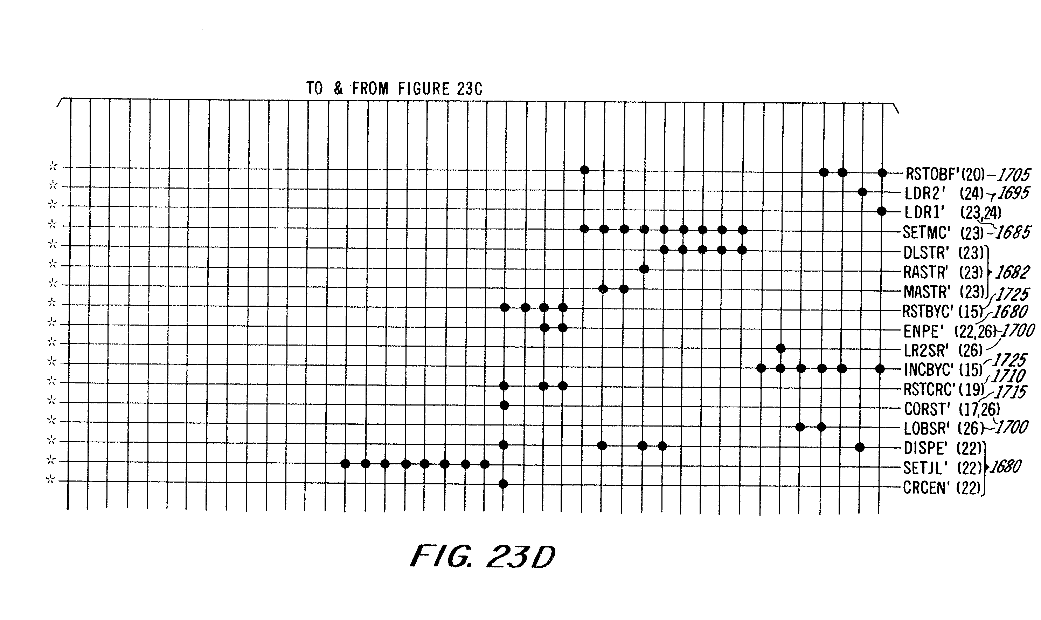

Figure 23 is a schematic view of the PLASLT of the SLT control logic of Fig. 23A'

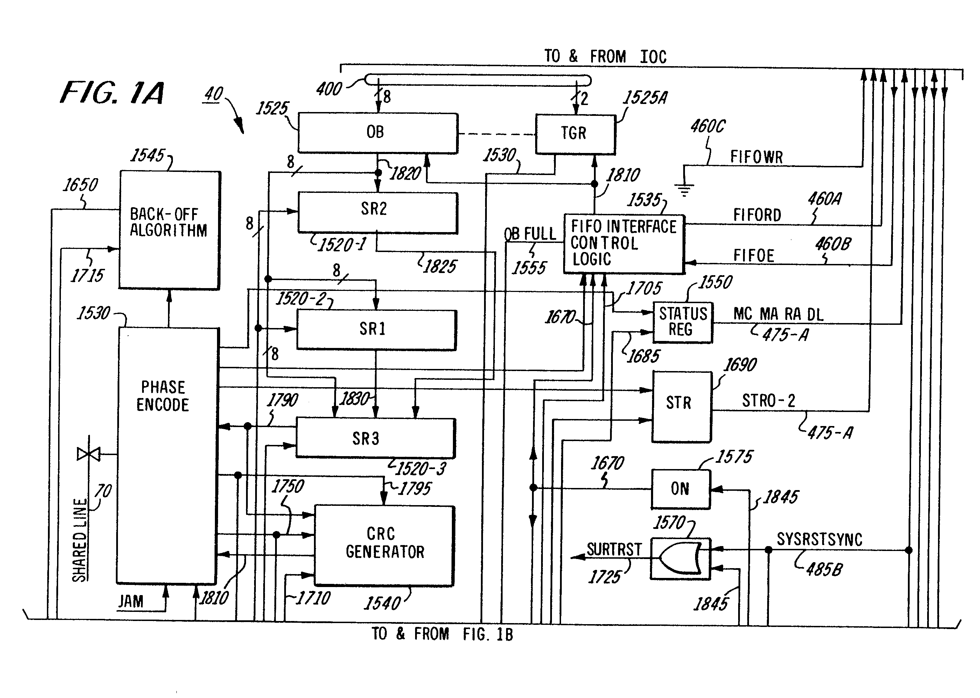

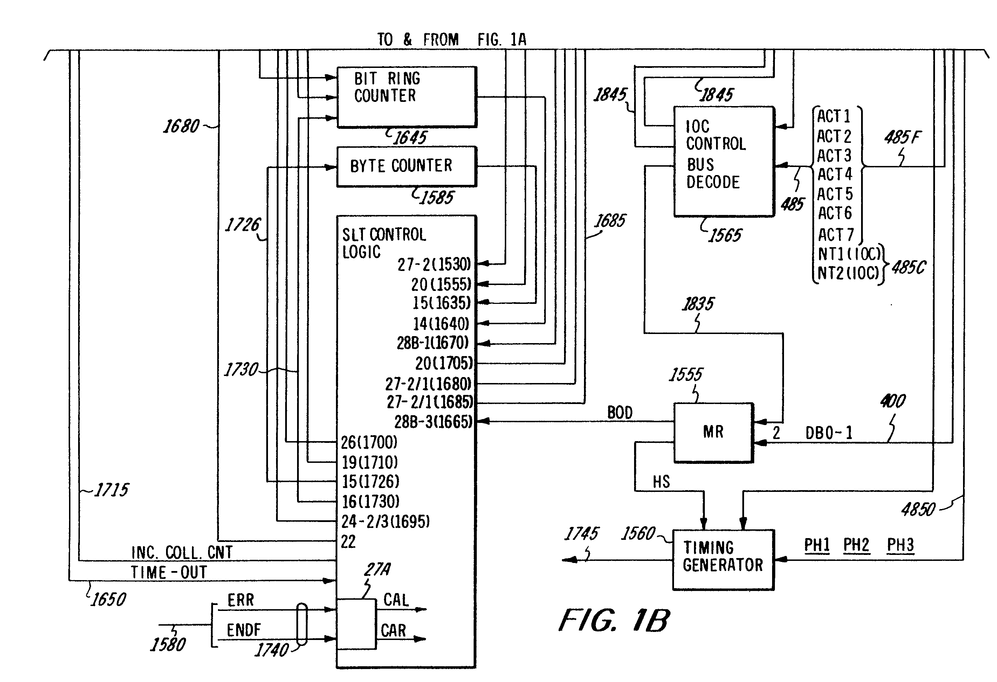

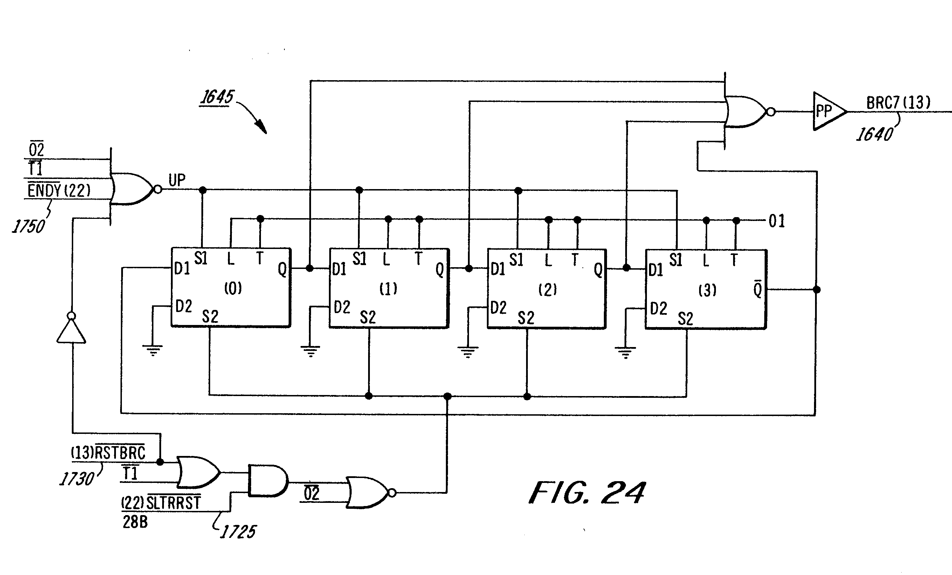

Figure 24 is a schematic view of the bit ring counter for the shared line transmitter module of Fig. 1;

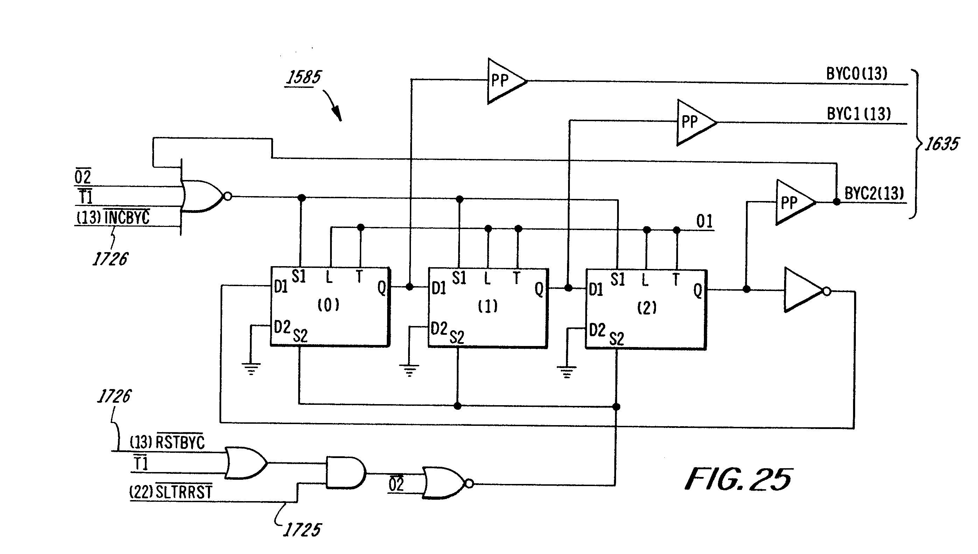

Figure 25 is a schematic view of the byte counter for the shared line transmitter module of Fig. 1

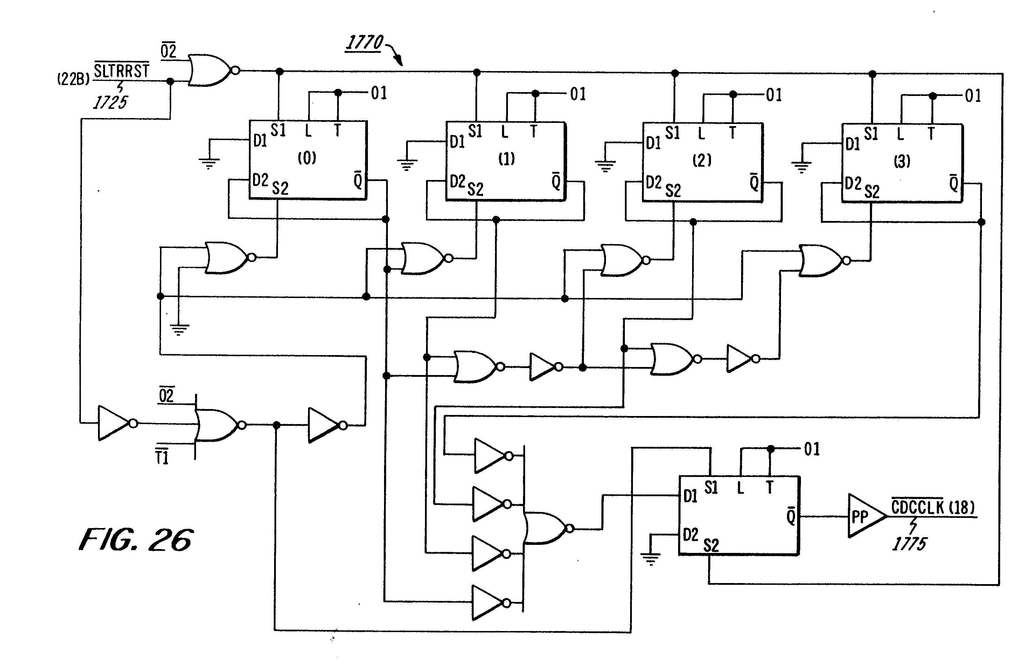

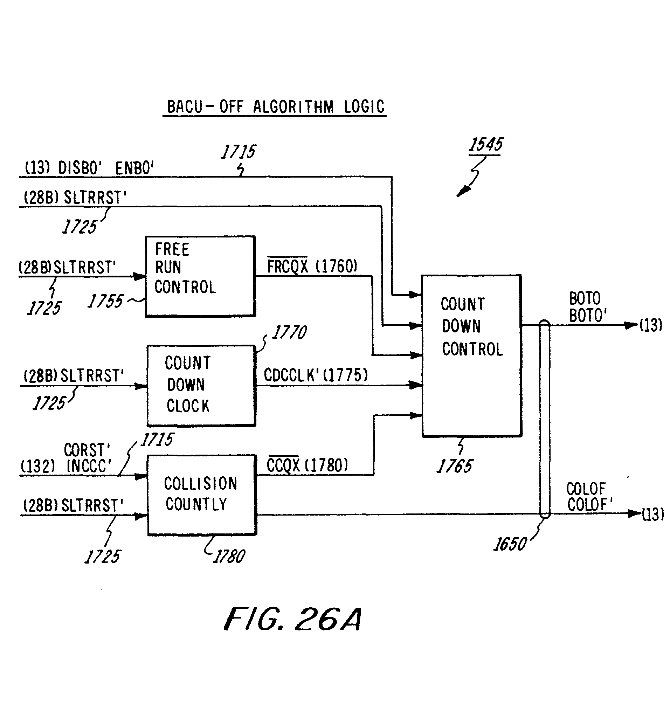

Figure 26A is a block diagram for the back - off algorithm logic for the shared line transmitter module of Fig. 1;

Figure 26 is a schematic view of the COUNT DOWN CLOCK for the back - off algorithm logic of Fig. 26A;'

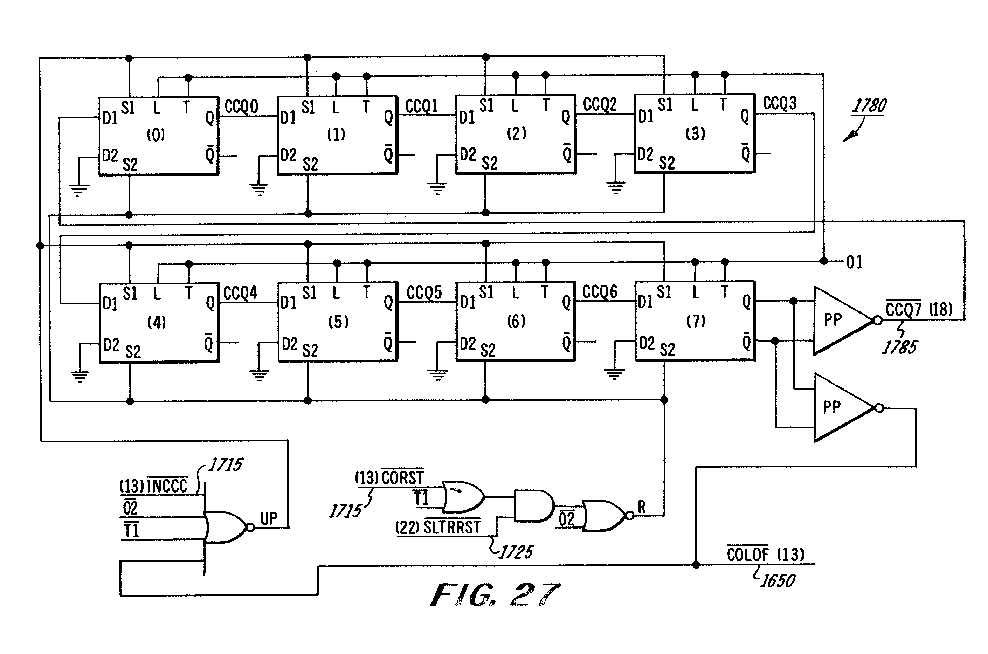

Figure 27 is a schematic view of the COLLISION COUNTER for the back - off algorithm logic of Fig. 26A;

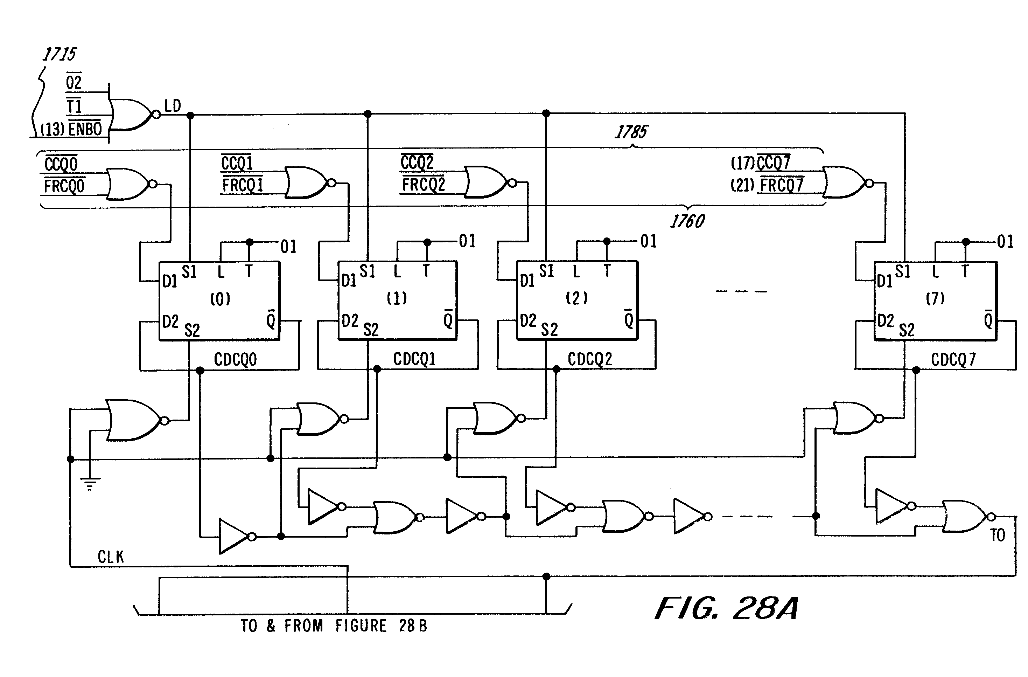

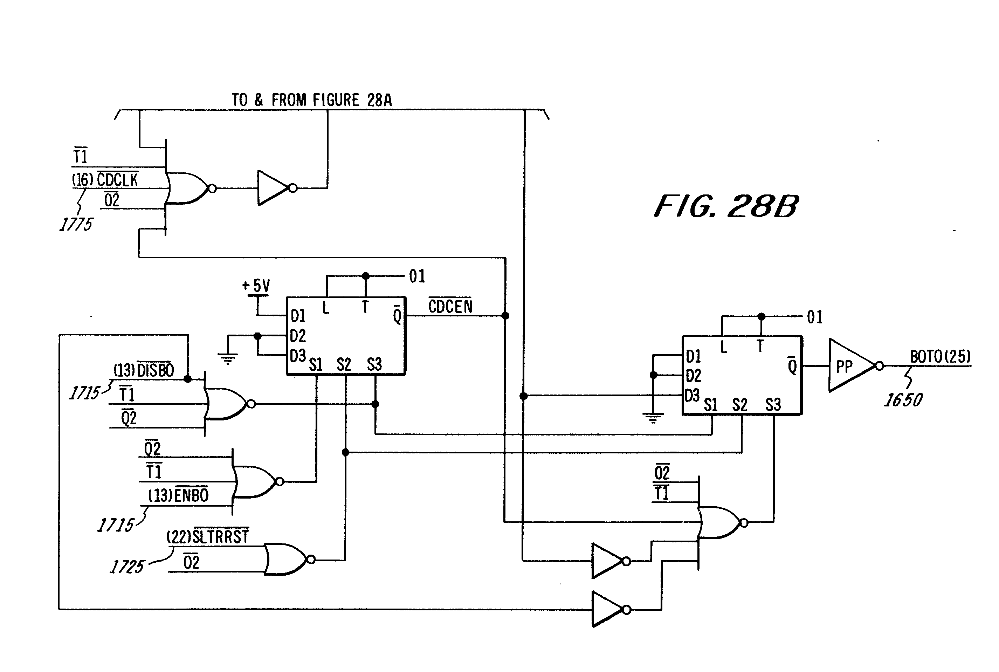

Figure 28 is a schematic view of the COUNT DOWN COUNTER for the back - off algorithm logic of Fig. 26A;

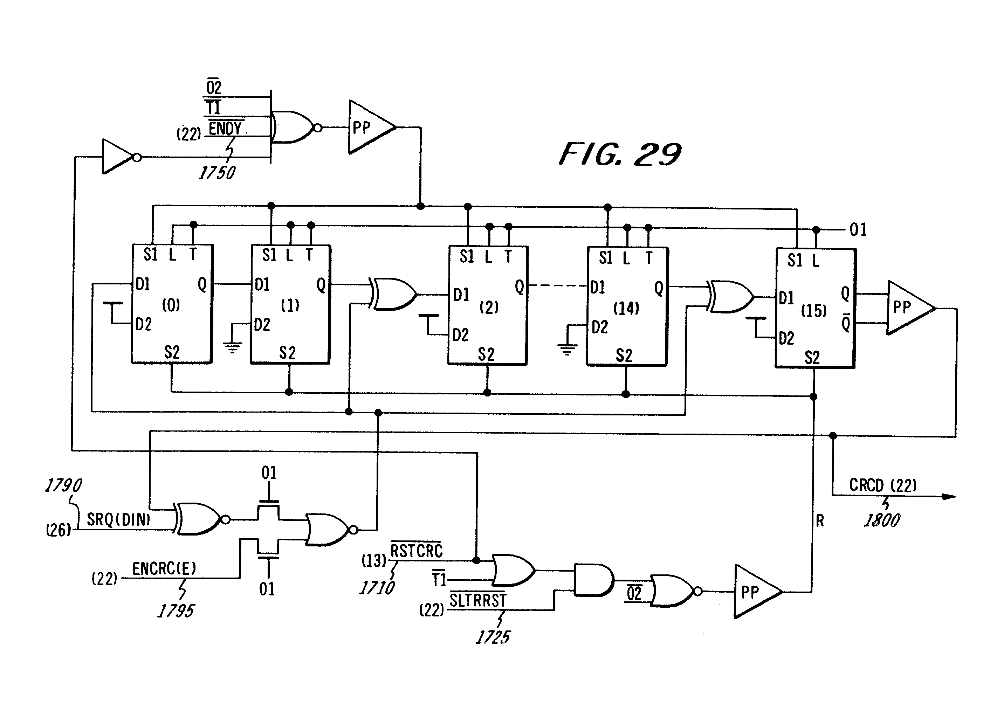

Figure 29 is a schematic view of the CRC generator for the shared line transmitter module of Fig. 1;

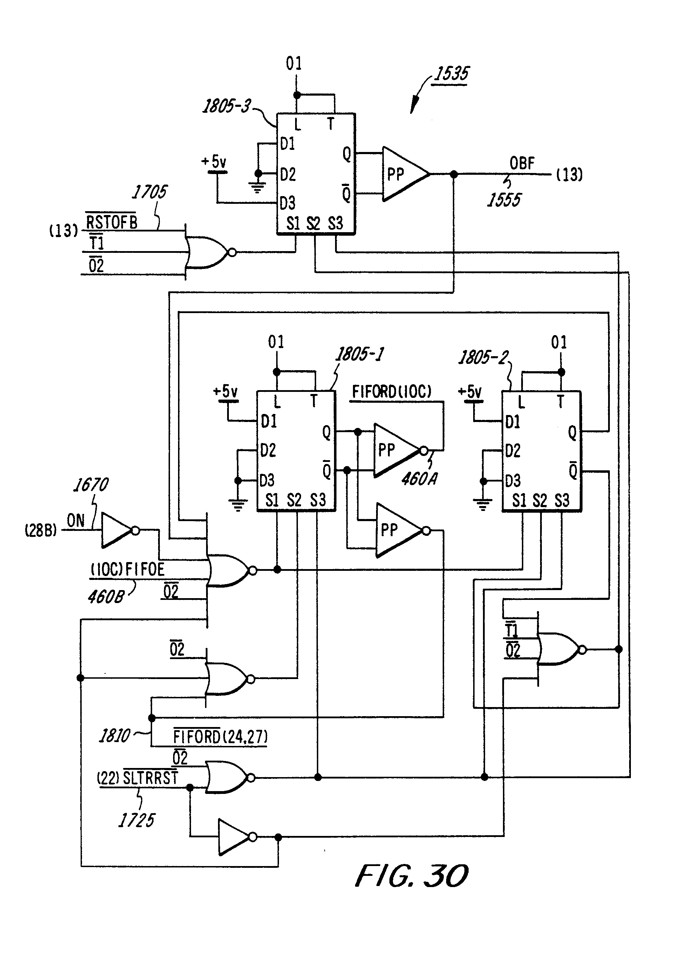

Figure 30 is a schematic view of the FIFO Interface Cotnrol for the shared lien transmitter module of Fig. 1;

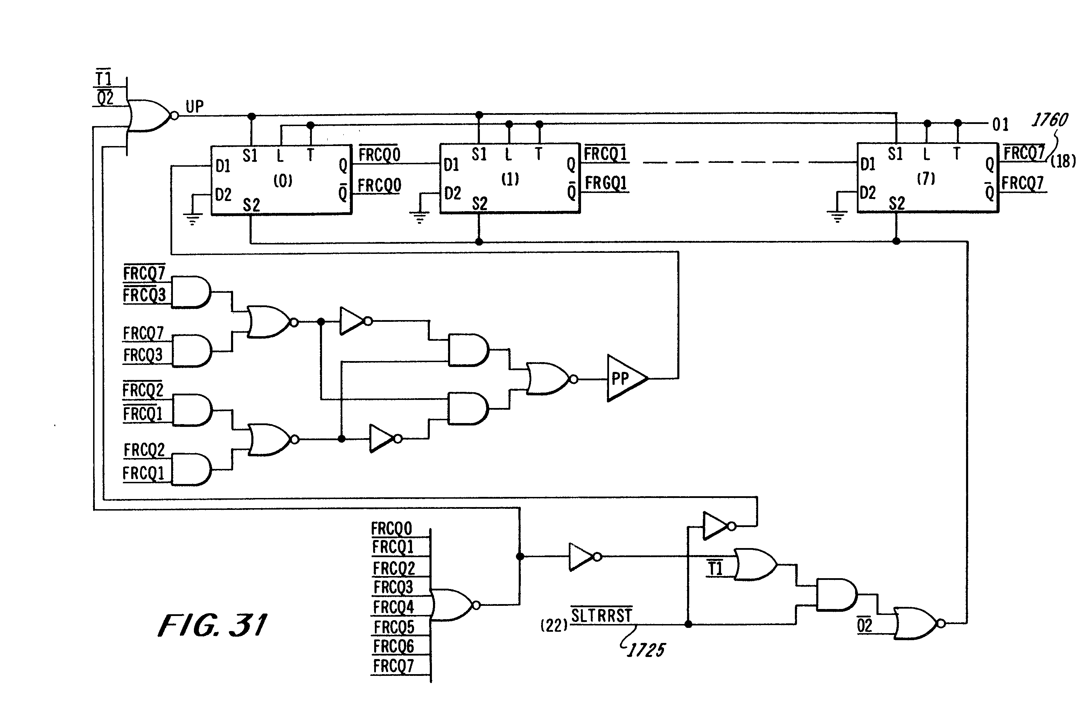

Figure 31 is a schematic view of the FREE RUN COUNTER for the back - off algorithm logic of Fig. 26A;

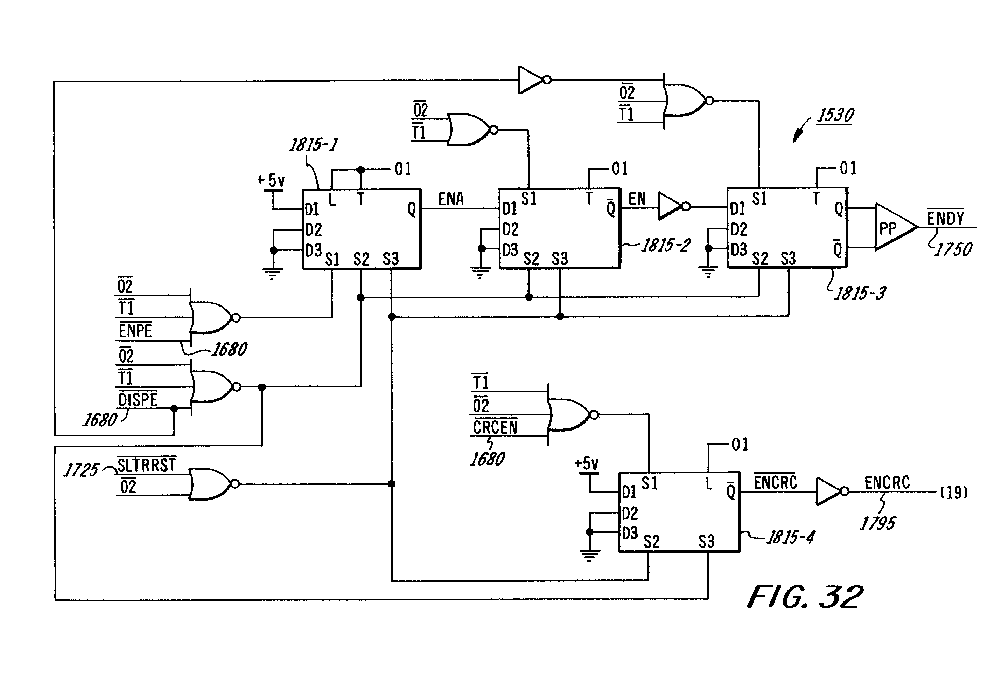

Figure 32 is a schematic view of the phase encoder for the shared line transmitter module of Fig. 1;

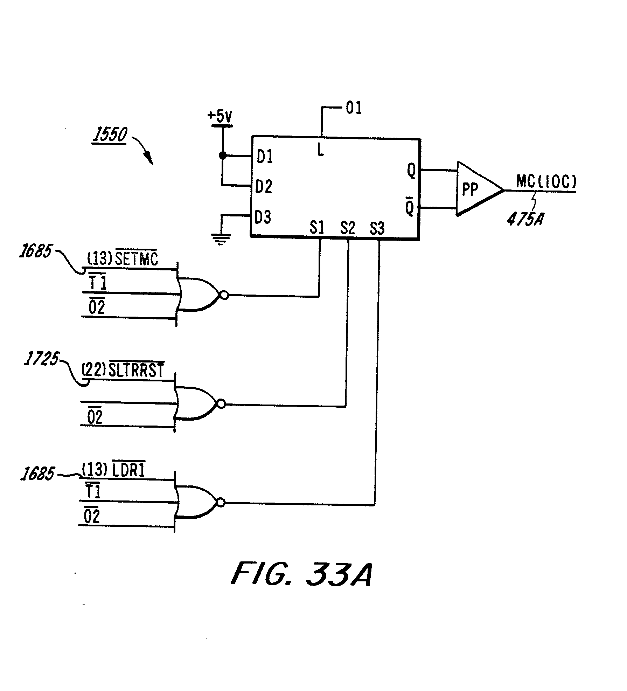

Figure 33A is a schematic view of the MC logic for the shared line transmitter moduel of Fig. 1;

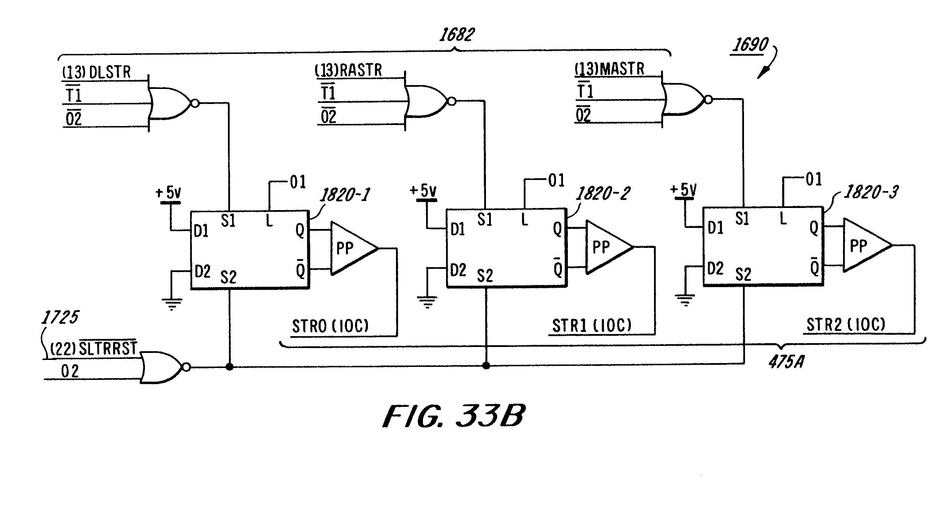

Figure 33B is a schematic view of the STR logic for the shared line transmitter module of Fig. 1;

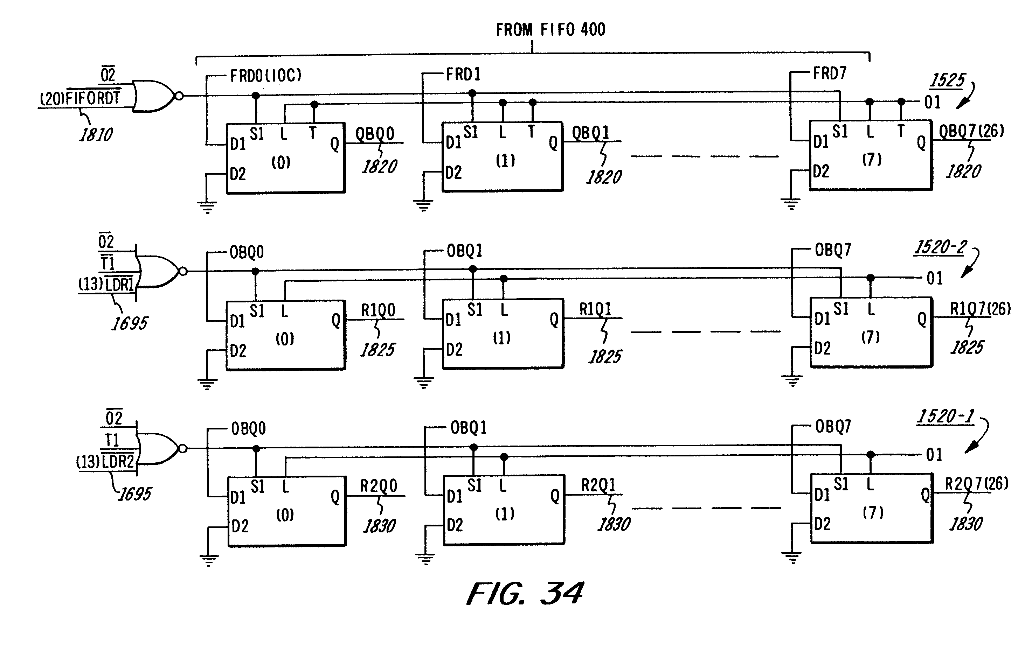

Figure 34 is a schematic view of the OB, SR1 and SR2 registers for the shared line transmitter module of Fig. 1;

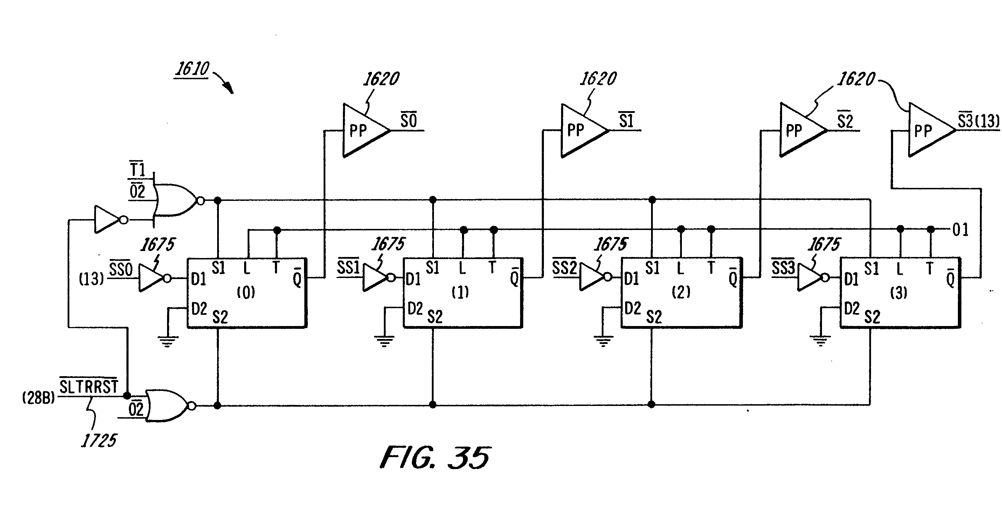

Figure 35 is a schematic view of the S register for the SLT Control logic shown in fig. 23A'

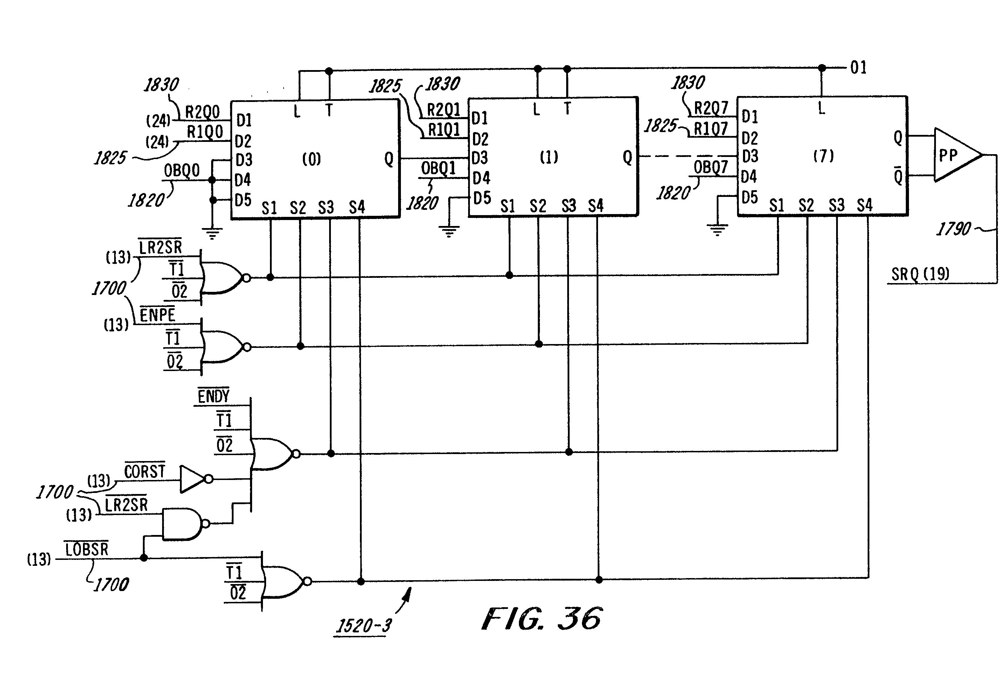

Figure 36 is a schematic view of the SR3 register for the shared line transmitter module of Fig. 1;

Figure 37A is a schematic view of the TGR register for the shared line transmitter module of Fig. 1;

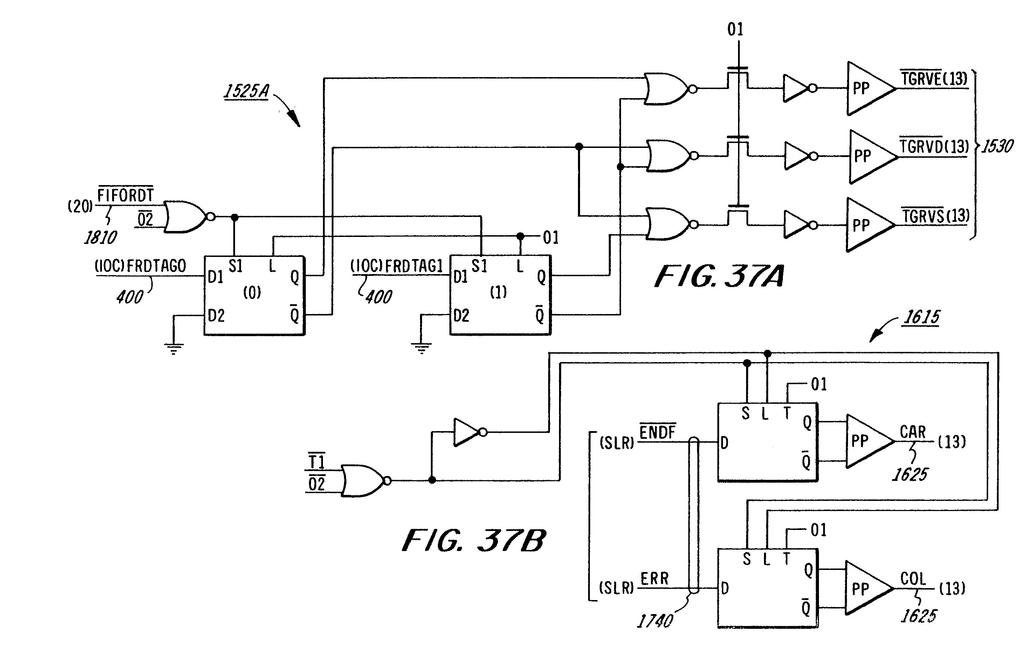

Figure 37B is a schematic view of the CAR/COL Logic for the SLT Control Logic shown in Fig. 23A;

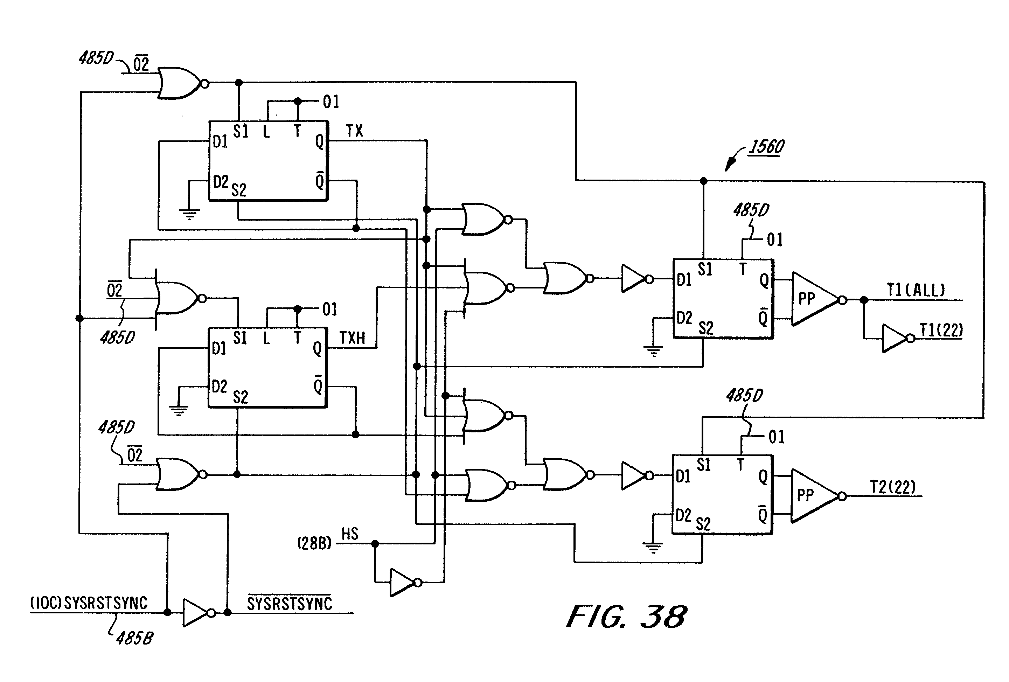

Figure 38 is a schematic view of the timing generator for the shared line transmitter module of Fig. 1;

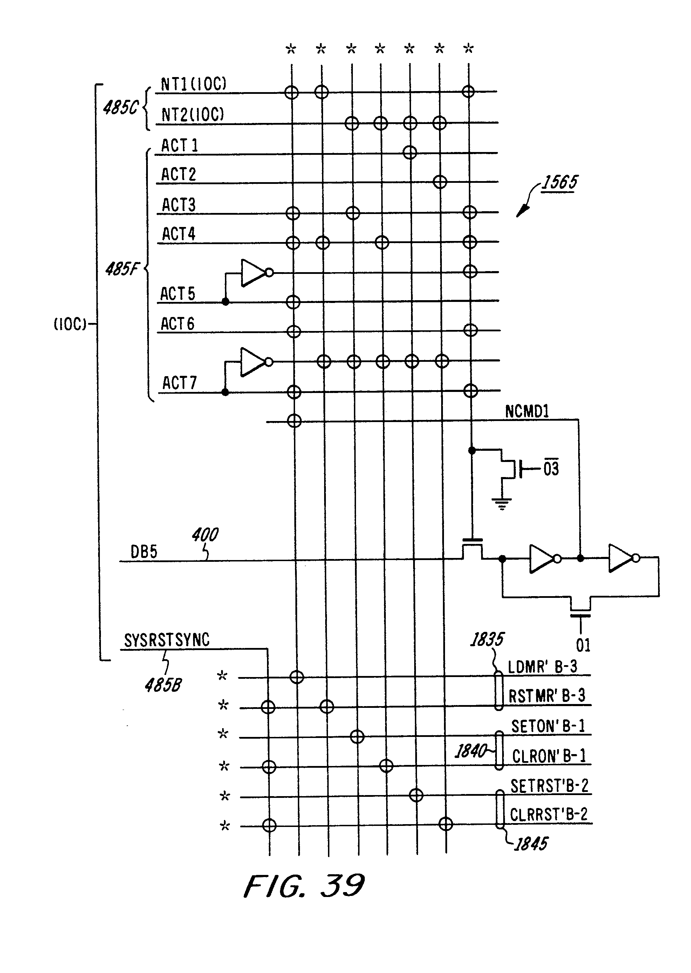

Figure 39 is a schematic view of the IOC Control BUS DECODE for the shared line transmitter moudle of Fig. 1;

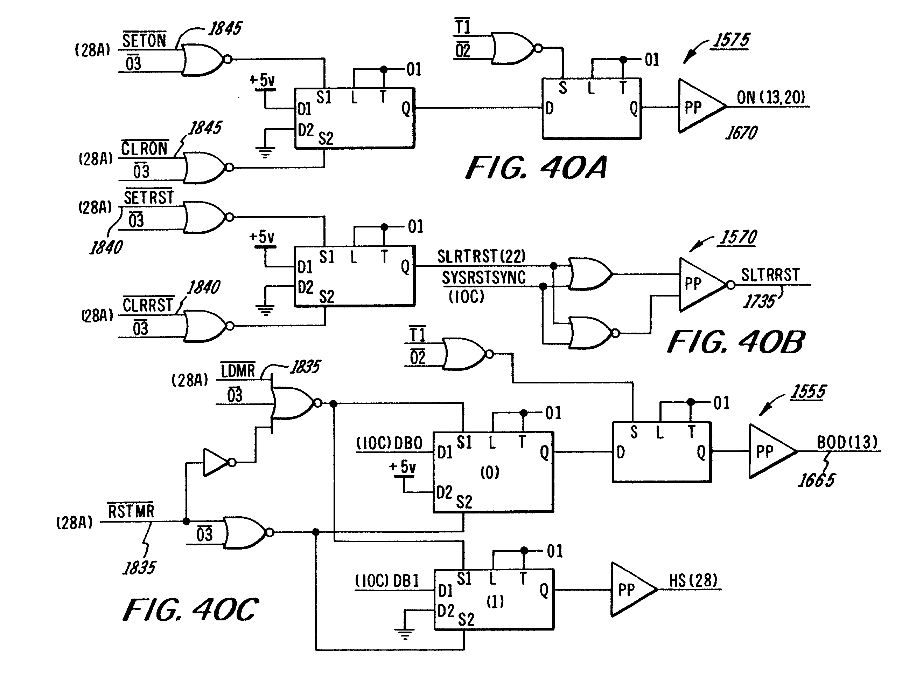

Figure 40A is a schematic view of a MR register for the shared line transmitter module of Fig. 1;

Figure 40B is a schematic view of an ON register for the shared line transmitter module of Fig. 1:

Figure 40C is a schematic view of a SLRTRST register for the shared line transmitter module of Fig. 1;

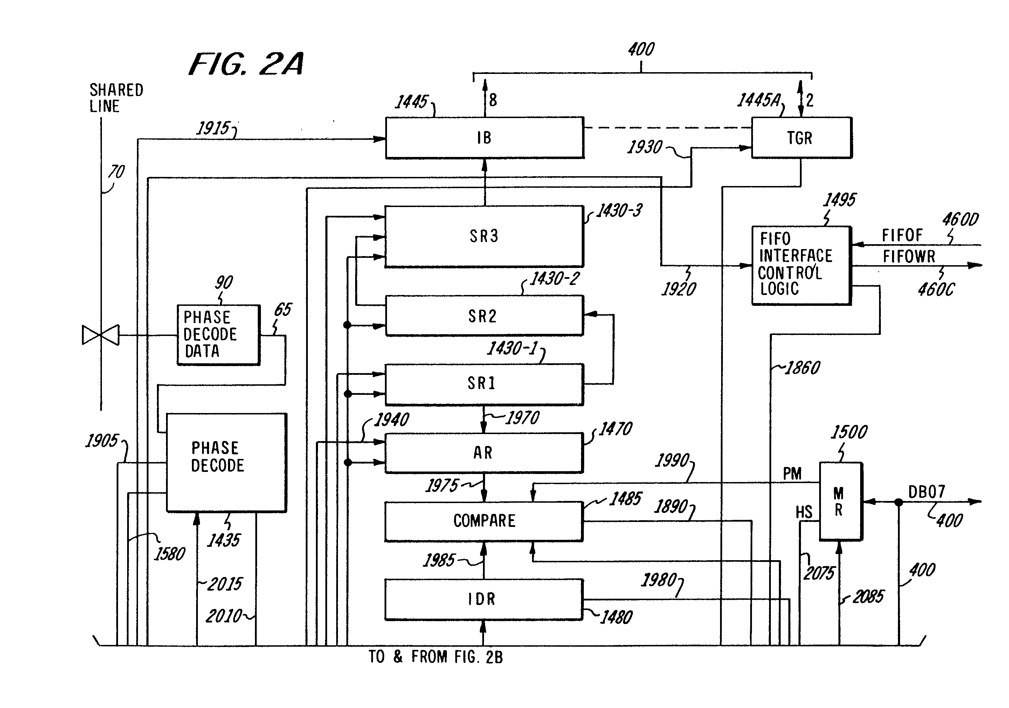

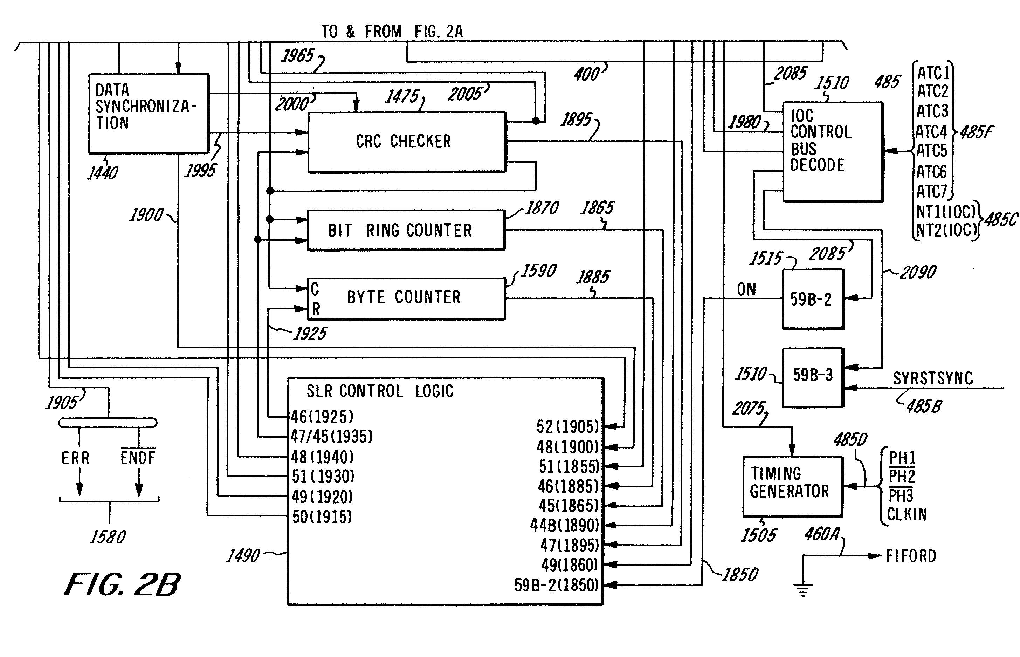

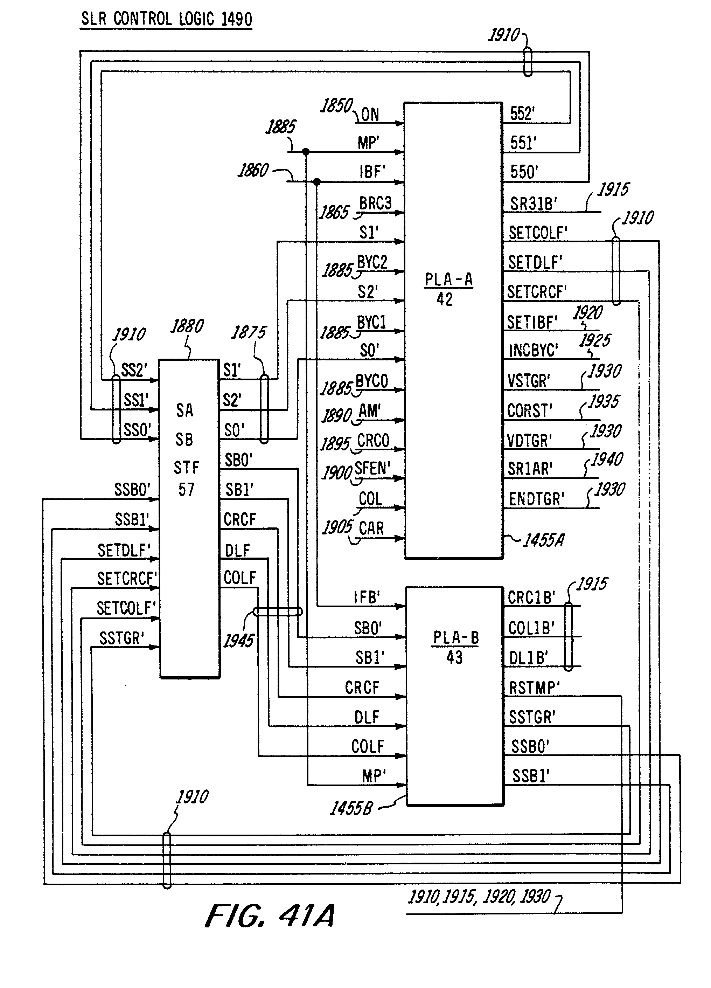

Figure 41A is a block diagram of the SLR Control Logic for the shared line receiver module of Fig. 2;

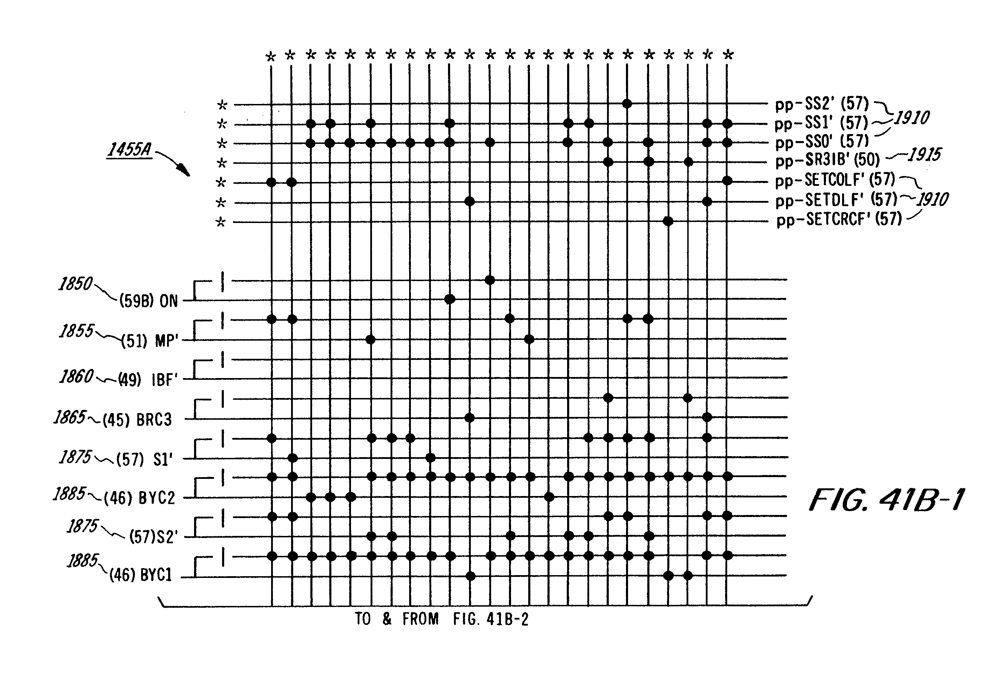

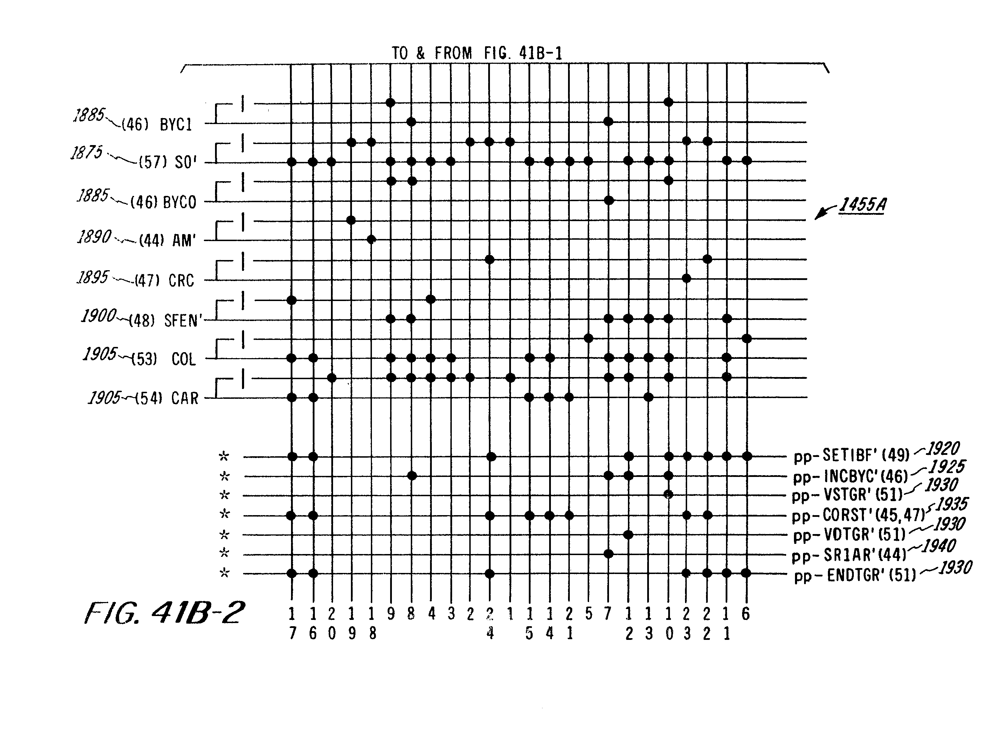

Figure 41B is a schematic diagram of a PLASLR-A for the SLR control logic of Fig. 41A;

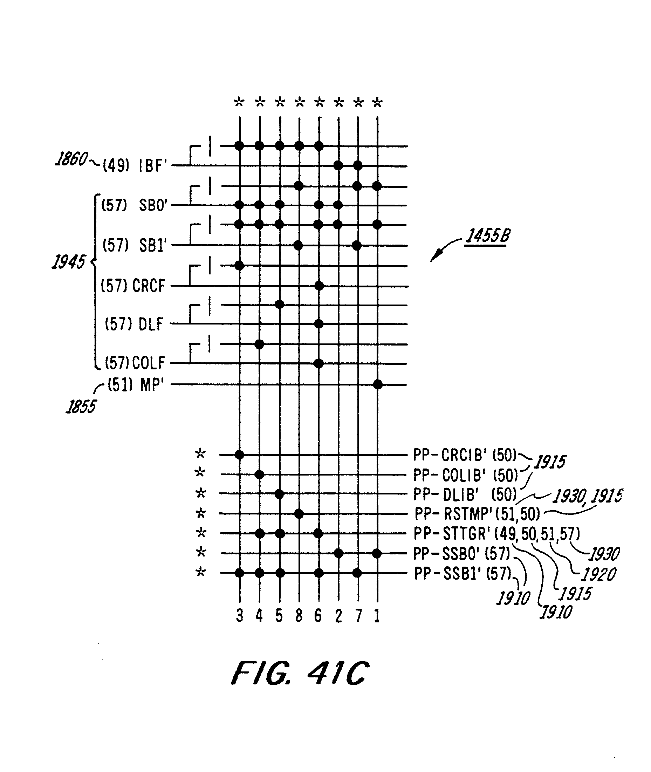

Figure 41C is a schematic diagram of a PLASLR-B for the SLR control logic of fig. 41A;

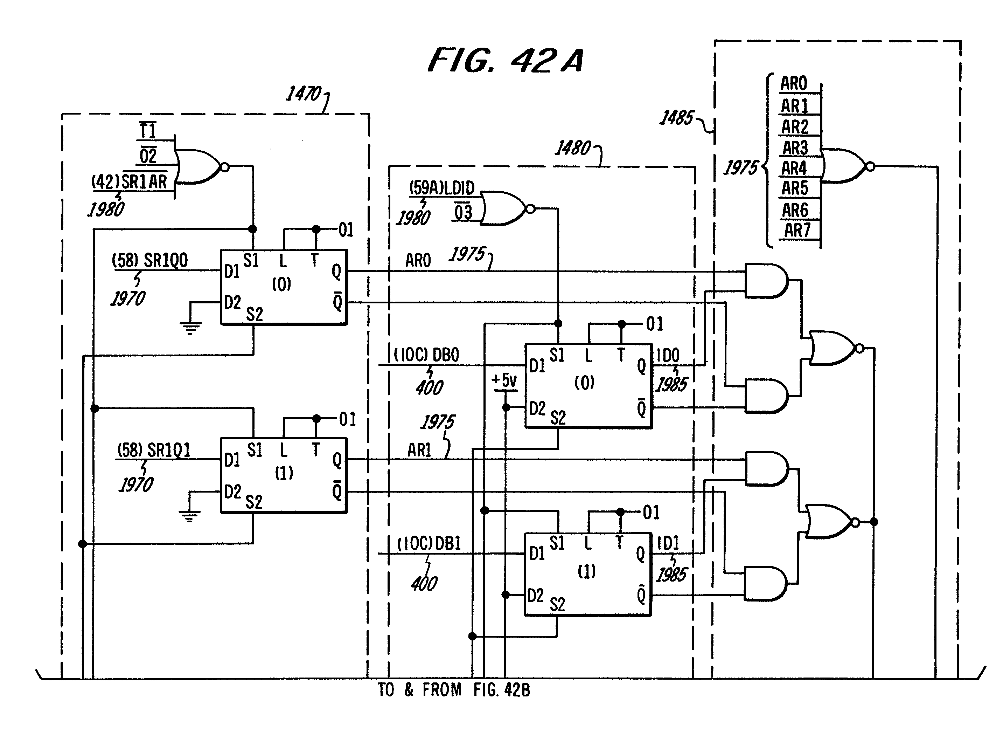

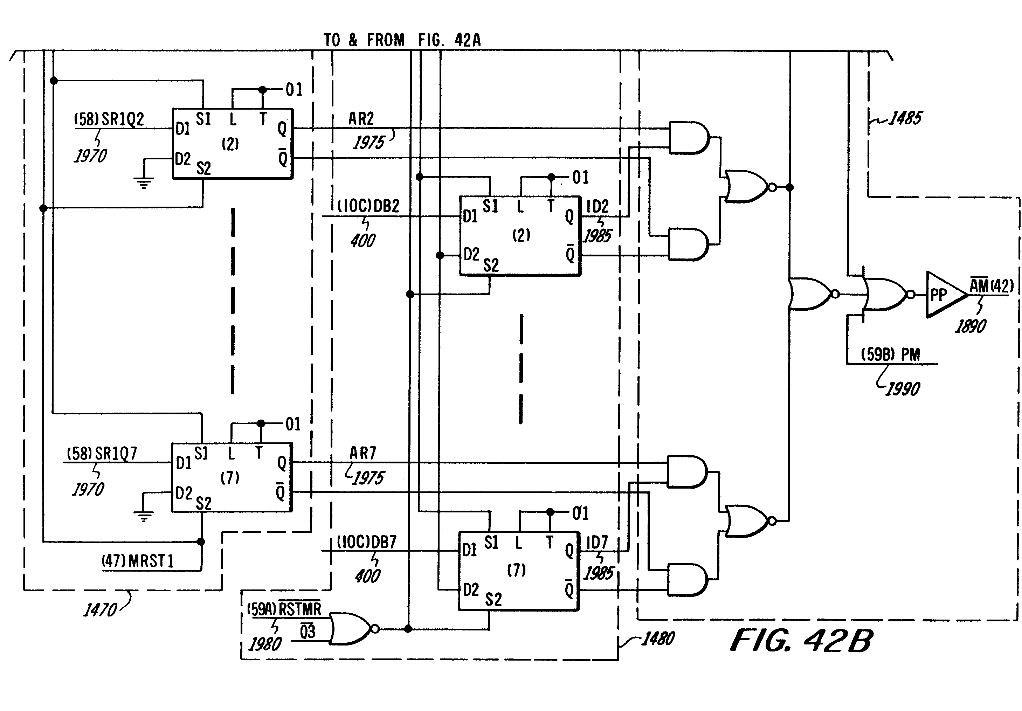

Figure 42 is a schematic diagram of a ADDRESS RECOGNITION LOGIC of Fig. 2.

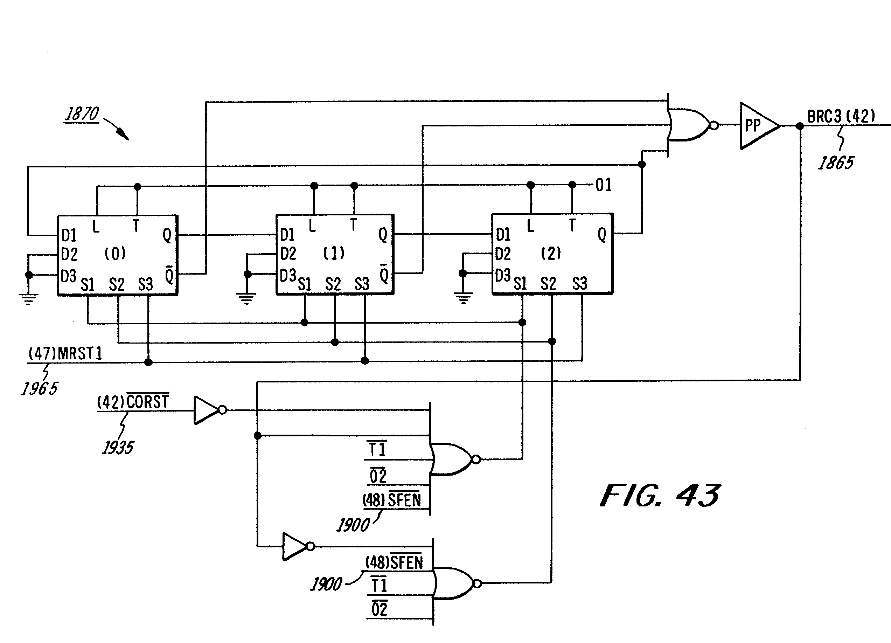

Figure 43 is a schematic diagram of a Bit RING COUNTER of the shared line receiver of Fig. 2;

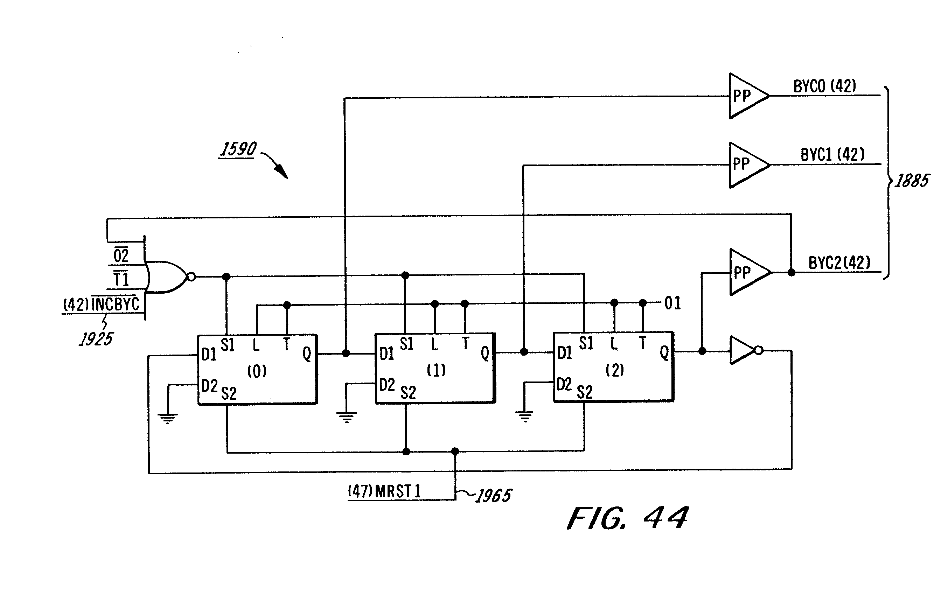

Figure 44 is a schematic diagram of a Byte Counter of the shared line receiver of Fig. 2;

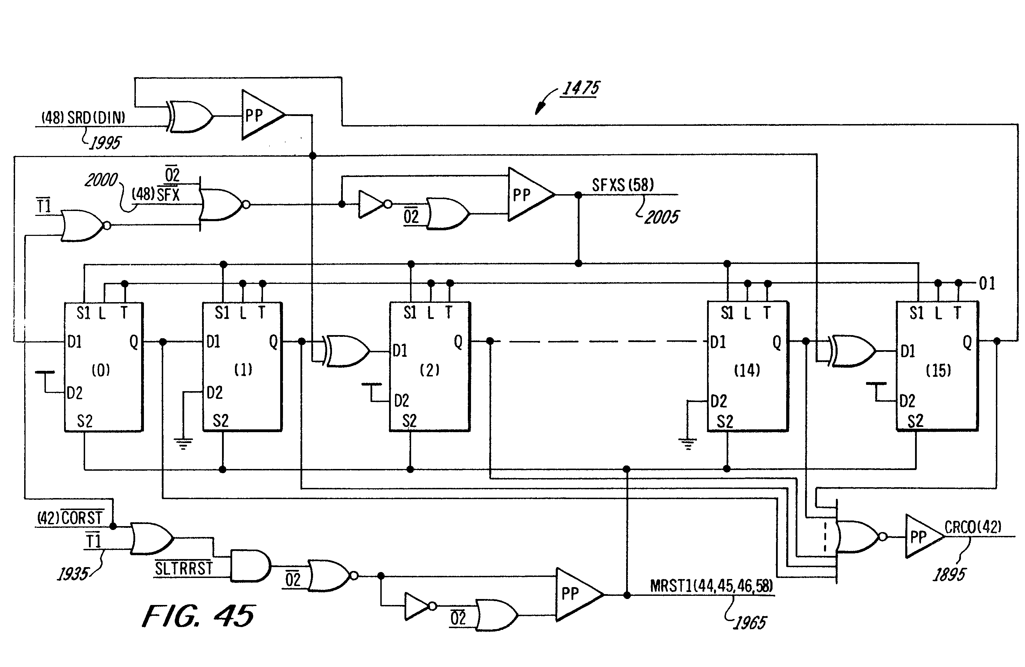

Figure 45 is a schematic diagram of a CRC CHECKER of the shared line receiver of Fig. 2;

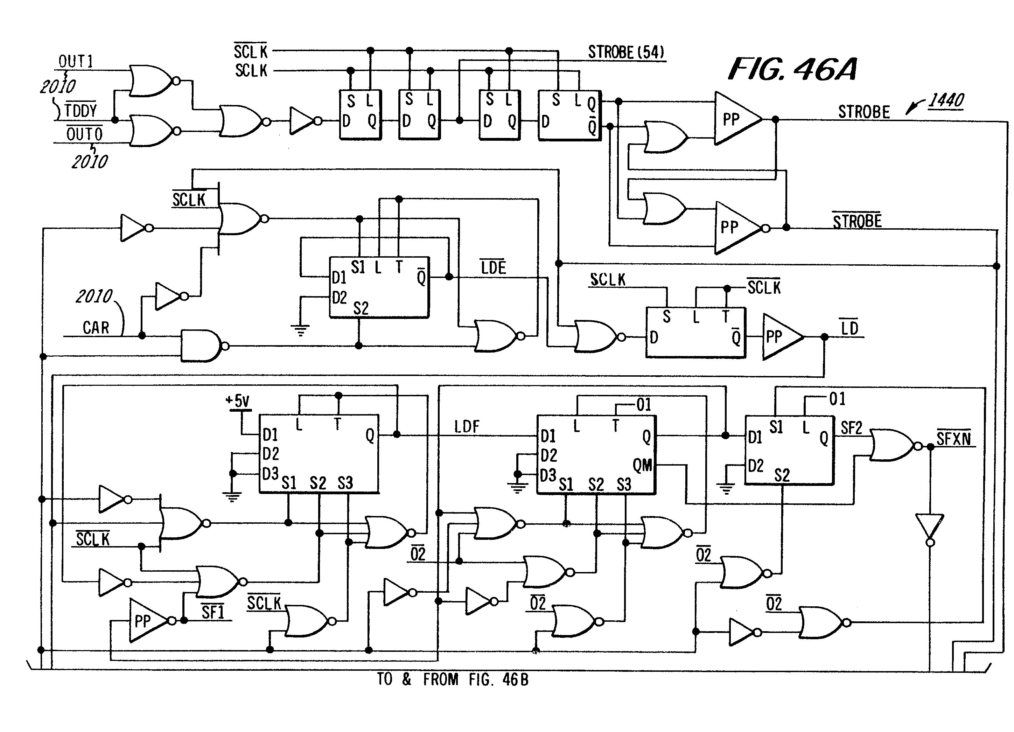

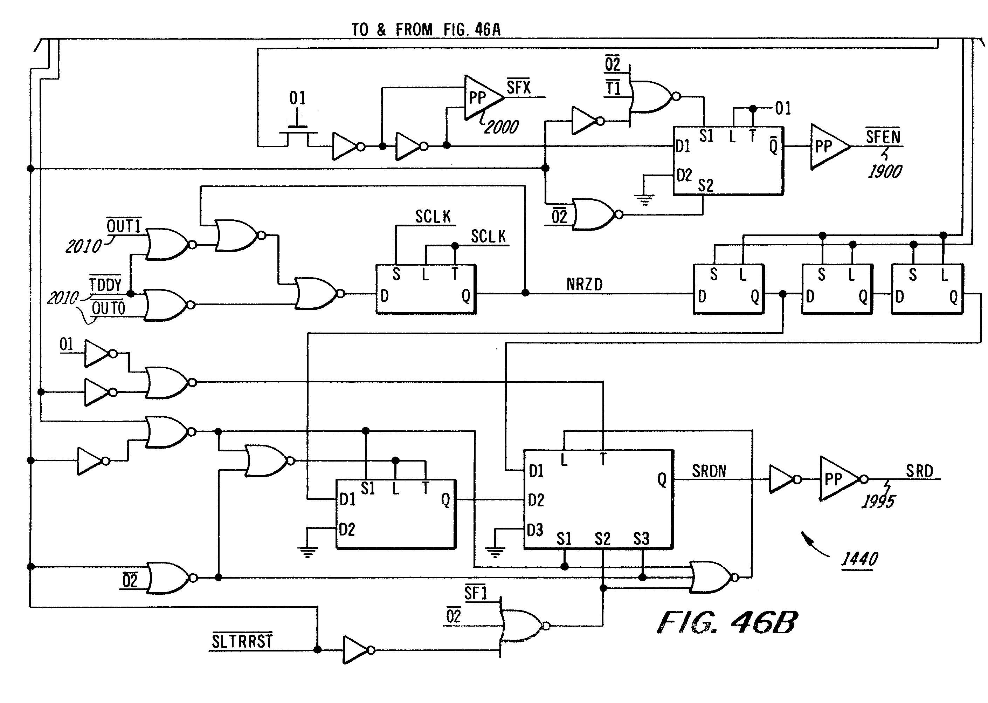

Figure 46 is a schematic diagram of a decoded data synchronization Logic for the shared line receiver of Fig. 2;

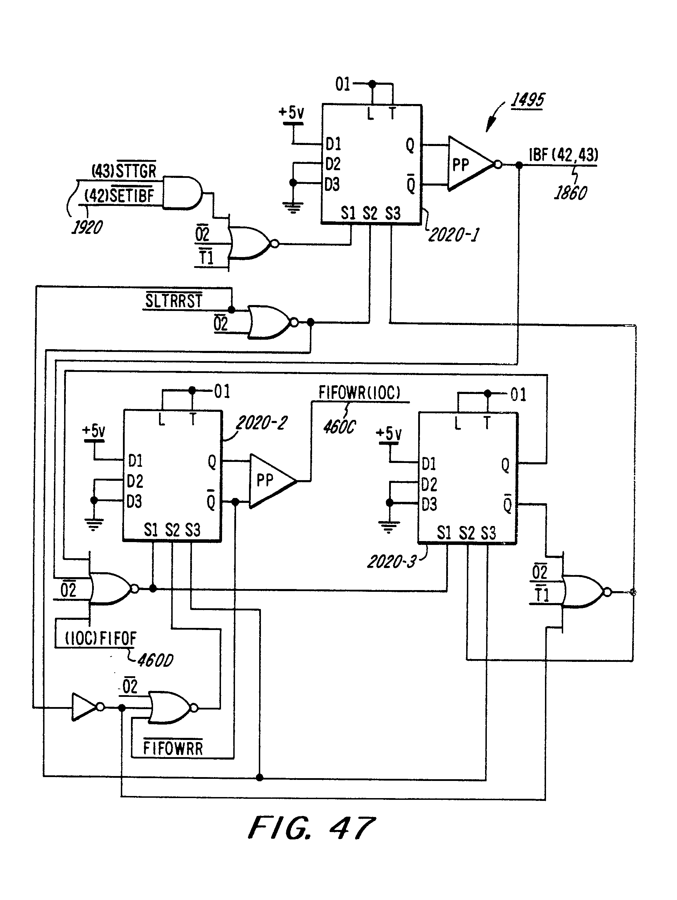

Figure 47 is a schematic diagram of a FIFO Interface control for the shared line receiver of Fig. 2;

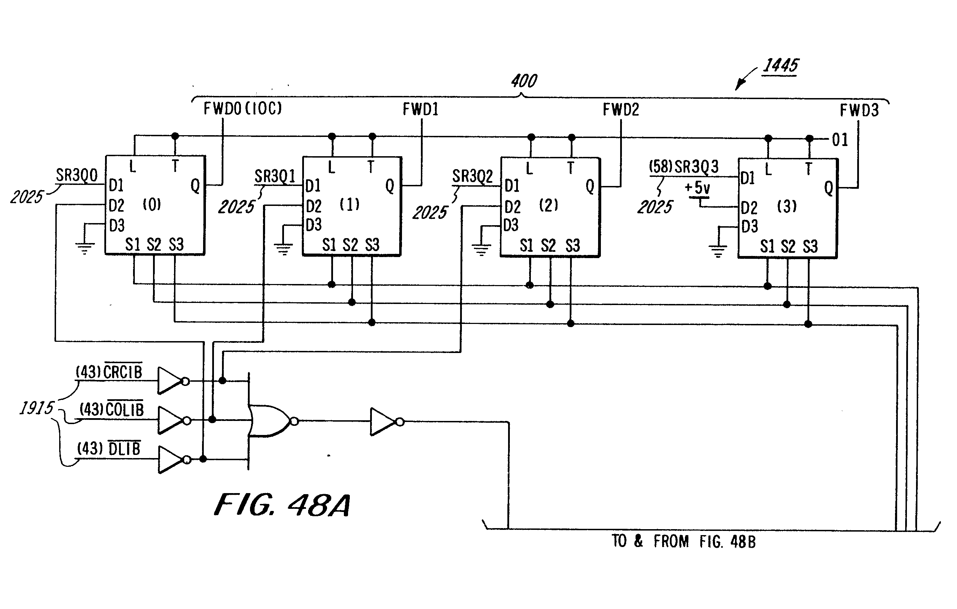

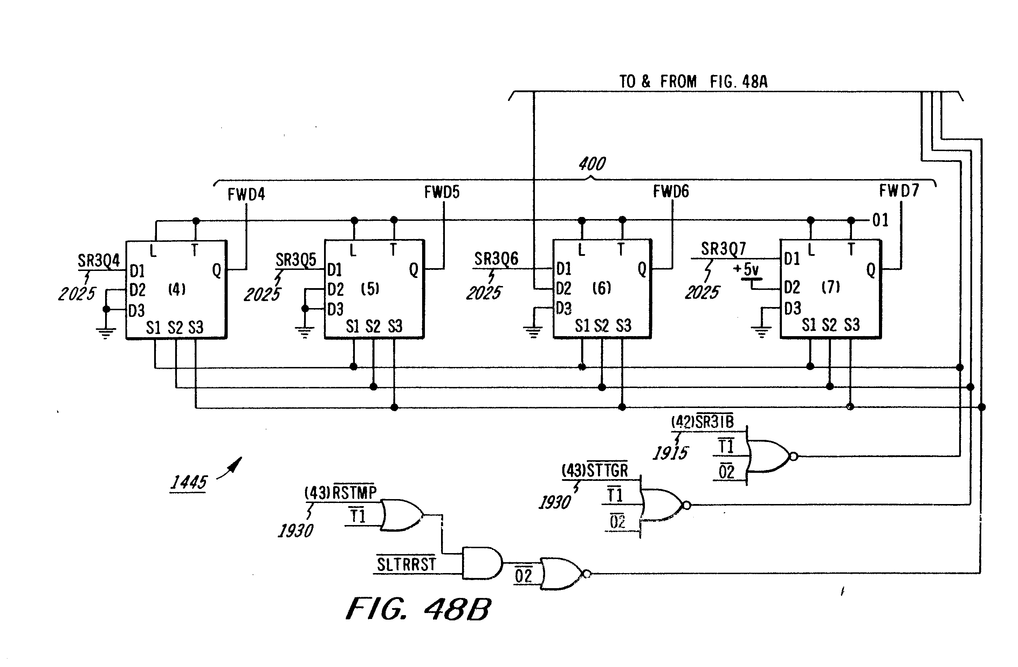

Figure 48 is a schematic diagram of an IB register for the shared line receiver of Fig. 2;

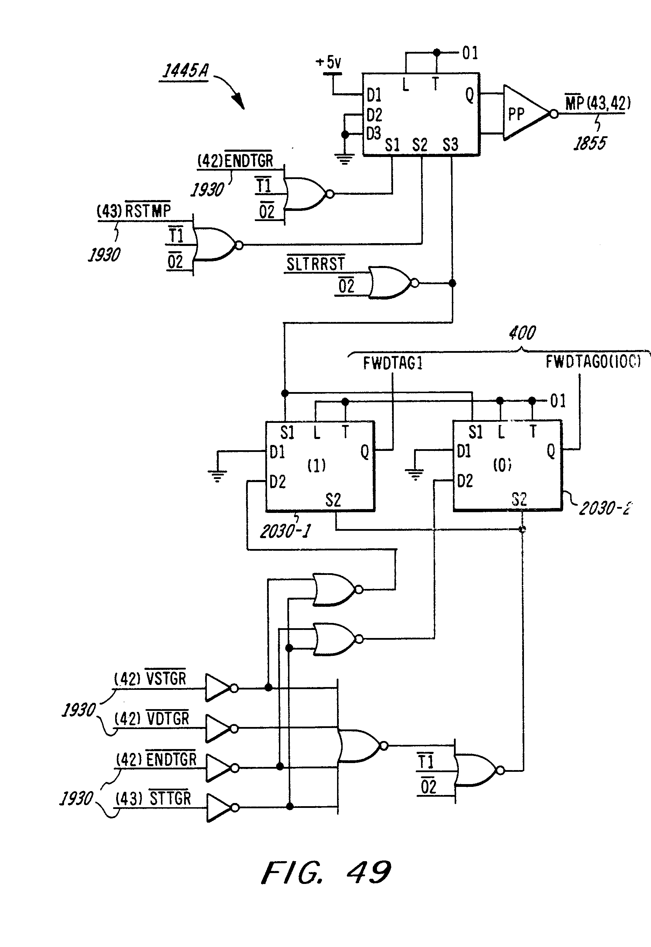

Figure 49 is a schematic diagram of a TGR register for the shared line receiver of Fig. 2;

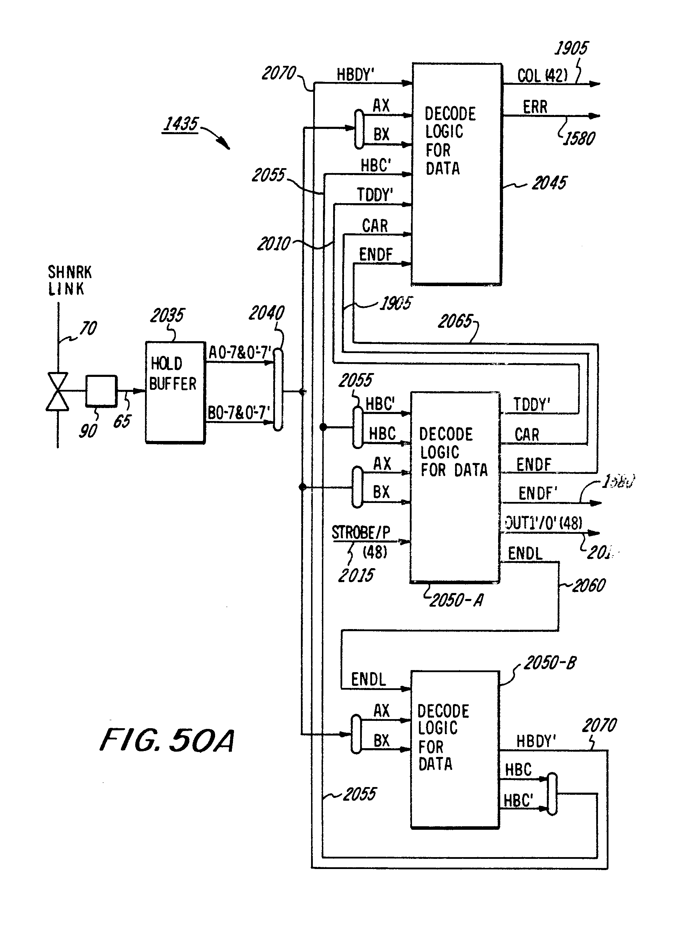

Figure 50A is a block diagram of the phase decoder for the shared line receiver of Fig. 2;

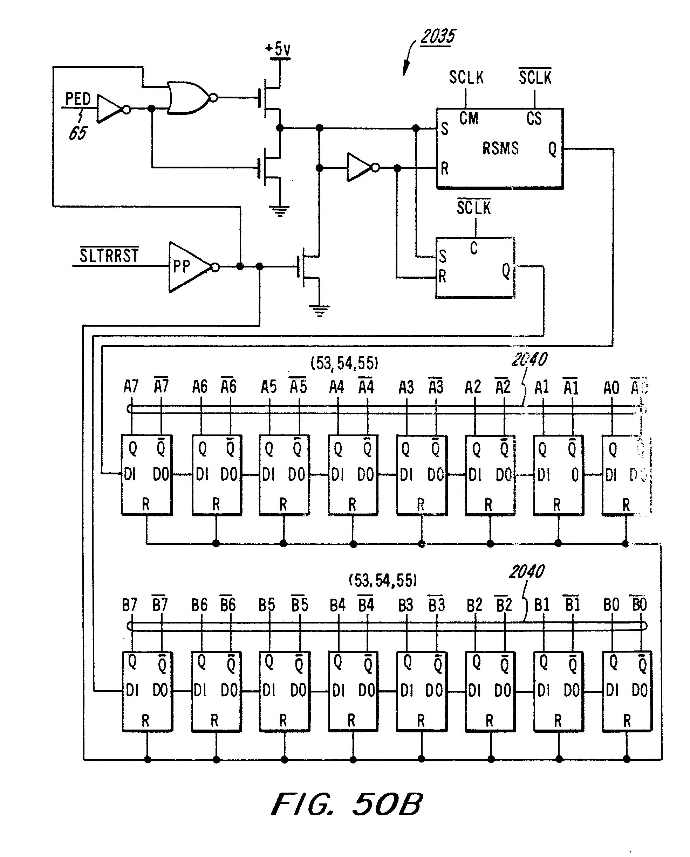

Figure 50B is a schematic diagram of the HOLD BUFFER for the phase decoder of Fig. 50A;

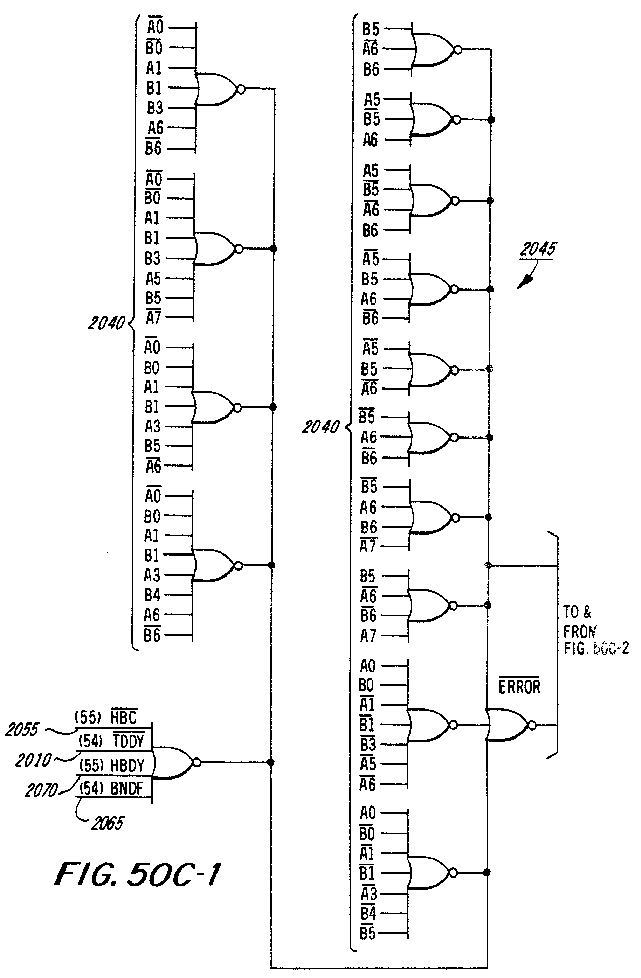

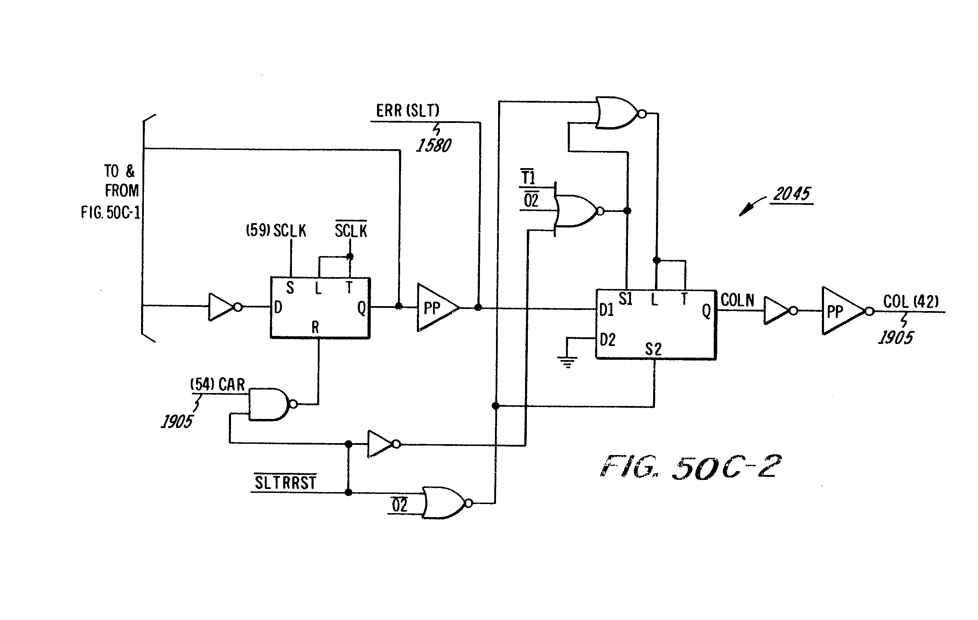

Figure 50C is a schematic diagram of the decode logic for ·error for the phase decoder of Fig. 50A;

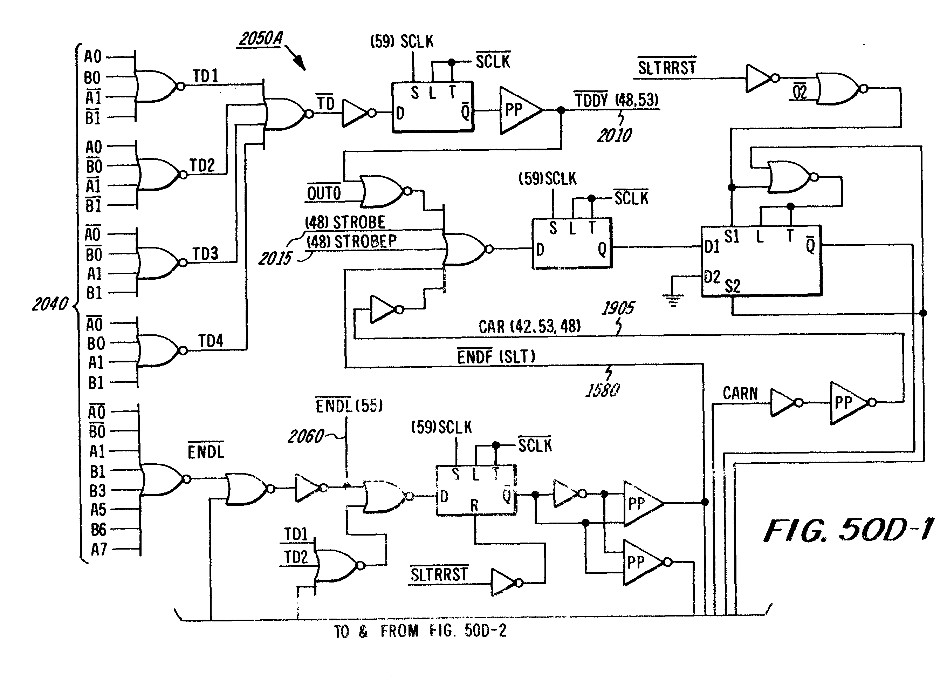

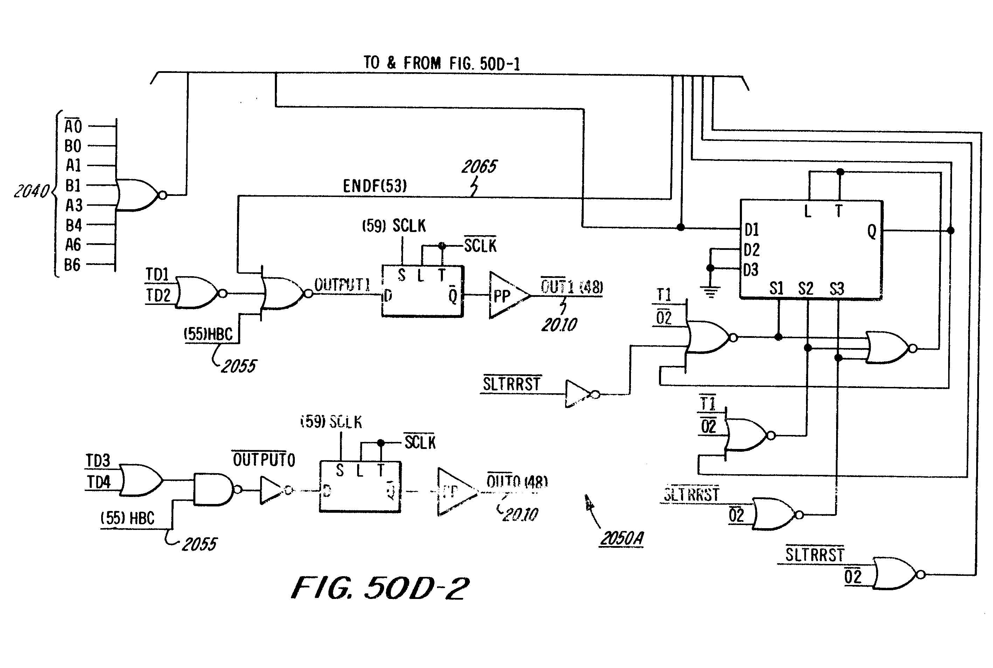

Figure 50D is a schematic diagram of the first decode logic for DATA for the phase decoder of Fig. 50A;

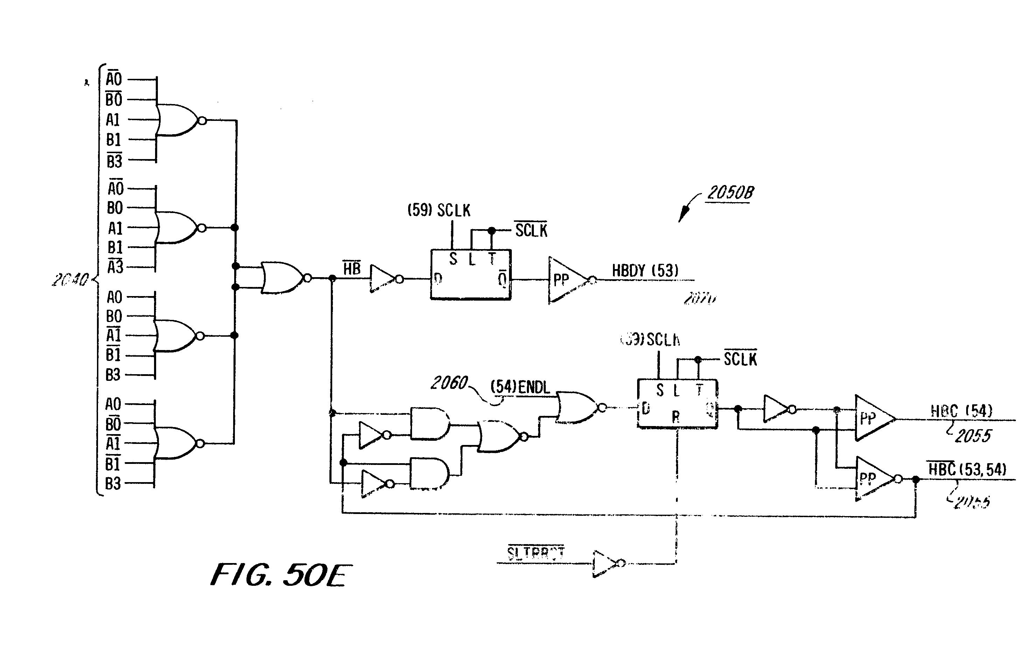

Figure 50E is a schematic diagram of the second decode Logic for DATA for the phase decoder of Fig. 50A;

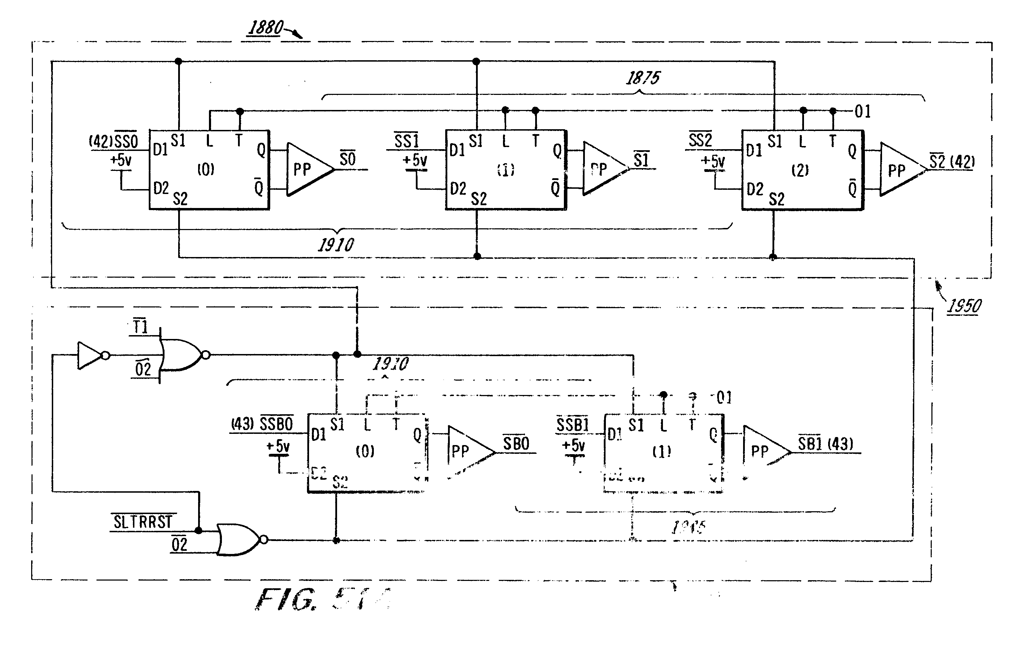

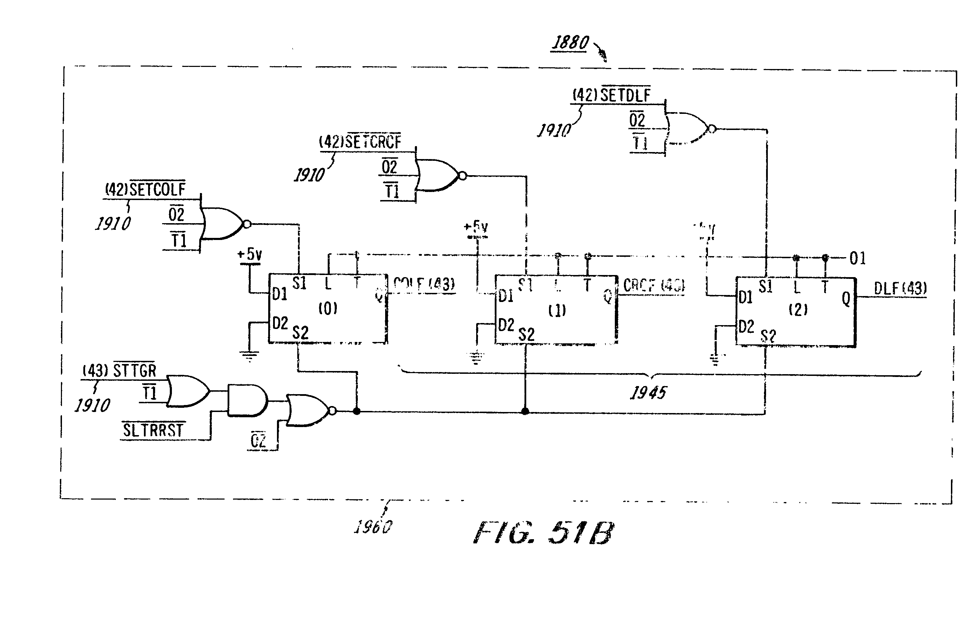

Figure 51 is a schematic diagram of the SA/SB/STF registers of the SLR Control Logic of Fig. 41A;

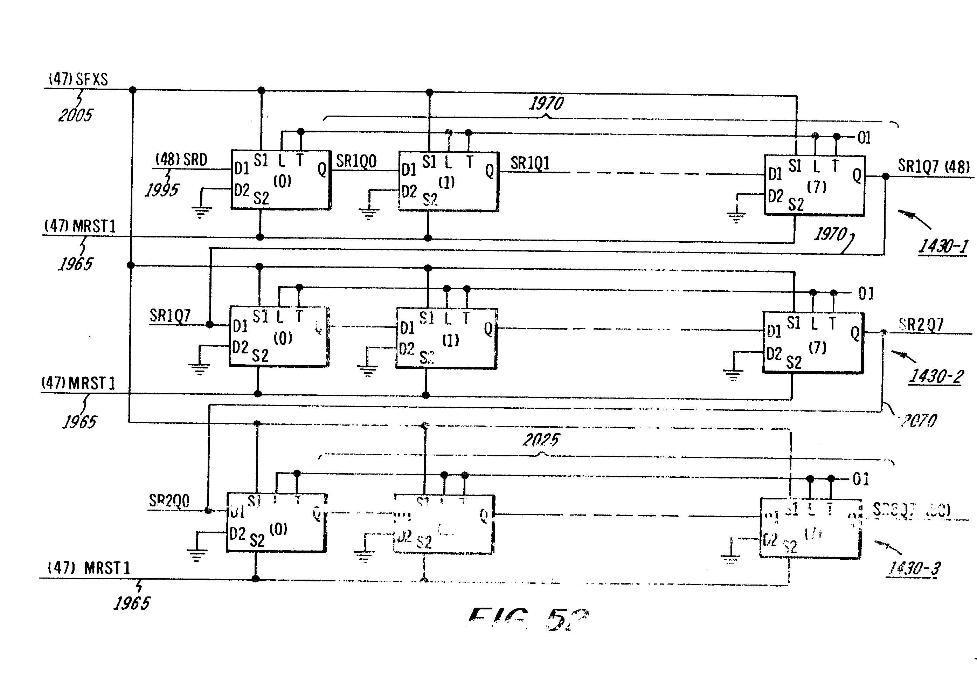

Figure 52 is a schematic diagram of the SR1, SR2 and SR3 registers of the shared line receiver of Fig. 2;

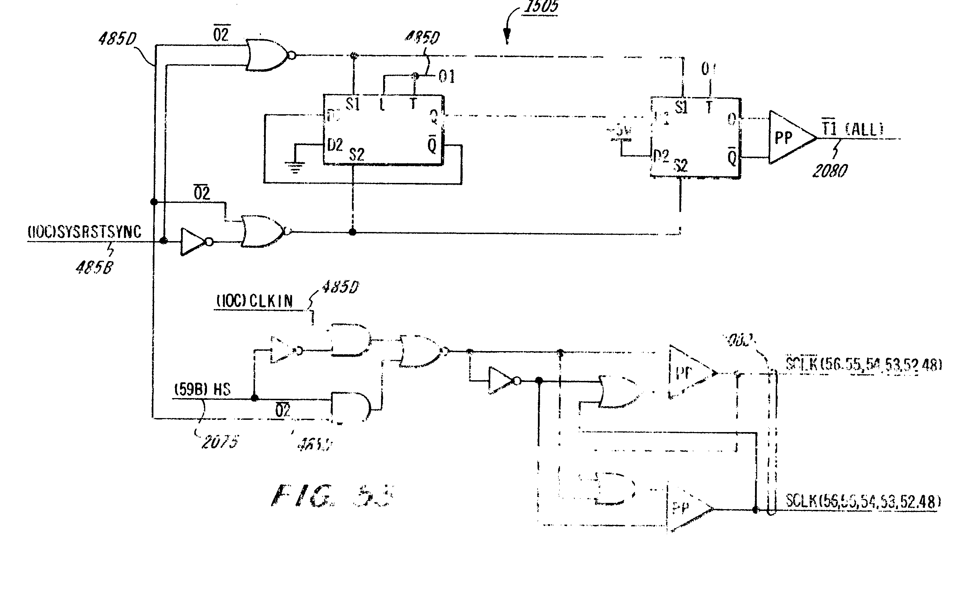

Figure 53 is a schematic diagram of the timing generator of the shared line receiver of Fig. 2;

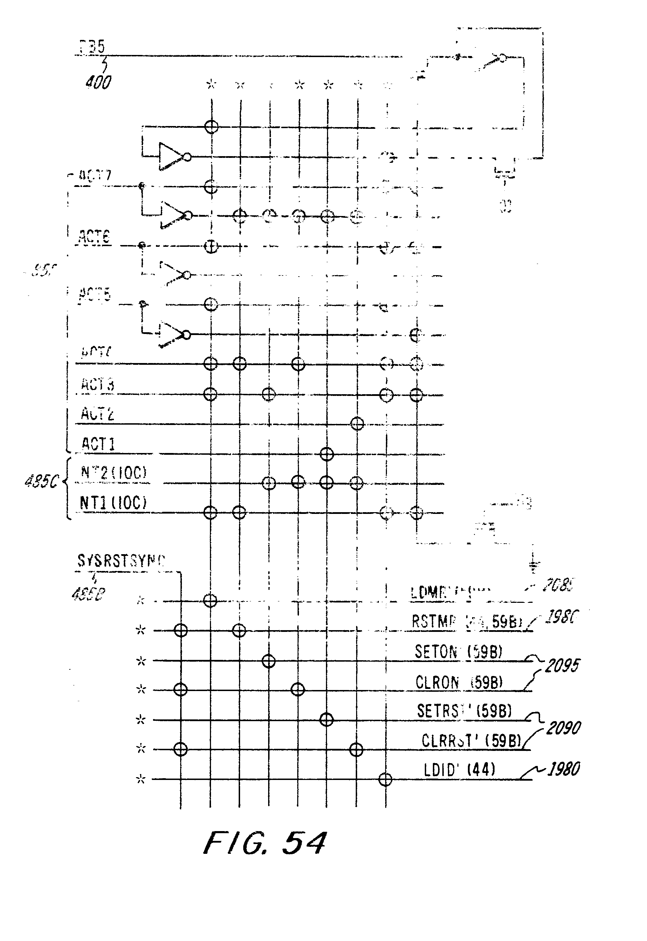

Figure 54 is a schematic diagram of the IOC Control BUS DECODE of the shared line receiver of Fig. 2;

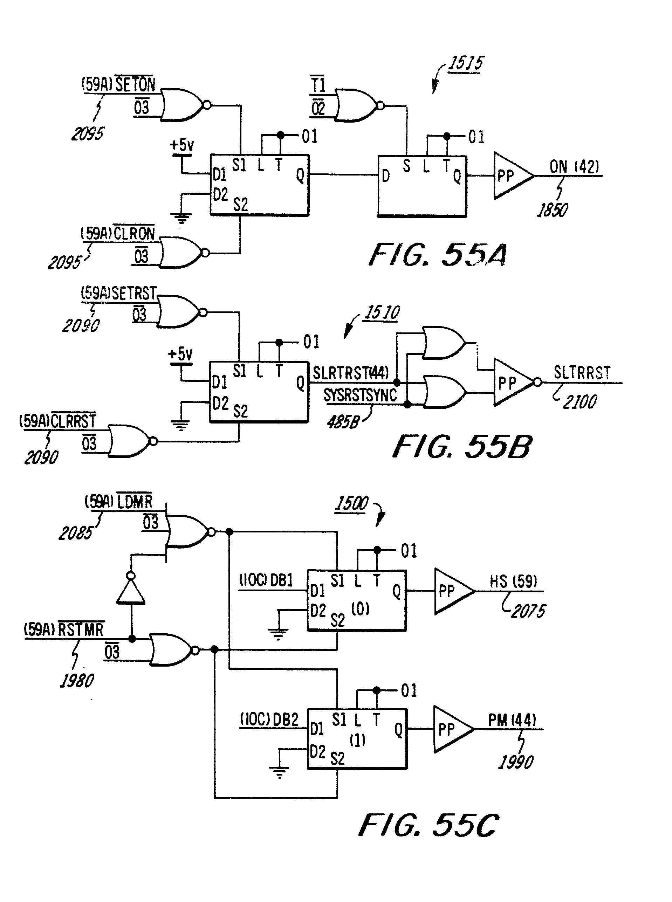

Figure 55A is a schematic diagram of the ON registers of the shared line receiver of Fig. 2;

Figure 55B is a schematic diagram of the SLRTRST register of the shared line receiver of Fig. 2; and

Figure 55C is a schematic diagram of the MR registers of teh shared line receiver of Fig. 2.

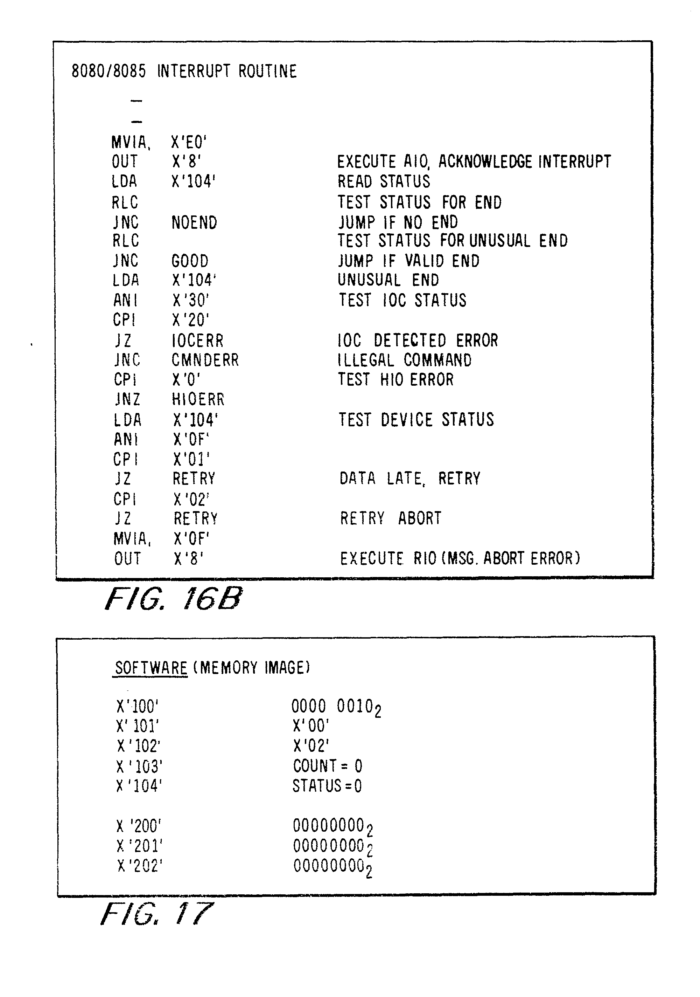

Referring to Figures 1 through 55C by the character of reference, there is illustrated an apparatus for carrying out the objects of the invention.

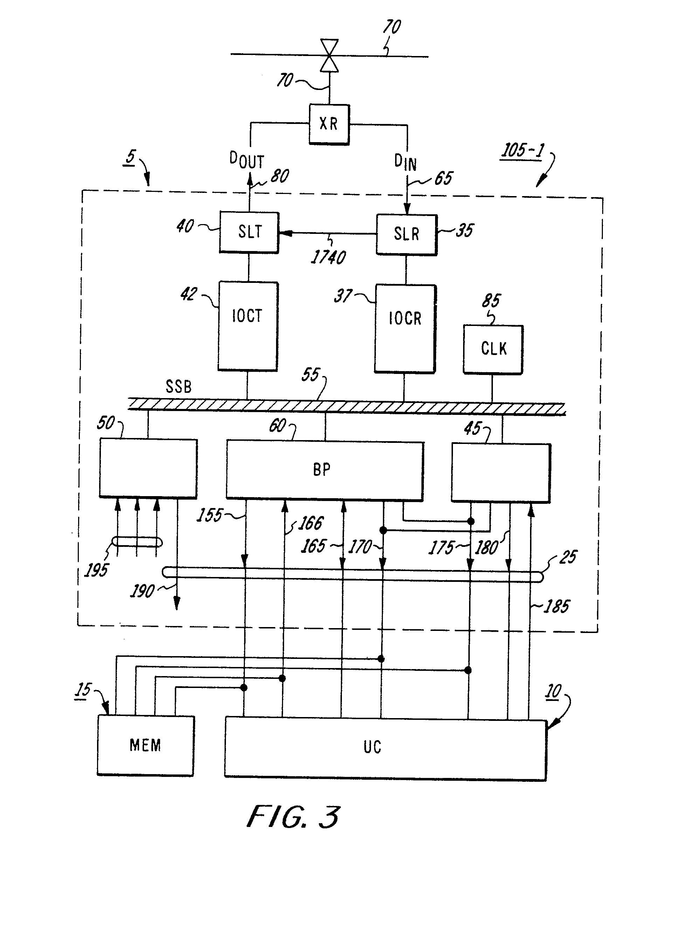

The shared line receiver (SLR ) 35 and the shared line transmitter (SLT) 40 are macros that are used for serial communications on a line 70 which is shared by any othe. controllers or subcontrollers or control element 105-1 having a shared communication controller 5 such as diagrammed in Fig. 3. The SLR 35 is a receiver device and a receiver controller. So too, the SLT 40 is an integrated device and controller. The microprocessor control for the SLT 40 and SLR 35 from microprocessor 10 and is exerted through I/O channels. The SLT Controller 105-1 operates through the microcomputer

0051960

10 having memory 15 which generates signals through an external bus 25, a bus processor 60, a SSB bus 55 and finally through the IOCT and IOCR input/output channels 42 and 37 to the SLT and SLR 40 and 35 respectively. It will be appreciated that the SLT and SLR 408-35, having output channels on buses 80 and 65 are operative to interface with the shared line 70 through transceiver 90. It will be further appreciated that the SCC 5 is clocked through clock module 85 on to SSB 55 . To simplify the control problem and permit receiving and transmitting, each macro SLT40 and SLR35 has an I/O channel 42 and 37 respectively. The phase encoding and decoding of messages as explained infra is done using all digital techniques.

The SLR 35 monitors the shared line 70 performing three essential functions : first, if it detects a carrier on the line, it notifies its associate SLT 40, causing it to defer transmitting until the line 70 is quiet; secondly, if it detects a collision on the line 70, meaning that another station or subcontroller 105-1 is also attempting to transmit it notifies its associated SLT 40, which aborts its own transmission and jams the line 70 long enough to be certain that all SLR's 35 on the line 70 have detected the condition ; and thirdly, if it matches the destination address at the head of an incoming message to its own identification address as explained infra, or if it recognizes the address designed for broadcast to all receivers 35, or if it is in the promiscuous mode (instructed to receive all messages) , it accepts the bit serial message, performs a cyclic redundancy check run (CRC) converts the message to byte parallel data, and passes the data via its associated IOCR 35 to Memory 15 having RAM where it is available to the processor or microcomputer 10.

The features of the SLR/SLT 35 and 40 includes use of SLR/SLT pairs 35, 40 permitting packets of digital data to be communicated among distributed processors stations 105-1 even in the presence of considerable electrical noise. This communication enables control elements 105-1 in various parts of the machine or system to supervise a local function while maintain coordination with other control elements 105-1. Another feature is that the communication medium 70 is passive minimizing the possibility of failure of the medium itself. Communication over a passive medium 70 , such as a twisted pair of wires or a single coaxial cable greatly reduces the number of lines needed, compared to conventional parallel transmission of digital signals. Yet another feature is that the transmission method is phased coding, or Manchester coding. It has the advantage of being able to transmit between stations with independent clock generators 85 without using an additional line for a clock.

Another feature is that each SLR/SLT station 35 , 40 is independent of all other stations, there is no central control that might become a bottleneck, so far as access to the shared line 70 is concerned. The stations 105-1 themselves must arbitrate contention for access to the line 70. If two or more stations 105-1 attempt access at the same time, both "back off" for randomly-determined periods of time, so that their next access tries will take place at different times. Another feature is that since the stations 105-1 having SLR/SLT 35/40 are independent of each other, failure of one station 105-1 does not affect other stations 105-1 or the shared line 70. The rest of the system continues without the failed unit. Yet another feature is that a particular SLR/SLT 35/40 can communicate to any other station 105-1 on the shared lines 70 by using its unique identification address, or it can broadcast to all stations 105-1 by using a common address designated for this purpose.

Another feature is that each receiver 35 ignores communications not addressed (or broadcast) to it, except that, in the promiscuous mode, a receiver 35 can intercept all messages. Thus, a designated receiver 35 can be employed to provide a record of all activity on the shared line 70 for use in troubleshooting. Yet another feature is that instrumentation of the shared line receivers 35 transmitter 40 and the controllers 5 in the form of macros 105-1 on one chip reduces cost to the level that permits packet communications over a shared line 70 to be economical in small systems. In many machine control systems half a dozen or so processor stations 105-1, will be sufficient, but further expansion is possible. Particularly, the 8-bit destination address permits up to 254 stations on a single line 70. The volume of messages may limit the number of stations 105-1 in some other locations to be less than this.

In regards to basic principles for the control of the shared line 70, the shared line 70 is a medium for communicating among the

- 9 -

0051960

number of control elements 105-1, each containing a microcomputer 10. The shared line 70 itself may be a twisted pair although other media, such as a single coaxial cable can also be employed. The shared line 70 is accessed by the shared line receiver 35 and a shared line transmitter 40 in each control element 105-1. The message is a bit serial digital data packet, preceded by a start bit, destination address , and source address. Control of access to the shared line 70 rests with each receiving and transmitting station 35 /40. A station 105-1 with a message ready to transmit defers to a transmission already in progress . The station 105-1 may initiate a transmission only when the line is clear. If two stations 105-1 have messages ready and have been waiting for a transmission to end, each waits a further random period of time before attempting to begin transmission. The random waiting period is intended to minimize interference of one transmission with another . This interference is called a collision. If a collision is detected, the detecting station 105 -1 aborts its own transmission and jams the line . The purpose of jamming is to ensure that all stations 105-1 recognize a collision and abort their own transmission, thus putting all stations 105-1 in the backoff state.

The first requisite for obtaining an independent backoff is a means for enabling each station to create a period of random length. In the SLT 40 this means is a free-running counter 755 described infra which generates simulated or psuedo-random numbers. However, the random numbers are distributed about a mean so that the average length of the back off period is a known quantity. When the shared line 70 is engaged infrequently, as might be the case in a small system, a transmitter 40 has no difficulty in getting access to it. As the number of stations 105-1 or the volume of messages increases a transmitter 40 has to defer more often to existing messages. Also, the frequency of collisions between messages tend to rise. To make allowance for this increase, it is desirable to increase the average length of the backoff periods This is accomplished by counting the number of collisions experienced by a receiver 35 and increasing the number of bits of random number tranferred to a countdown counter 1765 described infra. The time - out of this counter 1765 represents the backoff period. As each additional bit of the random number is loaded in to the countdown counter 1765 the average size of the number to be counted down

0051960

doubles. As a backoff period doubles ( on an average) with each additional collision counted, the probabilty of another collision diminishes. However, after counting eight collisions, a transmitter 40 jams the line 70, aborts further attempts to transmit, and notifies its processor 10.

In regards to addressing, the first byte of each message is the destination address and the second byte, the source of the address. A packet placed on the shared line 70 propagates to all receivers 35, but is accepted only under the following conditions: first, destination address matches the receiver's 35 identification address, or secondly, the designated address is zero, the address designated by convention for broadcast messages to all receivers 35; or thirdly, the receiver 35 is to receive all messages.

In regards to carrier detection, for one station 105-1 to be able to defer to another, it must be able to detect the presence of a message on a shared line 70. In the transmission method employed, phase encoding, there is at least one transition from one logic level to another in each bit period. The fact that the message is present therefore, can be detected every bit period by the occurrence of the transmission carrier. In a system with carrier detection, collisions are minimized, because a transmitter 40 defers accessing the line when it is in use. Thus collisions can occur only when several stations 105-1 are waiting for the line to become available and begin transmitting at about the same time when it does.

In regards to collision detection, the receivers 35 of the stations 105-1 are equipped to detect the occurrence of two or more transitions in a bit period, indicating that two or more transmitters 40 are transmitting If the random backoff periods of two ( or more) stations 105-1 time out close to each other and several transmissions are initiated at almost the same time, the station 105-1 that is the first to detect the collision will abort its own transmission and reschedule it after doubling the backoff period.

Meantime, it jams shared line 70 by putting out a high level for two - bit periods , a time sufficient to ensure that all stations 105-1 have become aware of the interference condition. Once a transmission has been on the line 70 long enough to reach all stations 105-1, they defer to it and it runs to termination, barring noise which simulates a collision.

In regards to error detection, even when the first station 105-1 does not detect interference with its transmission, there is still some low probability of error in the received message. For this reason the transmitting station 105-1 has a cyclic redundancy check sum and the receiving station 105-1 verifies the sum. In addition, protocol at the software level may contain such error detection and correction procedure . For example, on being informed of a CRC error, the processor may then may refuse to acknowledge receipt of the message, forcing the transmittor 40 to repeat it.

In regards to the basic structure of the SCC -Subcontroller 105-1 having the SCC 5 , the shared line receiver 35 monitors the line 70, preventing the shared line transmittor 40 from transmitting when message bits are on the line 70. When a message is addressed to the particular receiver 35 it accepts the message, converts it to parallel bytes and transfers it to the input/output controller 42/37 with which it is working. Data bound for the shared line 70 are obtained in byte form from the RAM in the Memory 15 and is provided to the shared line transmitter 40, still in parallel , from the input/output controller 42 microcoded for working with a SLT 40. Basically, the SLT 40 converts parallel bytes to serial bits and places them on the shared line 70 in the phase - encoded format .

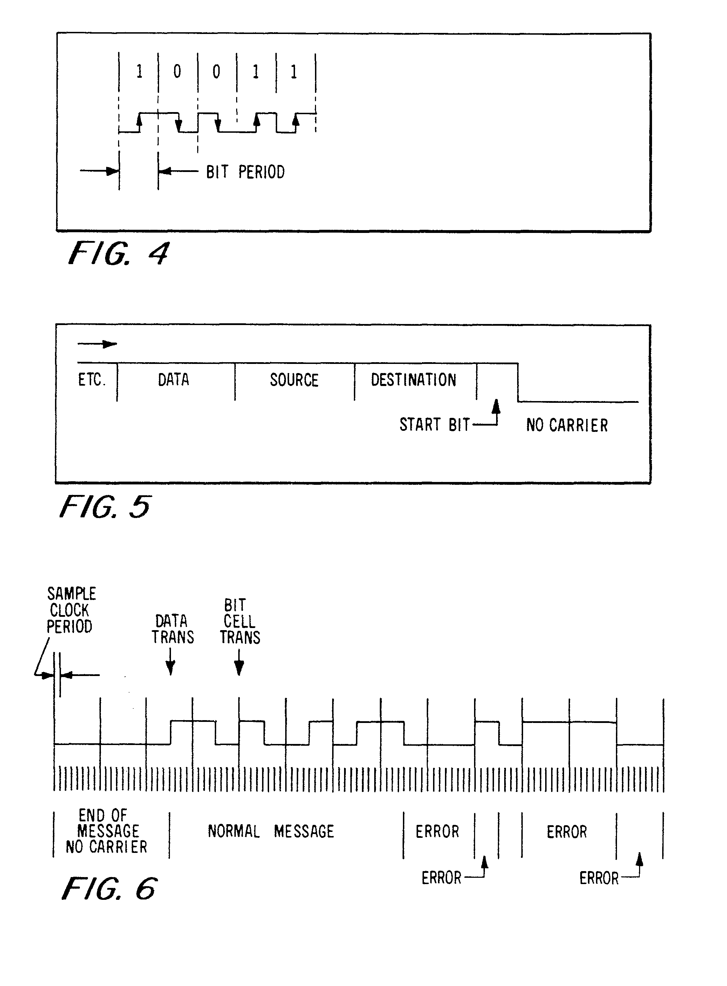

In regards to phase -encoding, messages on the shared line 70 are phase encoded in a technique similar to that used in disk recording. The intelligence is contained in the transition from one logic level to the other: a 'down' transition is a zero, and an 'up' transition a 1. As shown in Fig. 4 , transitions occur approximately in the middle of the bit period. Moreover, to get the signal at a proper level for the next bit transition, a bit-cell transition may take place near the bit-period boundary as in the bit-cell transition between data bits zero and zero or 1 and 1. Phase encoding is advantageous in a distributed system where each station 105-1 is running on its own clock module 85, because the method accommodates broad tolerance variations between the periods of the separate clocks. The present method of synchronization in relation to the start bit transition makes a separate strobe line unnecessary.

In regards to message format, a message follows a period of no carrier on the shared line 70. It consists of a single start bit, followed by the destination   address byte, source address byte, and data bytes as shown in Fig. 5 . The message is concluded by two CRC bytes, followed by no carrier , indicating the message   is over and the line 70 is available for use.

In regards to phase - decoding, as shown in Fig. 6, the phase decoder interprets the contents of the share line in accordance with the following considerations:  first, a period of 13 or more sample clocks at the low levels  interpreted as no carrier  or end of message; secondly, the start bit, which is a transition  from the low level to the high level, is identified  as the first bit transition,  and sample clocks are categorized beginning at this transition,  in the process  of   decoding the rest of the message; thirdly, in a series of bit cells having a  nominal timing there are 8 sample clocks in a full bit cell and 4 sample clocks for sample in a half-bit cell, and therefore the line would normally be low either four or eight sample clocks and would normally be high either four or eight sample clocks. However, to allow for clock  tolerance differences between the transmitter 40 and the receiver 35 , a half-bit cell of three to five sample clocks, and a full-bit cell of six to ten bit sample clocks are considered acceptable; fourthly, on this basis the  occurrence of a low   or   high   level   for   less   than   twelve consecutive  sample clocks periods is decoded as  a collision; fifthly, a full-bit cell that falls between the bit cell  transition  is decoded as a collision ; and sixthly, a high level  of thirteen or more sample clock periods is decoded as a jam.

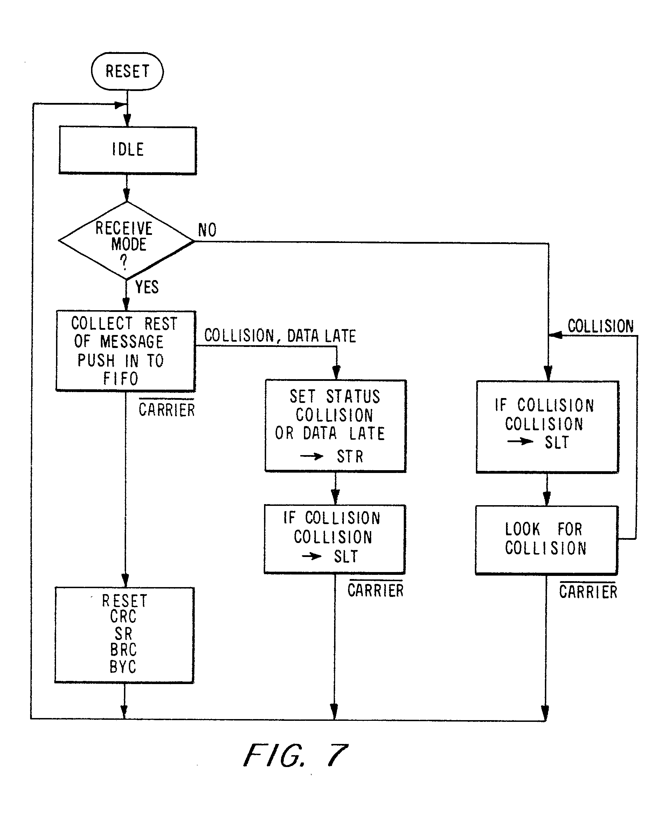

In regards to the  shared line receiver 35, a shared line receiver 35 accepts  phase encoded bits serially from the shared line 70 through the phase decoder  1435 and data sync 1440  and passes them down through a series of shift  registers 1430-1 through 3 as shown in block diagram of Fig. 2, to the input buffer  1445, which is available for transfer in  parallel to the FIFO buffer (not shown) of the IOCR 37 of Fig. 3.  Fig. 7 is operative to give a functional flow of the shared line receiver 35 operation.

In regards to the phase decoder 1435, the phase decoder 35 converts the phase transition  into a series of logic signals which can be analyzed to recognize  message start , carrier, collision detect , and data. The start logic 1450 recognizes the zero  to one transition  of the start bit and informs the program logic array (PLA) 1455 which serves as

0051960

the central controller for the SLR macro 35. Carrier detector 1460 recognizes the presence of a carrier on the shared line 70 and informs the SLT 40 and the PLA 1455. Collision detector 1465 recognizes the presence of more than one transmission on the line 70 and informs the SLT 40 and PLA 1455.

In regards to the address recognition 1470, the decoded data is fed serially to shift register one 1430-1 and the CRC logic 1475. The first byte of the message, which contains the destination addresses available in the first register 1430-1 , is transferred to the address recognition 1470 and compared in a compare logic 1485 and the SLR's 35 identification address which is contained in the identification register 1480. The identification address is obtained via the data bus 400 from the IOCR 37. If the addresses match, the PLA 1455 is informed and the control logic 1480 is set to receive the entire message. Similarily, if the destination address is zero, (broadcast mode), or the promiscuous mode is set, the PLA logic 1455 arranges to receive the entire message. If the addresses fails to match, the message is not passed through the IOCR 37, so as to avoid occupying the stations 105-1 memory 15 and processor 10 unnecessarily.

In regards to the shift register 1430-1 to 1430-3, after address match, the data are shifted serially from shift register 1 (14301) into shift register 2 (1430-2) and then into shift register 3 (1430-3). Three registers 1430-1 through 1430-3 are needed so that CRC bits contained in the final two bytes of the message will not be passed to the IOCR 37. At the time that line 70 goes quiet, indicating the end of the message, the two CRC bytes are in shift register one (1430-1) and shift register 2 (1430-2) , while the final byte of the message as such is in shift register three (1430-3).

In regards to the cyclic redundancy check (CRC) checker, 1475, the CRC checker 1475 processes all the bits in the incoming message. If no error is detected, it informs the PLA 1455. If an error is detected, a PLA output sets the CRC status bit . The CRC checker 1475 detects errors in accordance with the polynominal $X^{16}$ plus $X^{15}$ plus $X^2$ plus 1.

In regards to the input buffer (IB) 1445, when the input buffer 1445 is full and the IOC FIFO buffer (not as shown) of the IOCR 37 of Fig 3 is not full, the byte in the input buffer for 1445 is written to the FIFO

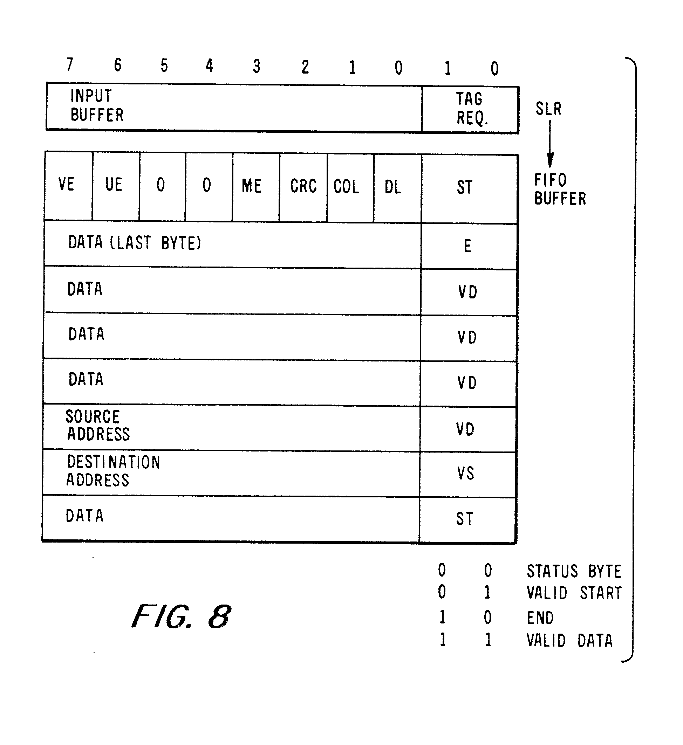

buffer under the direction of FIFO interface control 1495. Each byte transferred is identified by a two bit tag, as shown in Fig. 8. The tags indicate whether a byte is the first one of a message ( valid start), data within the message (valid data) or the last byte of data ( end) stored in the two bit tag register 1445A of the input buffer 1445.

In regards to status, following the last byte of the message the status of the message is transferred to the FIFO buffer of the IO CR 37, from a status register to be described infra in the SLR 35. The accompanying tag indicates status. The status byte shown in Fig. 8 reports the following conditions: VE indicates valid end, UE indicates unusual end, ME indicates message end, CRC indicates CRC error, COL indicates Collision, and DL indicates data late. Valid end signifies that CRC error, Collision, and Data Late did not occur . Unusual end signifies that one or more of these conditions did occur. Message end is the end tag on a message. It indicates that the last CCB of a chain was completed. ME equals zero, indicating that the message was aborted. In regards to the mode in register 1500, the mode register obtains two mode bits via the data bus 400 on the IOCR 37. One is half-speed mode, applied to the timing generator 1405, the other is a promiscuous mode (PM) , applied to the address compare logic 1485.

In regards to the IOCR control bus decode 1510, a number of signals from the IOCR 37, collectively called the control bus 485, are decoded by a PLA on the SLR 35 to provide the same which performs the following function: first, load the identification register 1480; secondly, set and clear the macro reset logic 1510; thirdly, set and clear the macro ON logic 1515; fourthly, load and reset the mode register 1500.

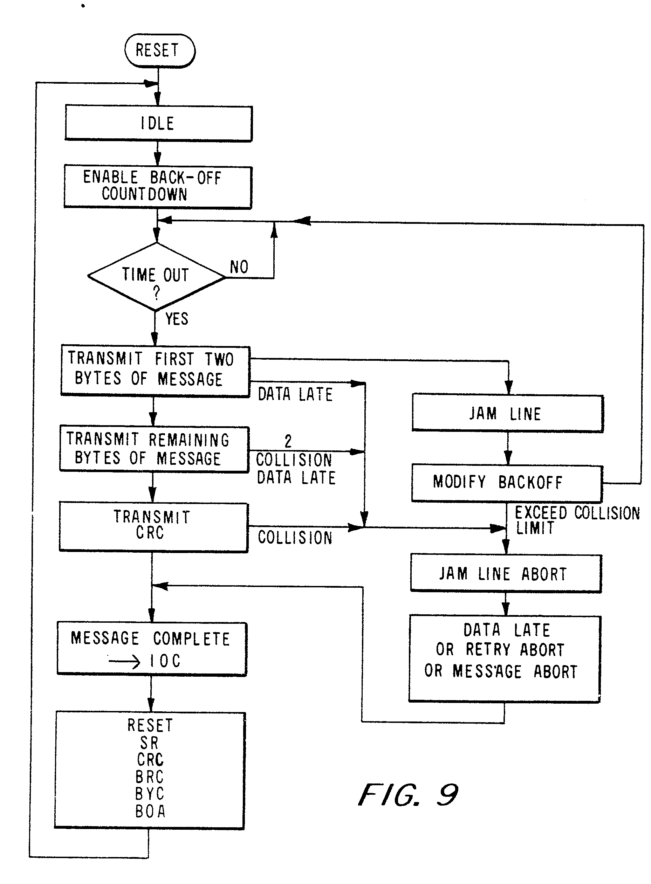

In regards to the shared line transmitter 40, the shared line transmitter obtains byte-parallel data from the IOCT 42, sends it through the output buffer (OB) 1525 to be loaded into one of the three registers 1520-1 to 3 shown in Fig. 1, shifts the byte to serial form, and phase encodes it in a phase encoder 1530 for the shared line 70. Fig. 9 is operative to give a functional view of the shared line transmitter 40 operation.

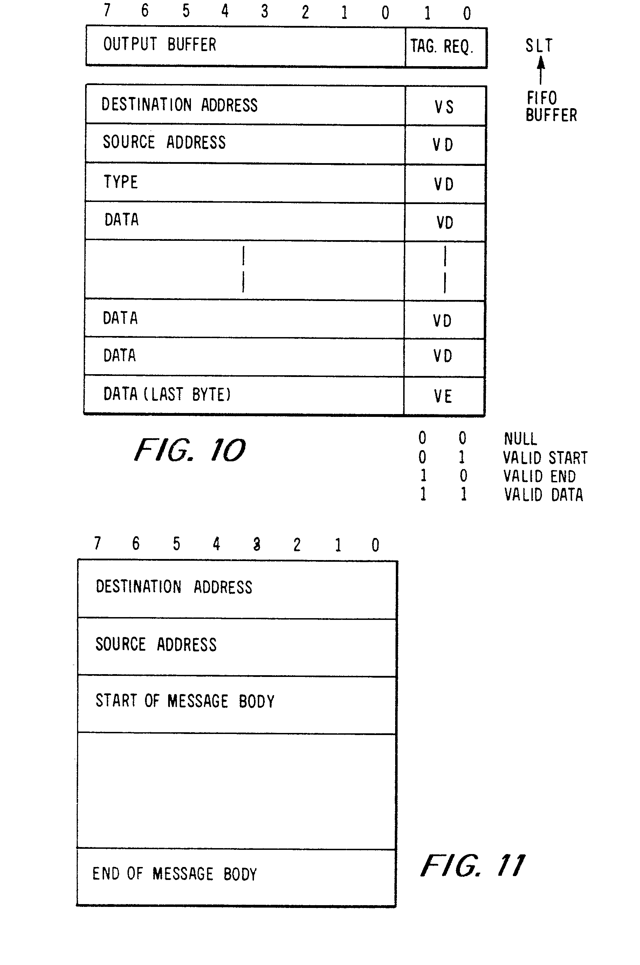

In regards to output buffer (OB) 1525, when the output buffer 1525 is empty and the FIFO buffer (not shown) of the IOCT 42 is not empty, the byte on top of theFIFO buffer is transferred into the output buffer 1525 under the direction of theFIFO interface control logic 1535. Each byte transferred is identified by two bit tag of the tag register 1525 A of the OB 1525 as shown in Fig. 10. Tags indicates whether a byte is first one of a message (valid start), data within the message (valid data), or the last byte (valid end).

In regards to the registers 1520-1 to 3, when a shift register SR3 1520-3 is available, the byte is transferred directly from the output buffer (OB) 1525 to it. Registers SR1 and SR2 1520-1 and 2 are used when the shift register 1520-3 is already occupied, for providing a small buffer within the macro 40,

In regards to the CRC generator 40, the CRC generator 1540 processes all bits in the outgoing message in accordance with the polynonial $X^{16}$ plus $X^{15}$ plus $X^2$ plus 1. At the conclusion of the message, it appends two CRC check bytes to it.

In regards to the phase encoder 1530, it converts the serial logic bits from the shift register 1520-3 (and two bytes from the CRC generator 1540) to phase encoded forms for the shared line 70. It places a start bit in front of the message. After the CRC byte, it permits the line 70 to go to the low level, indicating the end of the message. During a transmission, if the SLR 35 detects a collison, the phase encoder 1530 aborts its transmission and jams the line 70.

In regards to the backoff algorithm 1545, in the event of a collison, the back off algorithm 1545 generates a psuedo-random number indicating a period of time that the SLT 40 is to wait before attempting to retransmit its message. In the macro 40, the backoff algorithm 1545 is implemented in hardware which consists essentially of a collision counter 1780,a free-running couner 1755 , a countdown counter 1765 and a count down clock 1770 all described infra and as shown in Fig. 26A. The collision counter 1780 counts the number of collisions up to eight in the embodiment. The free-running counter 1755 generates, as described infra, a suitable psuedo-random number. Afer one collision, the free-running counter 1755 transfers one bit (which may be randomly either zero or one) to the countdown counter 1765. The counter 1765 counts down, measuring the backoff period. After two collisions, the free-running counter 1755 transfers two bits to the countdown counter 1765 thus doubling the average size or word length of the number transferred in doubling the countdown period. The actual countdown of the two bits remains random and so on up to eight bits or the capacity of the count as described. The count down clock 1770 clocks the supra operation.

In regards to the status register 1550, after termination of a transmission, the status register 1550 accumulates information concerning the circumstances under which the transmission ended and makes this status available to the IOCT 42.

In regards to the mode register ( MR) 1555, the mode register contains two mode bits from the data bus 400 from the IOCT 42 One is half speed mode, appliedto the timing generator 1560 , the other is backoff disable, applied to the back off algorithm logic 1545.

In regards to the IOC control bus decode 1565, the number of signals for the IOCT 42, collectively called the control bus 485, are decoded by a decode PLA within the IOC decode 1565 to provide signals which perform the following functions: first, set and clear the reset logic 1570; set and clear the macro on logic 1577; and load and reset the mode register 1555.

In regards to the interfaces, both the SLR 35 and the SLT 40 interface to the shared line 70 on the one side and to the input/output controller microcoded for reception or transmission on the other side 37, and 42. In addition, there is an interface between the SLR 35, and the SLT 40 as will be described infra.

The SLR- to SLT interface consist of two signals from the SLR to the SLT including ERR signifying error indicating a collision, and NENDF(signifying not end flag)indicating that carrier is present.

In regards to the SLR /IOCR interface 35 , 37, the signals between the SLR macros 35 and the IOCR macro 37 are listed infra. The FWD0-7 from the input buffer 1445 is directed to the IOCR 37 to function as a hold for eight bits of message address, data or status pending tranferred to the buffer (not shown) of the IOCR 37 of Fig. 2. The FWDTAG from the tag register 1445A is directed to the IOCR 37 for functioning to hold two tag bits pending transfer to the buffer of the IOCR 37. The MSO known as mode select from the IOCR37 functions to be termed the IOC control bus 485 for the signals are decoded on the SLR 35 to provide load, set or clear signals for functions, such as mode register 1500 identification register 1480 macro

0051960

reset, 1510 and macro on 1515 on . It will be noted that Act 0-4, known as the action bus 485D and TA, TB, known as the timing signal 485D, all directed to the SLR 35 act to function as the MSO. The DB0-7 known as the data bus 400 is directed to the SLR 35 and functions to transfer mode bits to the mode register 1500 and identification address to the ID register 1480. The FIFOF 460D known as the FIFO buffer full is directed to the SLR 35 and notifies FIFO interface control 1495 that FIFO buffer is full. The FIFOWR 460C known as the FIFO buffer write is directed to the IOCR 37 and functions when FIFO buffer is not full, writes contents of input buffer 1445 into FIFO buffer of IOCR37. The FIFOR known as the fifo buffer read, is grounded on SLR 35. The PH1, 2, 3, known as clocks to the SLR35 serves to function as the basic timing for the logic of SLR 35 logic. The CLKIN 485D known as clock in to the SLR 35 also functions as a basic timer for the SLR 35 logic. The SYSRSTSYNC 485B known as system reset sync to the SLR 35 functions to synchronize SLR 35 reset .

In regards to the SLT/IOCT interface, the signals between the SLT 40 and IOCT macro 42 are given infra. The FRD0-7 400 to the output buffer is directed to the SLT 40 and functions to hold eight bits of message address or data after transfer from the FIFO buffer of the IOCT 42. The FRDTAG 400 to the tag register 1525A is directed to the SLT 40 and functions as two tag registers for transfers from the FIFO buffer. The MSO known as the mode select 485 includes, the ACT0-1, TA, and TB, all connected to the SLT 40, functions to control the IOC bus signals provided on the SLT 40 to provide load, set or clear signals for functions such as mode register 1555, macro reset, 1570 and macro 1575. A DB0-400 7 is directed to SLT 40 functions to be used to transfer mode bits to the mode register 1555. The FIFOE (460B) known as the fifo buffer empty is directed to the SLT 40 and notifies the FIFO interface control logic 1535 that the FIFO buffer of IOCT 42 is empty. FIFORD (460A) is directed to the IOCT 42 when the FIFO buffer of the IOCT42 is empty to read contents of FIFO buffer to output buffer 1525. The PH1-2-3 (485D) functions as basic timing for SLT 40 logic. SYSRSTSYNC 40 recessing to the SLT 40 functions to synchronize the SLT 40 reset period. STR2 to the SLT 40 functions to synchronize the SLT 40 reset to the SLT 40 functions to synchronize the SLT 40 reset period. STR2 (475A) known as message abort to the IOCT42, functions as a status bit at termination. STR1 (475A), known as a retry abort to IOCT42, functions as a status bit at termination. STRO, known as data late to the IOCT 42, functions as a status bit at termination. MC 475A, known as message complete to the IOCT 42, functions as a status bit at termination.

In regards to the operation , each operation of the SLR 35 or SLT 40 is determined by a command placed in a command control block. ( CCB) by the processor 10 responsible for the macro 35/40. The command control block (CCB) is tranferred from a RAM portion of the memory 15 to the IOCR or IOCT 37/42 respectively and is there implemented by means of signal to the IOCR/SLR (37/35) or IOCT /SLT (42/40) interfaces. Before a message transfer operation, the identification address in the SLR 35, maybe modified as mode of operation of the SLR 35 or SLT 40, should be established. Following the message transfer operation , the SLR 35 or SLT 40 returns status information to its IOCR or IOCT 37/42 which makes it available to the processor 10.

In regards to the message format, all messages on the shared line 70 utilize a common format as shown in Fig. 11. This format is set up at the starting location in the RAM portion of the memory 15 pointed to by the memory address in the command control block. A destination of all zeros is interpreted by the SLR 35 to identify a broadcast message and is received by all SLRs 35 on the shared line 70. As a matter of information SLT 40 adds a single start bit in front of the destination address byte and appends to CRC bytes after the last byte of the message. However, the start bit and the CRC bytes are stripped from the messages by the SLR 35 before the message is passed on to the FIFObuffer (not shown) of the IOCR 37.

In regards to protocol, the arrangement of information in the body of the message is called protocol, and is not dictated by the SLR and SLT macro 35/40. Protocol is defined by the system software . As an example, protocol may require a transmitter 40 to receive and acknowledge on receiver 35 that a message has been received, also, the transmitter 40 must automatically re - transmit it.

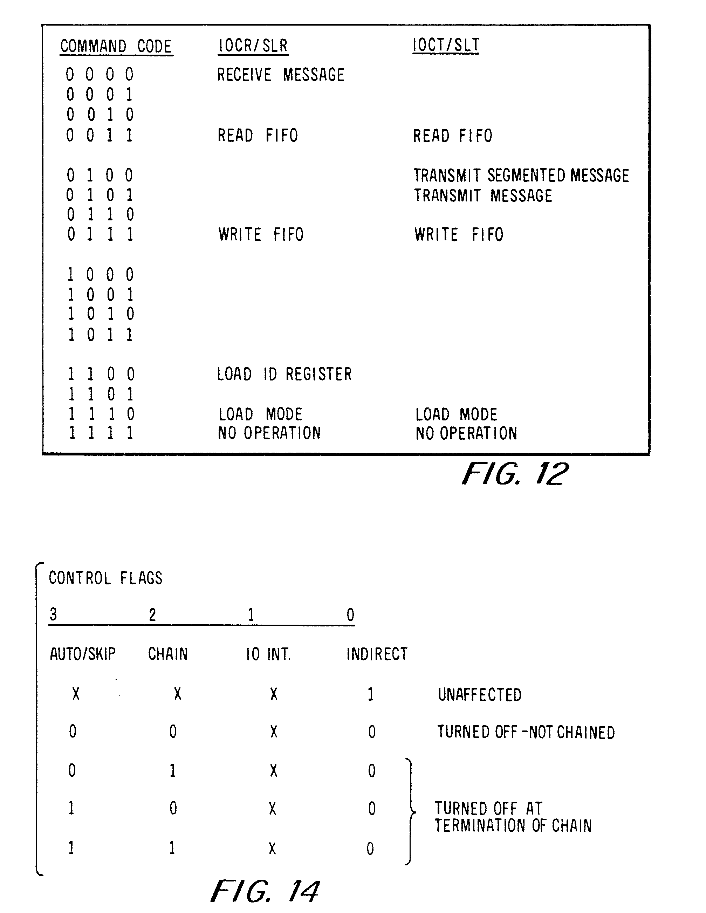

In regards to commands, two commands are recognized only by the IOCR 37 to implement the IOCR/SLR (37/35) interface signal . Two commands are recognized by the SLT 40. Four commands are utilized by both the IOCR 37 and the IOCT 42 as shown in Fig. 12.

. In regards to IOCR/SLR 37/35 commands , the received message (0000) causes the SLR 35 to receive a message from the shared line 70 bearing a destination or broadcast address and passed on to the IOCR 37 to the FIFO buffer (not shown) of the IOCR 37. The load identification register ( 1100) causes the contents of the location pointed to by the memory after receiving the CCB to be transferred to the identification address register 1480 on the SLR 35.

In regards to IOCT/SLT commands, transmit messages (0101) cause the SLT 40 to transmit a message packet of 256 bytes or less, that is a message capable of being specified by a single CCB. In the case of a chain CCB , this command must be contained in a last CCB chain. The transmitted signal mesage (0100) cause SLT 40 to transmit a single message packet data supplied by a chain CCB. A chaining may be normal or automatic. The data from memory 15 CCB are added continuously to the data from the previous area of the memory 15.

In regards to common commands, the read/FIFO (0011) reads number of bytes plus a CCB byte count from the buffer of the addressed IOCR 37 to the starting location of the memory 15 by the CCB memory address field of subsequent memory locations. If the number in the byte comes to 16 or less (the FIFO buffer contains 16 locations) that number of bytes is read. If the number in the byte count field is greater than 16, the 16 bytes in the buffer are moved in a wraparound manner until the specified number of bytes is removed from the buffer to the memory 15. In conjunction with the write FIFO command, it can be used to effect memory to memory block transfers.

The write FIFO (0111) command writes the number of bytes specified by the CCB byte count field from the starting memory location in memory 15 by the CCB memory address field in a subsequent memory location to the fifo buffer of the addressed IOCT 42. If the number in the byte count field is 16 or less, that number of bytes is written. If the number in the byte count is greater than 16 , the data are moved into the 16 bytes buffer in a wrap around manner until a specified number of bytes is moved from memory 15 to the buffer in the IOCT 42. In conjunction with the read FIFO command, this command can be used to effect memory to memory block transfers.

The load mode (1110) command, loads contents of the location pointed to by the CCB memory address fields to the mode register 1500/1550 described in associated SLR 35 or SLT 40 as diagrammed in Fig. 1 and 2. The RAM location of the memory 15 contains a pertinent mode bits (as shown infra). First, the promiscuous mode ( SLR 35 only) a one in a bit 2 position causes the SLR 35 to intercept all messages on the shared line 70. This mode may be employed to permit a designated SLR 35 to acquire all messages for record keeping. When the bit is zero, the SLR 35 accepts only messages addressed to it or broadcast messages. Secondly, half - speed mode (both SLR35/SLT40), a one in a bit one position causes SLR35 or SLT 40 addressed to run at half speed. When the bit is zero, the SLR 35 or SLT 40 runs at full speed. Speed selection is a system ; and thirdly, backoff disenable mode (SLT 40 Only), a one in a bit zero position causes the backoff algorithm in the SLT 40 to be disenable. This condition may be employed if the backoff algorithm is implemented at the software level. When this bit is zero, the backoff algorithm is enabled.

In regards to the No-Operation (1111) command, it specifies no operation as most commonly used as the indirect flag of the CCB

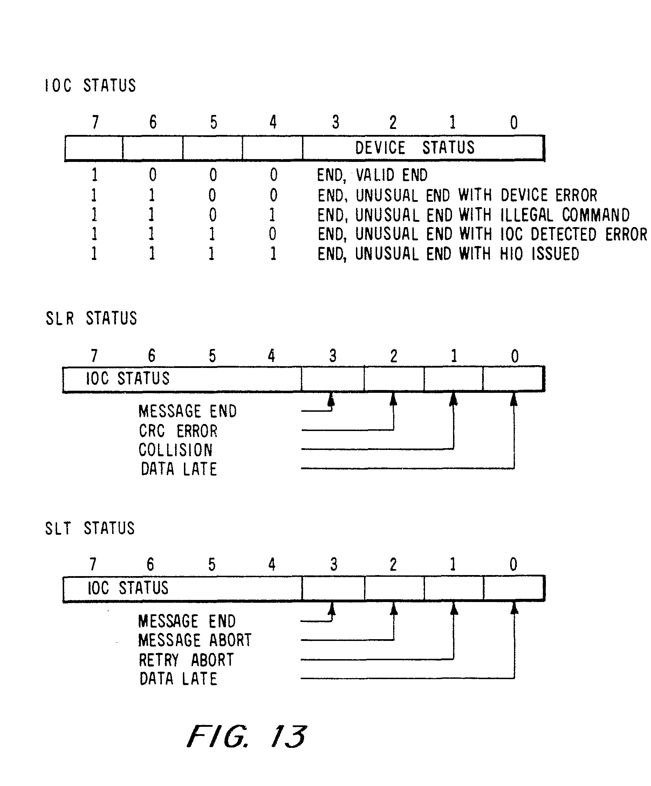

In regard to the status, both SLR 35 and SLT 40 return four bits of status information through the IOCR 37 or the IOCT 42 at the termination of the IO operation defined by the command. The four bits are stored in the least-significant nibble of the status byte as shown in Fig. 13. This byte is available to the processor 10.

In regards to the status - SLR 40 or 35, the data late reports a data overrun condition in the message being received. A collision reports detection of the collision or noise in the message being received. The CRC error reports a CRC error in the message received Because the CRC check is performed at the end of the message, presence of the status bit means that the entire message has been received. The message end reports that a complete message was received and in association with CRC error defines the circumstances such as message jam equals one CRC of zero indicates typical end, and message one and CRC zero indicates unusual ends.

In regards to status - SLT 40, data late reports a bit or overrun condition in the message transmission. Retry abort reports that the backoff algorithm has been exhausted and message transmission has been aborted. However, if the backoff is disenabled mode bit is one the status bit is always one. Message abort reports that message transmission is aborted by the SLT 40 because the associated SLR 35 had detected a collision or noise . The SLT 40 does not retry to transmit. It is up to the software to take the next step. The message end reports that transmission of the message has ended signifying that a single CCB or the last CCB of a chain has been completed. If the transmission is aborted , the end message is zero.

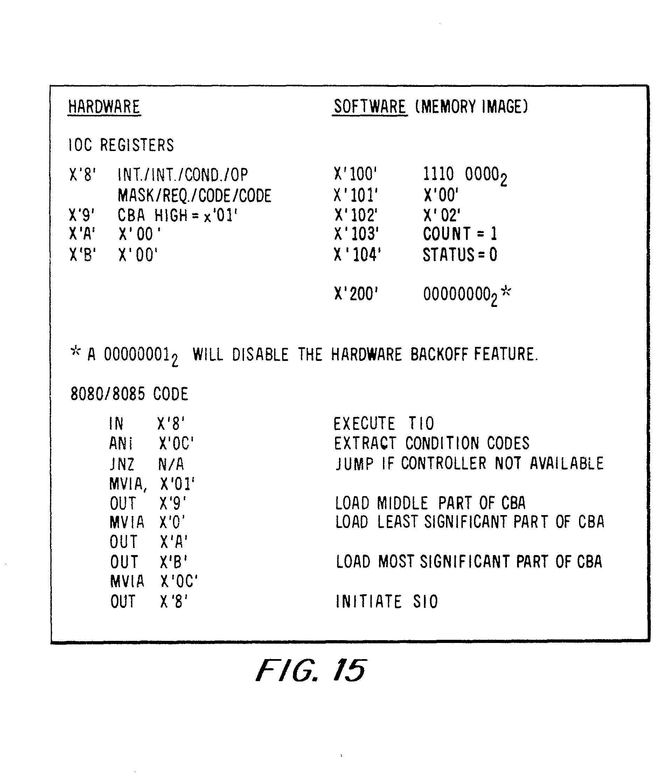

In regards to status under flag setting, the setting of the control flags and CCB determine whether SLR35 and the SLT 40 will continue to be turned on or off at the termination of an idle operation. The combinations of flag reduce to three sets of conditions as summarized in Fig. 14.

In regards to unaffected, if the indirect flag of a CCB is on (XXX1), the SLR 35 and SLT 40 continue to be turned on, permitting the CCB which is the memory addresss of the indirect points to be processed without pause. The presence of the indirect flag overrides the states of the other flags.

In regards to turned - on - not chains, if the CCB is not chained (00X0) , the SLR 35 and SLT 40 are turned off at the termination of the I/O operations. In regards to the turned-off chain, if the CCB is one of a chain, either normal or automatic ( 01X0, 10X0, 11X0), the SLR 35 and SLT 40 stay on until the last CCB is processed, and the IO operation is terminated. At this time the SLR 35 and SLT 40 are turned off. In the event that the chain terminates earlier, because of an unusual end , the chain is considered to be broken and the SLR 35 and SLT 40 are turned off.

In regards to the byte count, the byte counter 1590 and the SLR 35 or 1585 in the SLT 40 is capable of counting the transfer of up to 256 bytes. An initial byte count of zero is interpreted as 256 bytes. In regards to the SLR 35 byte count , for a message reception the byte count in the CCB is normally set to zero , cauasing the IOCR 37 byte counter 1590 to be inialized as zero count. As the message is received, IOCR 37 byte counter 1590 increments. At the end of the message the byte counter 1590 contains and reports the number of bytes received. In regards to SLT 40 byte count, for message transmission the byte count in the CCB is normally set to indicate the message length and bytes. As the message is transmitted, the IOCT 42 byte counter 1585 decrements. At the completion of message transmission, the byte counter 1585 should have reached a zero count.

In regards to identification address, each SLR 35 contains an eight bit identification address register 1480. This address serves as a destination address for messages directed to the SLR 35. It is a source address for messages transmitted by the associated SLT 40. In regards to the physical address therefor, system reset causes the identification address of all SLRs 35 to be initialized to the all ones state ( XFF). It is up to the program contained in the system level of the RAM portion of the memory 15 to reinitialize a SLR 35 identification register 1480 to an address, unique in the sytem, assigned as a system parameter. This address will serve as a physical address of the SLR 35. However, it may be physically modified or it may be modified by software.

In regards to the typical operation, on system reset the following conditions obtain including: first, identification address is equal to XFF; secondly, half-speed mode equals 0 (full speed); thirdly, promiscuous mode equals zero ( not accepting all messages); fourthly, backoff disable mode equals one (backoff algorithm not operational). A typical sequence of operation might be as follows including ; first, load unique physical identification address; secondly, load mode bits , promiscuous mode or half speed mode, for receiving; thirdly , load mode bits backoff disable mode or half speed mode, for transmitting ; fourthly, command SLR 35 to receive message, turning it on and enabling it to monitor the shared line 70; fifthly command SLT 40 to transmit message , when one is available; and sixthly, when reception or transmission of a message has been terminated, read status byte and analyze it to determine its next command.

In regards to programming, examples are presented _infra_ to help to exemplify the above in the form of typical operation the information contain in the specification.

In regards to backoff algorithm 1545, assume that the CCB has previously been built at locations x100 as shown in Fig. 15. the SLT 40 is assumed to be connected to IOCT 42.

In regards to the promiscuous mode, enable/disenable promiscuous mode in SLR 35 is assumed. In this example , same as above except the    X200 would contain 00000100 subscript 2.

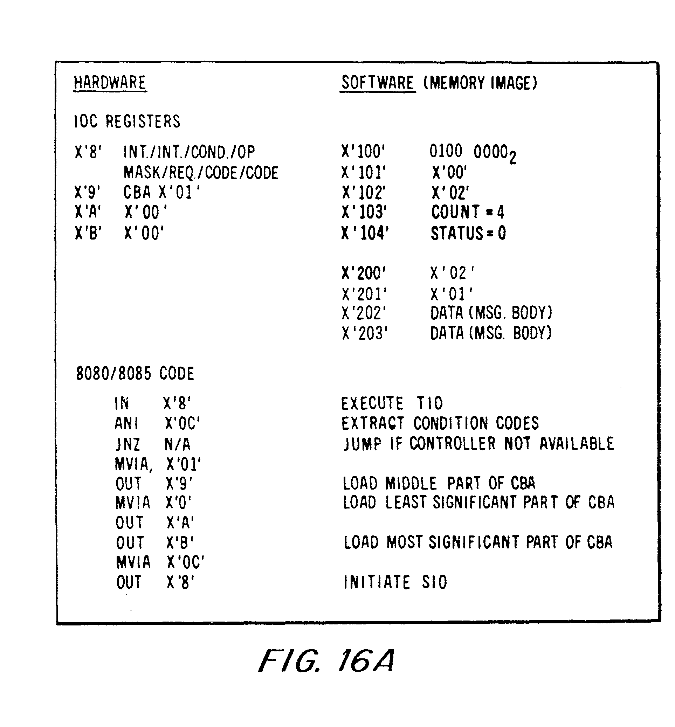

In regards to message transmission, simple message transmission of a four byte message with the interrupt flag set is assumed. It would also be assumed that the CCB has been previously built at location X100. It will be further assumed the  message  to be located at X200, the destination address X0 2 and the source address is X01 and the SLT 40 is connected to IOCT 42, as shown in Fig. 16 .

In regards to message received, for a simple message receive using the  interrupt feature  where software knows the maximum size but the specific masses  size.  It will also be assumed  that the same conditions as given supra except the SLR 35  is connected to IOC R 37 at location 200 is the starting address of a message buffer large enough to accommodate the largest message size.

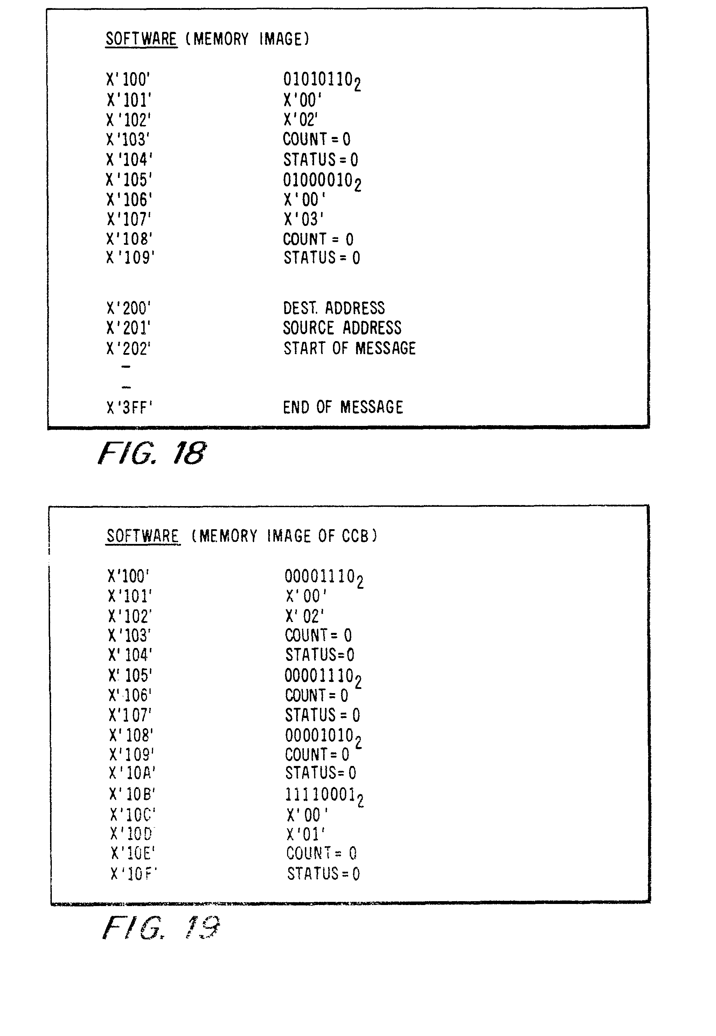

In regards to message transmit , this will be exemplary of a message transmit using a chaining  and interrupt feature.  Further, for this example, it will be assumed that the message will be  512 bytes long and must be chained.  It will be further assumed  that the CCB has been previously built by the software at location  X100 and the message to be stored in contiguous memory  of memory 15 starting at location X200 as given in Fig. 18.

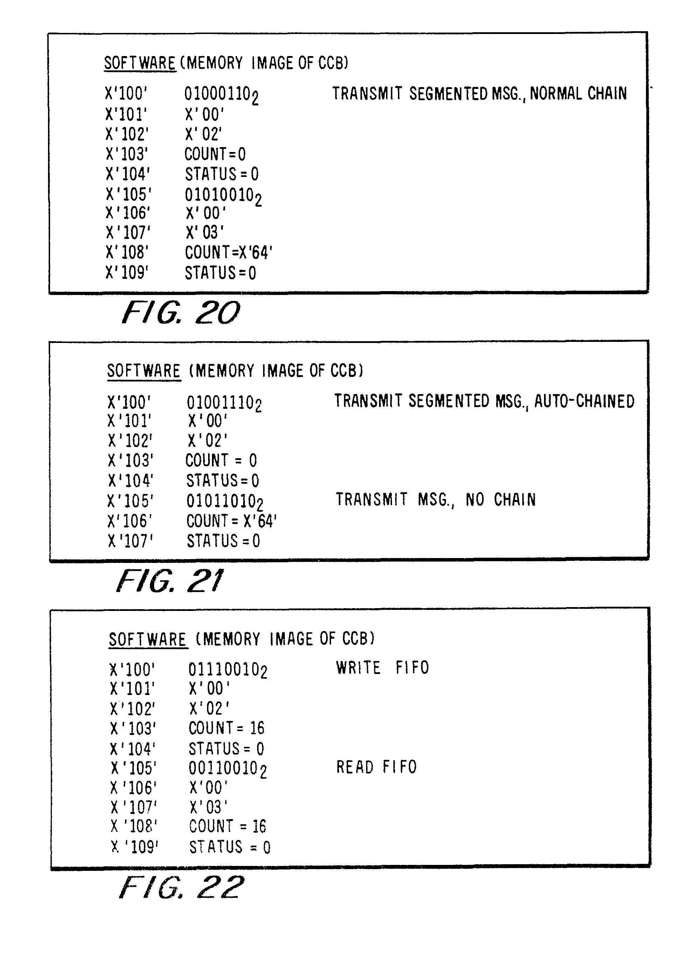

In regards to  ring buffer, an exemplary example of creating a simple ring buffer to receive incoming messages is given in Fig. 19 in a contiguous area of the memory 15.

In regards to  transmit  message chain, the  example  of a message transmit using the  transmit message and transmit segmented message command.  A 356 byte message will be transmitted using normal chaining.  Assume the CCB to have been previously built by software at location X100 and the message to be stored in contiguous memory of memory 15 starting at X200 as shown in Fig. 20.

In regards to. transmit message auto chain, this is analogous to the supra example, but uses auto - chaining as shown in Fig. 21.

In regards to write / read FIFO, it will be assumed that it uses the write and read FIFO command to move 16 bytes of data from location X200 to X300.  It would be further assumed that the CCB is to   be

located at X100 as shown in Fig. 22.

The SLT 40 Control Logic 1600 as shown generally in Fig. 1 and specifically in Fig. 23A and 23, includes a programmed logic array (PLA) 1605, an shift (S) register 1610 and a COL/CAR module 1615. The PLA 1605 is operative to receive inputs internally including 50-3 and 50-3 signals on line set 1620 from the S register 1610 and CAR/COL and CAR/COL Prime signals on line set 1625 from the COL-CAR module 1615. External inputs to the SLT Control Logic 1600 include TGRVS/VD/VE and $VS^1/VD^1/VE^1$ signals on line set 1630 from the TGR module 1525A (which is part of the OB1525 BYCO-2 and $0^1$ $2^1$ signals on line set 1635 from the Byte Counter 1585, BRC7 and 7' signals on line set 1640 from the bit ring counter 1645, BOTO and 0' signals on line set 1650 from the back - off Algorithm logic 1545 OBF & F' signals on line set 1655 from theFIFO interface control 1535, COLOF and F' signals on line set 1650 from the back - off Algorithm logic 1535, BOD and D' signals on line set 1665 from the MR1555, and ON signal on line set 1670 from the ON 1575. For the PLA 1605, operative internal outputs include 550-3 on line set 1675 to the S register 1610. External outputs for the PLA 1605, operative internal outputs include 550-3 on line set 1675 to the DISPE/SETJL/CRCEN/ENPE signals on line set 1680 to the phase encoder 1530, MASTR'/RASTR'/DLSTR' on line set 1682 to the STR 1690 SETMC'/LDR1' on line set 1685 to status register or MC 1550, LDR1' and 2' on line set 1695 to SR1 (1520-2) and SR2 (1520-1), ENPE'/LR2SR'/CORST' on line set 1700 to SR (1520-3), RSTOBF' on line set 1705 to FIFO Interface Control (1535) RSTCRC on line set 1710 to CRC Generator 1540, ENBO' on line set 1715 to Back - Off Algorithm Logic 1545, INCCC' and CORST' on line set 1715 to Back - off Algorithm Logic 1545, INCBYC' and RSTBYC' on line set 1725 to Byte Counter 1585, and RSTBRC' on line set 1730 to Bit Ring Counter 1645.

In Fig. 23, the asterisk denotes pull - up transistors for plus five volt power supplies, and the one indicates an invertor.

The SLT Control Logic 1600, as shown generally in Fig. 1 and 23A and specifically in Fig. 35, includes a S register 1610 having four SLT registers operative to be paralled inputed by 550-3 line set 1675 from the PLA 1605 and parallel, outputed 50-2 on line set 1620 also to PLA 1605. Reset is provided by SLTRRST' on line 1735 from SLRTRST module 1570.

The SLT Control logic 1600, as shown generally in Fig. 1 and 23A, and specifically in Fig. 37B, includes a COL/CAR Logic Module 1615 operative to have ENF' and ERR inputs signals on line set 1740 from SLR 35 and CAR and COL output signals on line set 1625 to the PLA 1605.

Phase 1-3 signals are received on bus 485D from CLK 85 of SCC 5. T1-2 and T1-2' signals are received on line set 1745 from the timing generator 1560. As such, because of their routine use throughout the infra description, they will not be mentioned specifically, but will be shown in the figures.

The bit ring counter 1750 as shown in Figures 1 and 24 includes serially connected multiple shift - latch-transfer (SLT) registers receiving S1 logic inputs form ENDY' on line set 1750 from the phase encoder 1530 and 52 logic inputs from RSTBRC' on line set 1730 from the Control Logic 1600 and SLTRRST' on line set 1725 from the SLTRRST module 1570. The Q output is NOR'ED and PP out as BRC7 on line set 1640 to the control logic 1600. It will be noted that PP in the figures indicate push-pull amplifier.

The byte counter 1584 as shown in Figures 1 and 25, includes a serially connected multiple SLT register receiving S1 logic inputs as INCBYC' or line set 1725 from the control logic 1600 and S2 logic inputs from RSTBYC' on line set 1725 from control logic 1600 and SLTRRST' on line set 1725 from the phase encoder 1530. The Q output is PP at each stage as BYCO-2 on line set 1635 to the control logic 1600.

In regards to the Back-off Algorithm Logic 1545 shown generally in Fig. 1 and specifically in Fig. 26A, there is a free run counter 1755 having an SLTRRST' logic input from the SLTRRST module 1570 and FRCQX' outputting on line set 1760 to the Countdown Counter 1765. There is also, a Count Down Clock 1770 with a logic input SLTRRST from the SLTRRST module 1570 and an output CDCCLK signal on line 1775 to the Count Down Counter 1765. In addition, there is a collision counter 1780 receiving logic inputs CORST' and INCCC' on line set 1715 from Control Logic 1600 and SLTRRST' on line set 1725 from the SLTRRST module 1570 for outputting as CCQX' on line set 1785 to the Count Down Counter 1765 and as COLOF and COLOF signals on line set 1650 to the control logic 1600. The Count Down Counter 1765 also receives logic input signals DISBO' and 'ENBO' on line set 1715 and SLTRRST' on line set 1725 from the SLTRRST module 1570 and logic outputs on line set 1650 as BOTO and BOTO' signals to the control logic 1600.

The Count Down Clock 1770 shown in Figure 26 and 26A of the back - off Algorithm logic (BOAL) 1545 includes serially connected multiple SLT register having S1 and S2 logic inputs provided by the SLTRRST' signal on line set 1725 from the SLTRRST module 1575 and operative to logically output as a CDCCLU' signal on line set 1775 to the Count Down Counter 1765 in the BOAL 1545.

The Collision Counter 1780 shown in Fig. 26A and 27 of the BOAL 1545 includes serially connected multiple SLT registers receiving S1 logic inputs from INCCC' signals on line set 1715 from Control Logic 1600 and S2 logic inputs from CORST' and SLTRRST' signals on line sets 1715 and 1725 from Control Logic 1600 and SLTRRST module 1570 respectively and logical outputs as CCQ7' signal on line set 1780 to the Count Down Counter 1765, and as a negation thereof, as COLOF signal on line set 1650 to the Control Logic 1600.

The Count Down Counter of the BOAL 1545 includes serially connected multiple SLT registers receiving D1 logic inputs as CCQ07 and 0-7 signals on line set 1785 from collision counter 1780 and as FRCQ0-7 and 0-7 signals on line set 1760 from Even Run Counter 1755 SI logic inputs from ENBO' signals on line set 1715 from the control logic 1600 and S2 logic inputs from CDCCLK signals on line set 1775 from the Count Down Clock 1770, DISBO' and ENBO' signals on line set 1715 from the Control Logic 1600 and a SLTRRST'' signal on line 1725 from the SLTRRST module 1570. The Counter 1765 is operative to logically output as a BOTO signal on line set 1650 to the Control Logic 1600.

The free running counter 1755, as shown in Fig. 1 and 31, includes serially connected multiple SLT registers, operative to logically input at S1 and 2, a SLTRRST' signal on line set 1725 from the SLTRRST module 1570 and logically output from the Q terminal as FRCQ0-7 signals to the Count Down Counter 1765.

The CRC generator 1540, as shown in Figs 4 and 29, includes serially connected multiple SLT registers operative to logically input at the S1 terminal a ENDY' signal on line set 1750 from the phase encoder 1530 and at the 52 terminal a RSTCRC' signal on line set 1710 from the control logic 1600, a SLTRRST' signal on line 1725 from SLTRRST module 1570, a SRQ signal on line set 1790 from the SR3 1520-3, and a ENCRC signal on line set 1775 from the phase encoder 1530 and further operative to logically output as a CRCD signal on line set 1800 to the phase encoder 1530.

The FIFO Interface Control 1535, as shown in Fig. 1 and 30, includes multiple SLT registers, the first SLT 1805-1 and 2 operative to receive at S1 logic input including a FIFOE signal on line set 460 from the IOCT 42 and an ON signal on line set 1670 from the ON module 1575, receive at S31 logic input a SLTRRST' signal is operative to output FIFORD signal on line set 460A to IOC 742 and a FIFORDT signal on line set 1810 to OB1525 and TGR 1525A, SLT 1805-3 is operative to receive a logical S1 input RSTOBF' signal on line set 1795 from control logic 1600, a S31 logic input from SLT 1805-2, and logically output a OBF signal on line 1555 to the control logic 1600. SLT Register 18151 to 3 are operatively serially connected to logically output as ENDY' on line 1750 to SR3 (1520-3), CRC generator (1540) and bit ring counter (1645). The SLT register 1815-4 is operative to logically output as the ENCRC signal on line 1795 to the CRC generator (1540).

In regards to the MC module 1550, as shown in Fig. 1 and 33A, includes, a SLT register operative to receive a S1 logic input from the SETMC signal on line 1685 from the control logic 1600 , S2 logic input from the SLTRRST' signal on line 1725, S3 logic input from the LDRl' signal on line 1685 from control logic 1600 for logic outputing as the MC signal on line 475A to the IOCT 42.

In regards to the STR module 1690, as shown in Fig. 1 and 33B, includes multiple serially connected SLT registers 1820-1 to 3 inlcuding S1 logic inputs for SLT 1820-1 from DLSTR', for SLT 1820-2 from RASTR', for 1820-3 from MASTR' all on line set 1682 from Control Logic 1600, and S2 logic inputs from SLTRRST' on line set 1725 for logical outputting as STR0-2 on line set 475A a respectively to IOCT 42.

In regards to the OB register 1525 having multiple SLT's in parallel, as shown in Fig. 1 and 34, it is operative to receive D1 inputs by FRDO-7 signals on line set 400 from IOCT 42 for outputting as OBQ07 signals on line set 1820 to SR 3 (1520-3), SR2 (1520-2) and S1 (15201) when S1 is sampled by FIFORDT' signals on line set 1810 from theFIFO interface control (1535).

In regards to the SR1 register 1520-3 having multiple SLT's in parallel as shown in Figs. 1 and 34, it is operative to receive OBQO7 signals from the OB 1525, at its D1 input for outputting as R1QO7 signals on line set 1825 to SR3 (1520-3) after receiving an S1 input from LDR1' _signals on line set 1695 from the control logic 1600.

In regards to the SR2 register 1620-1 having multiple SLT's in parallel ., as shown in Fig. 1 and 34, it is operative to receive OBQO7 signals from the OB 1525 at its D1 input for outputting as R2QO-7 signals on line set 1830 to SR3 (1520-3) after receiving an S1 input from LDR2' signals on line set 1695 from the control logic 1600.

In regards to the SR3 registers (1520-3) having multiple SLT's for input in parallel, output in serial as shown in Figs. 1 and 34, it is operative to receive OBQO-7 signal on line set 1820 from OB/1525, R1QO-7 signals on line set 1825 from SR1 (1520-2), R2QO-7 signals on line set 1830 from SR2 (1520-1), for outputting as SRQ on line set 1790 to the CRC generator 1540 and the phase encoder 1530 when controlled to do so by logical inputs thereto including an S1 input by a LR2SR' signal on line set 1700, from control logic 1600 S2 input by an ENPE' signal on line set 1750, from control logic 1600, and a S4 input by CORST" LR2SR', and LOBSR' signals on line set 1700 from control logic 1600.

In regards to the TGR register 1525A, which functionally is part of the OB 1525, as shown in Fig. 1 and 37A, having a pair of parallel SLT's, is operative to receive D1 inputs by FRDTAGO-1 signals on line set 400 from the IOCT 42 for logically outputting as TGRVE/D/S signals _on line set 1530 to control logic 1600 when controlled to do so by a FIFORDT" signal on line set 1810 from theFIFO interface control 1535 at the S1 inputs.

In regards to the COL/CAR module 1615 having a pair of parallel SLT's , as shown in Figs. 1 and 37B; ENDF' and ERR inputs on line set 1740 are received from the SLR 35 and logically outputted as CAR and COL on line set 1625 to the control logic 1600 when clocked to do so.

As shown in Figs. 1 and 38, C1 and C2 clock signals from bus 485D are operative to logically input to multiple SLT registers for generating T1, T' and T2 clocking signals for use throughout the SLT 40.

IOC control bus decode 1565, having a PLA matrix, as shown in Figs. 1 and 39, is operative to have inputs including NT1 and 2 on bus 485C from the IOCT 42, ACT1-7 on bus 485F from the IOCT 42, DBS on bus 400 from the IOCT 42, and SYSTSTSYNC on bus 455B from the IOCT 42 for outputting as LDMR' and RSTMR' signals on line set 1835 to the MR moduel 1555, SETON' and CLRON' signals on line set 1840 to the SLTRRST module 1570, SETRST' and CLRRST' signals on line set 1845 to the On module 1575.

In regards to the first PLA and PLA-A 1455A of the SLR control logic 1490, as shown generally in Figs. 2 and 41A, and specifically in Fig. 41B, it is operative to receive inputs including an ON signal on line set 1850 from the ON module 1515, MP' signal on line set 1855 from the TGR register 1445A, IBF' signal on line set 1860 from the FIFO Interface control 1495, bRC3 signal on line set 1865 from the Bit Ring Counter 1870, S0's S1', S2' signals on line set 1875 from the SASBSTF register 1880 of control logic 1490, BYCO-2 signal on line set 1885 from the Byte Counter 1590, AM' signal on line set 1890 from the AR (1470), CRCQ signal on line set 1895 from the CRC Checker (1475), SFEN signal on line set 1900 from the Data Synchronized (1440), COL and CAR signals on line set 1905 from the phase decoder 1435, for generating outputs inlcuding SS'-2' , SETCOLF, SETDLF', SETCRCF' signals on line set 1910 to the SASBSTF 1880, of contrl logic 1490 SR31B', signal on line set 1915 to the IB (1445), SETIBF' signal on line set 1920 to the FIFO interface control (1495), INCBYC' signal on line set 1925 to the Byte Counter (1590), VSTGR' and ENDTGR' and VDTGR' signals on line set 1930 to the TGR register (1445A) CORST' signal on line set 1935 to the Bit Ring Counter (1870), and CRC CHECKER (1475), SR1AR' signal on line set 1940 to the AR (1470).

The second PLA and PLA-B 1455B of the SLR control logic 1490, as shown generally in Fig. 2 and 41A, and specifically in Fig. 41C, is operative to receive inputs including an IBF' signal on line set 1860 from the FIFO Interface Control 1495, MP' signal on line set 1855 from the TGR register 1445A, SBO'-1", CRCF, DLF and COLF signals on line set from the SASBSTF 1880 of the control logic 1490, for generating outputs including CRCIB', COLIB' and DLIB' signals on line set 1915 to the IB (1445), SSBO'-1' signals on lineset 1910 from the SASBSTF 1880 of the control logic for generating outputs including CRCIB', COLIB', and DLIB' signals on line set 1915 to the IB (1445) SSBO'-1' signals online set 1910 from the SASBSTF 1880 of the control logic 1490, RSTMP' signal on line set 1930 to the TGR 1445A and line set 1915 to the IB 1445, STTGR' signal on line set 1930 to the TGR1445A, line set 1915 to the IB1445, line set 1910 to the SASBSTF 1880, and line set 1920 to the FIFO interface control logic 1495.

In regards to the SASBSTR register module 1880 in the SLR control logic 1490 is operative to have SA (1950) and SB (1955) and STF (1960) modules. SA module (1950) having multiple SLT registers is operative to have SSO'-2 D1 inputs on line set 1910 from the first PLA 1455A for outputting as SO'-2' single on line set 1875 to the S and PLA 1455B. SB module (1955) having multiple SLT's is operative to D1 input from SSBO'-1' signals on line set 1910 from second PLA 1455B for _outputting as SBO'-1' signals on line set 1945 also to second PLA 1455B. The STF module having multiple connected SLT's is operative to input at S1 SETDLF", SETCRCF' and SETCOLF' signals on line set 1910 from the first PLA 1455A and input at S2 a STGR' signal on line set 1910 from the second PLA 1455B for outputting as COLF, CRCF, and DLF signals on line set 1945 to the second PLA 1455B.

In regards to the Address Recognition (AR) register 1470, as shown in Figs. 2 and 42, multiple parallel SLT's are operative to logically input at S1, SR1, AR' signals on line set 1940 from the control logic 1490, logically input at S2 MRST1 signal on line set 1965 from the CRC On-chal 1475, logically input at D1 SR1Q0-7 signals on line set 1970 from SR1 (1430-1), for generating at the Q/Q' outputs AR0-7 signals on line set 1975 to the logical network of the computer module 1485. The identification register (IDR) having multiple parallel SLT's is operative to input at D1 DB0-7 signals on line set 400 from IOCR 37, S1 and S2 logical inputs from the LDID' and RSTMR' signals on line set 1980 from the IOC control bus decode 1510 for generating at the Q/Q' output IDO7 signals on line set 1985 to the compare register 1485. The compare register is operative to logically NOR input the AR0-7 signals on line set 1970 from the AR 1470, the ID0-7 signals on line set 1985 from the IDR 1480, and the PM signal on line set 1990 from the MR 1500 for generating an AM' signal on line set 1890 to the control logic 1490.

In regards to the Bit Ring Counter 1870 having multiple serially connected SLT registers including logical inputs at it's 53 terminals from the MRST 1 signal on line set 1965 from CRC CHECKER 1475, logical inputs at it s S1 terminal from the CORST' signal on line set 1935 from control logic 1490 and SFEN' signal on line set 1900 from the data synchronized 1440, logical inputs at it s 52 terminal from SFEN' signal on line set 1900 from the data sync 1440 for generating a BRC3 output signal on line set 1865 to the control logic 1490.

In regards to the Byte Counter 1590, as shown in Figs. 2 and 44, having multiple serially connected SLT's including a S1 logic input operative to receive an INCBYC' signal on line 1925 from the control logic 1490 and a S2 logic input operative to receive a MRST1 signal on line 1965 from the CRC CHECKER 1475 for generating from the Q output a BYC0-2 signal on line set 1885 to the control logic 1490.

In regards to the CRC CHECKER 1475, as shown in Figs. 2 and 45, having multiple serially connected SLT's including S1 logic inputs from a SFT' signal on lineset 2000 from the data sync 1440, S2 logic inputs from the MRST 1 signal on line set 1965 derived logically from the COAST' signal on line set 1935 from the ocntrol logic 1490, D1 logic input from a SRD signal on line 1995 from the data sync 1440 for logically outputting a CRCO signal on line 1895 to the control logic 1490.

In regards to decoded data synchronized on data sync 1440, as shown Fig. 2 and 46, having a connected decoding NETWORK , inputs including an OUT1', TDDY', OUT0', CAR signals on line set 2010 from the phase decoded 1435 and for generating the out signal STROBE on line set 2015 to phase decoder 1435, SFX' signal on line set 2000 to the CRC CHECKER 1475, SFEN' on line set 1900 to the control logic 1490 and the bit ring counter 1870, SRD on line set 1995 to the CRC counter 1475 and the SR1 (1430-1).

In regards to the FIFO Interface control 1495, as shown in Figs. 2 and 47, having connected multiple SLT's including logic inputs of STTGR' and SETIBF' on line set 1920 from the control logic 1490 to the S1 input of SKT 2020-1, logic input of FIFOF on line set 460C from the IOCR37 to the S1 input of SLT 2020-3 and 2020-2. The logic output of SLT2020-2 is generated as the FIFOWR signal on line set 460C to the IOCR 37. The logic output of SLT2020-1 is generated as the IBF' signal on line set 1860 to the Control Logic 1490.

In regards to the Input Buffer (IB) 1445, as shown in Fig. 2 and 48, having multiple serially connected SLT's including a S1 logic input by a SR31B' signal on line set 1815 from the control logic 1490, a S2 logic input by a STTGR' signal on line set 1930 from the control logic 1490, a S3 logic input by a RSTMP' signal on line set 1930 from the control logic 1490, P3 input at ground, D2 logic input for the three least significant bit SLT's are CRC'B', COLIB', and DLIB' signals on line set 1915 from the control logic 1490 respectively, D1, logic input by SR3QO-7 signals on line set 2025 from the SR3 (1430-3) for outputting FWDO-7 signals on line set 400 to the IOCR 37.

In regards to the TGR register 1445, which is functionally part of the IB 1445, as shown in Figs. 2 and 49, including D2 and D2 logic inputs for the pair of SLT TAG register 2030-1 and 2 from the VSTGR, VDTGR', ENDTGR' and STTGR' signals on line set 1930, the S1 logic input is derived from the ENDTGR' and RSTMP' signals on line set 1930 from logic control 1490 from where the MP' signal on line set 1855 to control logic 1450 is also derived. The output of the register 2030-1 and 2 at the Q outputs being used to generate the FWDTAG 1 and 2 signals on line set 400 to the IOCR 37.

In regards to the phase decoder 1435, as shown in Figs. 50A - E, a signal from the shared line 70 may pass through a transceiver 90 onto a input line 65 to the phase decoder 1435 of the SLR35 and specifically to a hold buffer 2035 in the phase decoder 1435 as shown in Figs. 50A-B having multiple parallel RS Flip-Flops which is operative to clock in signals from the input line 65 for holding in a buffer until output sampled on line set 2040 to decode logic for errors 2045 and decode logic for data 2050A-B. The Decode Logic for Error 2045 is operative to receive predetermined combinations of signals from line set 2040 for and logic determinations of error conditions for outputting through SLT's as a COL signal on line set 1905 to the control logic 1490 upon receipt of a central input CAR signal on line set 1905 from the decode logic for data 2050-A. The Decode Logic for Data 2050A is operative to receive predetermined combinations of signals from line set 2040 by and logic for SLT clocking as a TDDY' output signal on line set 2010 to the Data Sync 1440 and the Decode Logic for errors 2045. The TDDY' signal on line set 2010 in turn is input along with STROBE and STROBEP signals on line set 2015 through SLT and Logic for outputtingas a CAR signal on line set 1905 to control logic H90, Data Sync 1440 and the Decode Logic for Error 2045. In addition, the line set 2040 from the holding Buffer 2035 is operative to input as predetermined and combinations along with HBC and HBC' signals on line set 2055 for logic outputting through SLT's as OUT 1' and 2' signal on line set 2010 to the Data Sync 1440, ENDF' signal on line set 1580 to the SLT 40, and ENDL signal on line set 2060 to the other Decode Logic for Data 2050-B, ENDF signal on line set 2065, to the Decode Logic for Errors 2045. The second Decode Logic for Data 2050B is operative to receive logic combinational inputs on line set 2040 from the holding buffer 2035 along with a input EMDL signal on line set 2060 from the Decode Logic for Data 2050A having SLT logic operative to output as HBC and HBC' signals on line 2055 to the first Data Decode Logic for Data 2060 and the HBC' signal on line set 2055 to hold buffer 2085, and in addition the HBDY signal is output on line set 2070 to the hold buffer 2035.

In regards to the SR1 or shift register 1430-1 as shown in Figs. 2 and 52, having multiple serially connected SLT's with parallel outputs including S1 inputs from SF signal on line set 2005 from the CRC Checker (1475), 2 inputs from MRST1 signals on line set 1965 also from the CRC Checker (1475), D1 inputs from S SRD signal on line set 1995 from the Data Sync (1440), D2 inputs from ground for generating at terminal Q an output signals SR1QO-7 on line set 1970 to the SR2 (1430-2) and the AR (1470).

In regards to the SR 2 or shift registers (1430-2), as shown in Figs. 2 and 52, having multiple serially connected SLT's with a serial output including S1 inputs from SFX signals on line set 2005 from the CRC Checker (1475), S2 inputs from MRST 1 signals on line set 1965 also from the CRC checker (1475), D1 input from the SR2Q-7 signal on line set 1970 from the SR1 (1430-1), D2 inputs from ground for generating at terminal Q an output signal SR2Q7 on line set 2070 to SR3 (14303).

In regards to the SR3 or shift register (1430-3), as shown in Figs. 2 and 52, having multiple serially connected SLT's with parallel outputs, including S1 inputs from SFX signals on line set 2005 from the CRC Checker (1475), S2 inputs from MRST1 signals on line set 1965 also from the CRC Checker (1475), D2 inputs from ground for generating at terminal Q in output signal SR2Q1-7 on line set 2025 to IB (1445).

In regards to the timing generator 1505, as shown in Figs. 2 and 53, having serially connected SLT's is operative to logical inputs from the SYSRSTSYNC signal on bus 485B, Q2 and Q1 on bus 485D, SLUIN on bus 485 all from IOCR37, and in HS on line set 2075 for generating logical outputs in T1' signal, and SCLU'/SCLU signal on line set 2080. The time signal outputs through the SLR35 where they are used as inputs, will be indicated by their mnemonic only and not their reformed numbers. It will also be appreciated that the FIFOR signal or bus 460A to the IOCR 37 is grounded as shown in Fig. 2

In regards to the IOC control bus decode 1510, as shown in Figs. 2 and 54, having a predetermined PLA array, including inputs DB5 signal on line set 400, ACT 4-7 signals on line set 485F, NT4-2 on line set 485C and SYSRSTSYNC on line set 485B all from the IOCR 37 for generating outputs including a LDMR signal on line set 2085 and the RSTMR' signal on line set 1980 both to the MR1500, SETRST' signal and CLRRST' signal on line set 2090 to the SLRTRST module 1510, SETON' signal and CLRON' signal on line S-2095 to the On module 1515, and a LDID' signal on line set 1980 to the IDR (1480).

In regards to the ON module (1515), as shown in Figs. 2 and 55A, having serially connected multiple SLT's including logic inputs at S1 and S2 from the SETON' signal and CLRON signal respectively on line set 2095 from the IOCR central bus decode 1510 for outputting as an On signal on line set 1850 to the first PLA (1490).

In regards to the SLRTRST module (1510), as shown in Figs. 2 and 55B, having a SLT register, including logic inputs at S1 and 2 from the SETRST" and CLRRST' signals respectively on line set 2090 from the IOC control bus decode (1510) and a SYSRSTSYNC signal on bus 485B from the IOCR 37 for logic outputting as a SLTRRST signal on line set 2100. It will be appreciated that the common usage of this signal throught the SLR 35 precludes reference number labeling, but rather only mnemonic labeling.

In regards to the MR Module (1500), as shown in Figs. 2 and 552, having a pair of parallel  connected SLT's including logic inputs LDMR' signal on line set 2085 and RSTMR' signal on line set 1980 both from  the timing generator (1505) and a PM signal on line set 1990 to the AR (1470).

Claims:

1. A shared line transmitter operative to accept as a message one or more bytes of data in parallel from an input-output channel for predetermined buffering and phase encoding for transmission to a shared line except upon receipt of a 'message-collision' signal indicating that another transmitter is attempting to gain access to the shared line, comprising:

a) an output buffer operative when empty to receive one or more bytes of data of the message from the input-output channel for holding for a predetermined period;

b) storage means operative to receive the message from said output buffer to hold it for a predetermined period for subsequent transmission in serial form;

c) a phase encoder operative to receive the data in serial form from said storage means for conversion to a predetermined phase-encoded form for transmission to the shared line, and for aborting the conversion upon receipt of the message-collision signal for generating a signal indicative thereof and for injecting a signal into the shared line to indicate such abortion to all other transmitters on the line, and

d) backoff logic means operative to receive the abortion signal from said phase encoder to generate a random number representing a time period that must elapse before the transmitter next attempts to gain access.

2. The shared line transmitter of claim 1 wherein said backoff logic means comprises:

a) a free-running counter operative to be triggered by receipt of each message-collision signal for counting down to a predetermined number for measuring out the said time period.

0051960

3.      The shared line transmitter of claim 2 wherein said back-off logic means further includes a counter for counting the number of such message-collision signals, up to a predetermined number, and means, initiated when the predetermined number is reached, for generating a disarming signal to said counter means, thereby extending the time period indefinitely.

4.      The shared line transmitter of any preceding claim, further including second storage means operative to receive a second set of data from said output buffer and hold it for a predetermined period, to act as a back up buffer when said storage means is concurrently full, for subsequent transmission thereto.

5.      The shared line transmitter of claim 4, further including a second back-up buffer for use when the second storage means is full.

6.      The shared line transmitter of any preceding claim, further including a cyclic redundancy check generator operative to receive the message from said storage means to process it according to a predetermined polynomial, and to append the result as one or more bytes to the last byte of data of the message.

7.      The shared line transmitter of any preceding claim, wherein said output buffer and/or back-up buffer includes a predetermined set of parallel-connected shift registers.

8.      The shared line transmitter of any preceding claim, wherein said storage means includes a predetermined set of serially-connected shift registers.

9.      The shared line transmitter of any preceding claim, wherein said phase encoder includes a predetermined set of serially-connected shift registers.

10.      The shared line transmitter of claim 6, wherein said cyclic redundancy check generator includes a predetermined set of serially-connected shift registers.

11.     The shared line transmitter of claim 2, wherein said free-running counter includes a predetermined set of parallel- connected shift registers.

12.     The shared line transmitter of claim 3, wherein said collision counter includes a predetermined set of parallel-connected shift registers.

FIG. 1A

1/70

0051960

FIG. 1B

FIG. 2A

TO & FROM FIG. 2A

FIG. 2B

FIG. 3

0051960

FIG. 4

FIG. 5

FIG. 6

FIG. 7

| 7 | 6 | 5 | 4 | 3 | 2 | 1 | 0 | 1 | 0 | |
|---|---|---|---|---|---|---|---|---|---|---|
| INPUT BUFFER | | | | | | | | TAG REQ. | | SLR |

| 7 | 6 | 5 | 4 | 3 | 2 | 1 | 0 | | |
|---|---|---|---|---|---|---|---|---|---|
| VE | UE | 0 | 0 | ME | CRC | COL | DL | ST | |
| DATA (LAST BYTE) | | | | | | | | E | |
| DATA | | | | | | | | VD | |
| DATA | | | | | | | | VD | |
| DATA | | | | | | | | VD | |
| SOURCE ADDRESS | | | | | | | | VD | |
| DESTINATION ADDRESS | | | | | | | | VS | |
| DATA | | | | | | | | ST | |

FIFO BUFFER

| 0 | 0 | STATUS BYTE |
|---|---|---|
| 0 | 1 | VALID START |
| 1 | 0 | END |
| 1 | 1 | VALID DATA |

*FIG. 8*

0051960

FIG. 9

| 7 | 6 | 5 | 4 | 3 | 2 | 1 | 0 | 1 | 0 | |
|---|---|---|---|---|---|---|---|---|---|---|
| OUTPUT BUFFER | | | | | | | | TAG. REQ. | | SLT ↑ FIFO BUFFER |

| | | |
|---|---|---|
| DESTINATION ADDRESS | | VS |
| SOURCE ADDRESS | | VD |
| TYPE | | VD |
| DATA | | VD |
| | | |
| DATA | | VD |
| DATA | | VD |
| DATA (LAST BYTE) | | VE |

*FIG. 10*

| | | |
|---|---|---|
| 0 | 0 | NULL |
| 0 | 1 | VALID START |
| 1 | 0 | VALID END |
| 1 | 1 | VALID DATA |

| 7 | 6 | 5 | 4 | 3 | 2 | 1 | 0 |
|---|---|---|---|---|---|---|---|
| DESTINATION ADDRESS | | | | | | | |
| SOURCE ADDRESS | | | | | | | |
| START OF MESSAGE BODY | | | | | | | |
| | | | | | | | |
| END OF MESSAGE BODY | | | | | | | |

*FIG. 11*

| COMMAND CODE | IOCR/SLR | IOCT/SLT |
|---|---|---|
| 0 0 0 0 | RECEIVE MESSAGE | |
| 0 0 0 1 | | |
| 0 0 1 0 | | |
| 0 0 1 1 | READ FIFO | READ FIFO |
| 0 1 0 0 | | TRANSMIT SEGMENTED MESSAGE |
| 0 1 0 1 | | TRANSMIT MESSAGE |
| 0 1 1 0 | | |
| 0 1 1 1 | WRITE FIFO | WRITE FIFO |
| 1 0 0 0 | | |
| 1 0 0 1 | | |
| 1 0 1 0 | | |
| 1 0 1 1 | | |
| 1 1 0 0 | LOAD ID REGISTER | |
| 1 1 0 1 | | |
| 1 1 1 0 | LOAD MODE | LOAD MODE |
| 1 1 1 1 | NO OPERATION | NO OPERATION |

*FIG. 12*

CONTROL FLAGS

| 3 | 2 | 1 | 0 | |
|---|---|---|---|---|
| AUTO/SKIP | CHAIN | IO INT. | INDIRECT | |
| X | X | X | 1 | UNAFFECTED |
| 0 | 0 | X | 0 | TURNED OFF –NOT CHAINED |
| 0 | 1 | X | 0 | |
| 1 | 0 | X | 0 | TURNED OFF AT TERMINATION OF CHAIN |
| 1 | 1 | X | 0 | |

*FIG. 14*

IOC STATUS

| 7 | 6 | 5 | 4 | 3 | 2 | 1 | 0 |
|---|---|---|---|---|---|---|---|
| | | | | DEVICE | STATUS | | |

| 1 | 0 | 0 | 0 | END, VALID END |
| 1 | 1 | 0 | 0 | END, UNUSUAL END WITH DEVICE ERROR |
| 1 | 1 | 0 | 1 | END, UNUSUAL END WITH ILLEGAL COMMAND |
| 1 | 1 | 1 | 0 | END, UNUSUAL END WITH IOC DETECTED ERROR |
| 1 | 1 | 1 | 1 | END, UNUSUAL END WITH HIO ISSUED |

SLR STATUS

| 7 | 6 | 5 | 4 | 3 | 2 | 1 | 0 |
|---|---|---|---|---|---|---|---|
| IOC STATUS | | | | | | | |

MESSAGE END
CRC ERROR
COLLISION
DATA LATE

SLT STATUS

| 7 | 6 | 5 | 4 | 3 | 2 | 1 | 0 |
|---|---|---|---|---|---|---|---|
| IOC STATUS | | | | | | | |

MESSAGE END
MESSAGE ABORT
RETRY ABORT
DATA LATE

FIG. 13

HARDWARE                          SOFTWARE (MEMORY IMAGE)

IOC REGISTERS

X'8'   INT./INT./COND./OP         X'100'    1110 0000$_2$
       MASK/REQ./CODE/CODE        X'101'    X'00'
X'9'   CBA HIGH = x'01'           X'102'    X'02'
X'A'   X'00'                      X'103'    COUNT = 1
X'B'   X'00'                      X'104'    STATUS = 0

                                  X'200'    00000000$_2$*


* A 00000001$_2$  WILL DISABLE THE HARDWARE BACKOFF FEATURE.

8080/8085 CODE

```
     IN    X'8'              EXECUTE TIO
     ANI   X'0C'             EXTRACT CONDITION CODES
     JNZ   N/A               JUMP IF CONTROLLER NOT AVAILABLE
     MVIA, X'01'
     OUT   X'9'              LOAD MIDDLE PART OF CBA
     MVIA  X'0'              LOAD LEAST SIGNIFICANT PART OF CBA
     OUT   X'A'
     OUT   X'B'              LOAD MOST SIGNIFICANT PART OF CBA
     MVIA  X'0C'
     OUT   X'8'              INITIATE SIO
```

FIG. 15

```
HARDWARE                        SOFTWARE (MEMORY IMAGE)

IOC REGISTERS

X'8'   INT./INT./COND./OP       X'100'     0100  0000₂
       MASK/REQ./CODE/CODE      X'101'     X'00'
X'9'   CBA X'01'                X'102'     X'02'
X'A'   X'00'                    X'103'     COUNT = 4
X'B'   X'00'                    X'104'     STATUS = 0

                                X'200'     X'02'
                                X'201'     X'01'
                                X'202'     DATA (MSG. BODY)
                                X'203'     DATA (MSG. BODY)


8080/8085 CODE

       IN    X'8'               EXECUTE TIO
       ANI   X'0C'              EXTRACT CONDITION CODES
       JNZ   N/A                JUMP IF CONTROLLER NOT AVAILABLE
       MVIA, X'01'
       OUT   X'9'               LOAD MIDDLE PART OF CBA
       MVIA  X'0'               LOAD LEAST SIGNIFICANT PART OF CBA
       OUT   X'A'
       OUT   X'B'               LOAD MOST SIGNIFICANT PART OF CBA
       MVIA  X'0C'
       OUT   X'8'               INITIATE SIO
```

*FIG. 16A*

```
8080/8085 INTERRUPT ROUTINE

    ⎯
    ⎯

    MVIA,   X'E0'
    OUT     X'8'            EXECUTE AIO, ACKNOWLEDGE INTERRUPT
    LDA     X'104'          READ STATUS
    RLC                     TEST STATUS FOR END
    JNC     NOEND           JUMP IF NO END
    RLC                     TEST STATUS FOR UNUSUAL END
    JNC     GOOD            JUMP IF VALID END
    LDA     X'104'          UNUSUAL END
    ANI     X'30'           TEST IOC STATUS
    CPI     X'20'
    JZ      IOCERR          IOC DETECTED ERROR
    JNC     CMNDERR         ILLEGAL COMMAND
    CPI     X'0'            TEST HIO ERROR
    JNZ     HIOERR
    LDA     X'104'          TEST DEVICE STATUS
    ANI     X'0F'
    CPI     X'01'
    JZ      RETRY           DATA LATE, RETRY
    CPI     X'02'
    JZ      RETRY           RETRY ABORT
    MVIA,   X'0F'
    OUT     X'8'            EXECUTE RIO (MSG. ABORT ERROR)
```

*FIG. 16B*

```
SOFTWARE (MEMORY IMAGE)

    X'100'              0000 0010₂
    X'101'              X'00'
    X'102'              X'02'
    X'103'              COUNT = 0
    X'104'              STATUS = 0

    X'200'              00000000₂
    X'201'              00000000₂
    X'202'              00000000₂
```

*FIG. 17*

SOFTWARE (MEMORY IMAGE)

| | |
|---|---|
| X'100' | $01010110_2$ |
| X'101' | X'00' |
| X'102' | X'02' |
| X'103' | COUNT = 0 |
| X'104' | STATUS = 0 |
| X'105' | $01000010_2$ |
| X'106' | X'00' |
| X'107' | X'03' |
| X'108' | COUNT = 0 |
| X'109' | STATUS = 0 |
| | |
| X'200' | DEST. ADDRESS |
| X'201' | SOURCE ADDRESS |
| X'202' | START OF MESSAGE |
| – | |
| – | |
| – | |
| X'3FF' | END OF MESSAGE |

*FIG. 18*

SOFTWARE (MEMORY IMAGE OF CCB)

| | |
|---|---|
| X'100' | $00001110_2$ |
| X'101' | X'00' |
| X'102' | X'02' |
| X'103' | COUNT = 0 |
| X'104' | STATUS=0 |
| X'105' | $00001110_2$ |
| X'106' | COUNT = 0 |
| X'107' | STATUS = 0 |
| X'108' | $00001010_2$ |
| X'109' | COUNT = 0 |
| X'10A' | STATUS=0 |
| X'10B' | $11110001_2$ |
| X'10C' | X'00' |
| X'10D' | X'01' |
| X'10E' | COUNT = 0 |
| X'10F' | STATUS = 0 |

*FIG. 19*

SOFTWARE (MEMORY IMAGE OF CCB)

| | | |
|---|---|---|
| X'100' | $01000110_2$ | TRANSMIT SEGMENTED MSG., NORMAL CHAIN |
| X'101' | X'00' | |
| X'102' | X'02' | |
| X'103' | COUNT=0 | |
| X'104' | STATUS = 0 | |
| X'105' | $01010010_2$ | |
| X'106' | X'00' | |
| X'107' | X'03' | |
| X'108' | COUNT=X'64' | |
| X'109' | STATUS = 0 | |

*FIG. 20*

SOFTWARE (MEMORY IMAGE OF CCB)

| | | |
|---|---|---|
| X'100' | $01001110_2$ | TRANSMIT SEGMENTED MSG., AUTO-CHAINED |
| X'101' | X'00' | |
| X'102' | X'02' | |
| X'103' | COUNT = 0 | |
| X'104' | STATUS = 0 | |
| X'105' | $01011010_2$ | TRANSMIT MSG., NO CHAIN |
| X'106' | COUNT = X'64' | |
| X'107' | STATUS = 0 | |

*FIG. 21*

SOFTWARE (MEMORY IMAGE OF CCB)

| | | |
|---|---|---|
| X'100' | $01110010_2$ | WRITE FIFO |
| X'101' | X'00' | |
| X'102' | X'02' | |
| X'103' | COUNT = 16 | |
| X'104' | STATUS = 0 | |
| X'105' | $00110010_2$ | READ FIFO |
| X'106' | X'00' | |
| X'107' | X'03' | |
| X'108' | COUNT = 16 | |
| X'109' | STATUS = 0 | |

*FIG. 22*

SLT CONTROL LOGIC 1600

FIG. 23

FIG. 23A

TO & FROM FIGURE 23B

SS0'    (25)~1675
INCCC'  (17)~1715
SS1'    (25)~1675
DISB0'  (18)~1715
SS2'    (25)~1675
ENB0'   (18)~1715
SS3'    (25)~1675
RSTBRC' (14)~1730

19/70

0051960

FIG. 23B

TO & FROM FIGURE 23A

TO & FROM FIGURE 23C

1670 (28B) ON
1625 (27) COL / COL'
1665 (28B) BOD / BOD'
1620 (25) S3' / S3 / (25) S2' / S2 / (25) S1' / S1
1625 (27) CAR / CAR'
1620 (25) SO' / SO
1530 (27) TGRVS' / TGRVS

20/70

0051960

FIG.23C

TO & FROM FIGURE 23B

TO & FROM FIGURE 23D

21/70

0051960

RSTOBF' (20)—1705
LDR2' (24)—1695
LDR1' (23,24)
SETMC' (23)—1685
DLSTR' (23)
RASTR' (23) 1682
MASTR' (23) 1725
RSTBYC' (15) 1680
ENPE' (22,26) 1700
LR2SR' (26)
INCBYC' (15) 1725
RSTCRC' (19) 1710
CORST' (17,26) 1715
LOBSR' (26) 1700
DISPE' (22)
SETJL' (22) 1680
CRCEN' (22)

*FIG. 23D*

22/70

0051960

*FIG. 24*

FIG.25

FIG. 26

BACU—OFF ALGORITHM LOGIC

FIG. 26A

FIG. 27

0051960

28/70

FIG. 28A

TO & FROM FIGURE 28 B

FIG. 28B

TO & FROM FIGURE 28A

BOTO(25)
1650
PP

CDCEN

+5V

(16) CDCLK
02
T1
1775

(13) DISBO
T1
02
1775

02
T1
(13) ENBO
1715

(22) SLTRRST
02
1725

02
T1

FIG. 29

FIG. 30

FIG. 31

FIG. 32

*FIG. 33A*

FIG. 33B

FIG. 34

FIG. 35

FIG. 36

*FIG. 37A*

*FIG. 37B*

0051960

FIG. 38

FIG. 39

FIG. 40A

FIG. 40B

FIG. 40C

SLR CONTROL LOGIC 1490

FIG. 41A

FIG. 41B-1

44/70

0051960

TO & FROM FIG. 41B-2

1885 —(46) BYC1
1875 —(57) SO'
1885 —(46) BYCO
1890 —(44) AM'
1895 —(47) CRC
1900 —(48) SFEN'
1905 —(53) COL
1905 —(54) CAR

← 1455A

pp-SETIBF' (49) 1920
pp-INCBYC' (46) 1925
pp-VSTGR' (51) 1930
pp-CORST' (45,47) 1935
pp-VDTGR' (51) 1930
pp-SR1AR' (44) 1940
pp-ENDTGR' (51) 1930

FIG. 41B-2

45/70

0051960

FIG. 41C

FIG. 42A

FIG. 42B

0051960

FIG. 43

FIG. 44

0051960

FIG. 45

0051960

FIG. 46A

TO & FROM FIG. 46B

FIG. 46B

TO & FROM FIG. 46A

FIG. 47

FIG. 48A

FIG. 48B

FIG. 49

FIG. 50A

0051960

FIG. 50B

FIG. 50C-1

FIG. 50C-2

FIG. 50D-1

62/70

0051960

FIG. 50D-2

TO & FROM FIG. 50D-1

FIG. 50E

FIG. 57

65/70

0051960

FIG. 51B

FIG 52

67/70

0051960

FIG. 53

485D

$\overline{02}$

1505

485D

01

S1   T

D   Q

D2   S2   $\overline{Q}$

01

S1   T   0

D2   S2   $\overline{Q}$

PP

$\overline{T1}$ (ALL)

2080

$\overline{02}$

(IOC)SYSRSTSYNC

485B

(IOC)CLKIN   485D

(59B) HS

$\overline{02}$

2075   485D

PP   SCLK(56,55,54,53,52,48)

PP   SCLK(56,55,54,53,52,48)

FIG. 54

FIG. 55A

FIG. 55B

FIG. 55C

| Category | Citation of document with indication, where appropriate, of relevant passages | Relevant to claim | CLASSIFICATION OF THE APPLICATION (Int. Cl. 3) |
|---|---|---|---|
| Y | <u>US - A - 4 063 220</u> (XEROX)<br><br>* column 3, lines 20-60; column 4, lines 26-31, 43-59; column 5, line 66 to column 6, line 15; column 8, lines 19-37; column 9, lines 7-29; column 10, line 31 to column 11, line 9; column 11, line 58 to column 12, line 51; column 15, line 11 :to column 16, line 19; figures 2,3,6 *<br><br>-- | 1,2,3, 7,8,9 | G 06 F 3/04<br>H 04 L 11/16 |
| Y | IEEE COMPUTER SOCIETY INTERNATIO-NAL CONFERENCE PROCEEDINGS COMPUTER COMMUNICATIONS NETWORKS 5-8th September 1978 NEW YORK (US) R.J. CARPENTER et al. "A micro-processor - based local network node", pages 104 to 109<br><br>* page 106, right-hand column, lines 21-24, 47-51; page 108, left-hand column, line 30 to right-hand column, line 21; figure 3 *<br><br>-- | 1-6 | **TECHNICAL FIELDS SEARCHED (Int.Cl. 3)**<br><br>G 06 F 3/04<br>H 04 L 11/16 |
| A | IEEE COMPUTER SOCIETY INTERNATIO-NAL CONFERENCE PROCEEDINGS DISTRI-BUTED COMPUTING, 23-25th September 1980 NEW YORK (US) S.A. KAHN et al. "Functional and logical description of a new fiber-optic contention bus network" pages 268-272<br><br>* page 269, right-hand column, lines 6-24; page 270, left-hand column, line 35 to right-<br>./. | 1,3,6 | **CATEGORY OF CITED DOCUMENTS**<br><br>X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons<br><br>&: member of the same patent family, corresponding document |

| | | Examiner |
|---|---|---|
| X The present search report has been drawn up for all claims | | |
| Place of search<br>The Hague | Date of completion of the search<br>17-02-1982 | Examiner<br>DAVIES |

EPO Form 1503.1 06.78

0051960

Application number

EP 81 30 5108

-2-

**European Patent Office**

## EUROPEAN SEARCH REPORT

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | hand column, line 3; page 271, left-hand column, lines 8-15, 26-34 * <br><br> -- | | |
| A | IBM TECHNICAL DISCLOSURE BULLETIN, volume 23, no. 2, July 1980, NEW YORK (US) D.F. BANTZ et al. "Decentralized bus architecture with collision retry", pages 858 to 861 <br><br> * page 860, lines 7-43 * <br><br> -- | 1,2,3 | TECHNICAL FIELDS SEARCHED (Int. Cl.³) |
| A | IBM TECHNICAL DISCLOSURE BULLETIN, volume 21, no. 3, August 1978, NEW YORK (US) V. RUDOLPH et al. "Cyclic error correction code for parallel data processing", pages 1087-1090 <br><br> * page 1087, line 5 to line 10 * | 10 | |

EPO Form 1503.2  06 78